# EUROPEAN PATENT SPECIFICATION

(11) **EP 2 875 076 B1**
(45) Date of publication and mention of the grant of the patent: **15.08.2018**
(21) Application number: 13730178.4
(22) Date of filing: 13.06.2013
(51) Int. Cl.: C09B 62/44, C09B 62/533

(54) **REACTIVE DYES, PROCESS FOR THE PRODUCTION THEREOF AND THEIR USE**
REAKTIVFARBSTOFFE, VERFAHREN ZU DEREN HERSTELLUNG UND DEREN VERWENDUNG
COLORANTS RÉACTIFS, PROCÉDÉ DE PRODUCTION ET UTILISATION DE CEUX-CI

(30) Priority: 18.06.2012 EP 12004552
(43) Date of publication of application: 27.05.2015
(73) Proprietor: DyStar Colours Distribution GmbH, 65479 Raunheim (DE)
(72) Inventor: BARBIERU, Roxana, Lynnsville, Singapore 117468 (SG); SIVAMURUGAN, Vajiravelu, Ambattur Chennai 600 053 Tamil Nadu (IN); YUAN, Han, Jurong West Street 81, Singapore 640847 (SG); KIM, Hyeong Kyu, Bulit Batok East Avenue 4, Singapore 650269 (SG); RAVI, Vedarethinam, Tanjong PAgar Plaza Singapore 081004 (SG)
(86) International application number: PCT/EP2013/062197
(87) International publication number: WO 2013/189813

(56) References cited:
- DE-A1- 2 209 255
- DE-A1- 2 419 763
- DE-A1- 2 739 227
- GB-A- 1 164 329
- JP-A- H06 192 604

## Description

The present invention relates to the technical field of reactive dyestuffs for dyeing and printing of hydroxyl-, amino-, and carboxamido-containing material.
Reactive dyes based on bis- and polyazo moiety containing at least one reactive anchor are known from prior art and can be used as colorants in different applications, see for example: US 6,323,327, WO 99/064520, WO 97/027249, US 5,378,817, US 5,591,834, US 5,342,927, WO 97/025377, US 5,420,257, JP 2002/226,724, WO 03/040239, WO03/033599 and US20030172476.

Non-fibre-reactive acid dyes with an azoic basic structure giving brilliant shades on polyamide fibres with good fastness, esp. to light, are disclosed in DE 24 19 763. In the context of the dyeing and printing of hydroxyl-, amino-, and/or carboxamido-containing material the known dyes have a number of technical disadvantages such as low fixation, moderate wet fastness and light fastness level. Hence, there is a need for developing new reactive dyes of superior technical performance.
Surprisingly, it has now been found that the dyes of the formula (I) as described below show highly advantageous properties over the known dyes. These include superior wet fastness and light fastness, superior ecological profile as well as the possibility to achieve a wide range of darker shades including dark violets, dark browns, dark navy and black shades.
The present invention refers to dyes of the formula (I) and mixtures thereof 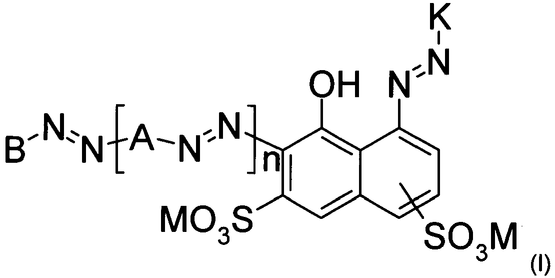 wherein
n is an integer, either 0 or 1;
A is a radical of middle component as described below;
B is a radical of diazo component as described below;
M is hydrogen, sodium, potassium, lithium or ammonium;
K is a coupling component of general formula (K2); 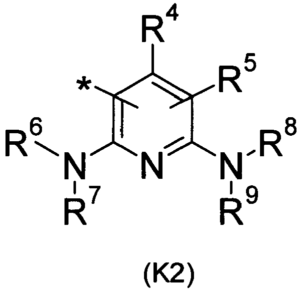 wherein
   R⁴ is hydrogen, alkyl, cycloalkyl, trifluoromethyl; alkoxy, cyano, carbamoyl, alkoxycarbonyl, COOM, amino; hydroxyl, monocycloalkyl-amino; monoalkyl-amino; di(cyclo)alkyl-amino; dialkyl-amino; monoaryl-amino; diaryl-amino; monocycloalkyl monoarylamino; monoalkyl monoaryl amino; alkylthio; arylthio;
      or
      are alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido or phenylureido;
   R⁵ is cyano, carbamoyl, alkoxycarbonyl, trifluoromethyl, carbonyltrifluoromethyl, halogen, sulfomethyl or -SO₃M;
   R⁶ to R⁹, independent from each other, are hydrogen, alkyl, alkenyl, cycloalkyl, trifluoromethyl, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkylsulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N;N-dicycloalkylamino, N-alkyl-N-cycloalkyl-amino, N-aryl-Ncycloalkyl-amino, N-heteroarylamino, N-heterocycloalkylamino or hydroxyakylsulfonylalkyl,
      or
      are alkyl interrupted by one or more heteroatoms such as oxygen or sulfur;
      or
      are alkyl substituted by one or more substituents selected from the group consisting of hydroxy, aryl, cycloalkyl, alkoxy, thioalkoxy, amino, N-monoalkyl-amino, N,N-dialkyl amino, N-monoaryl-amino, N,N-diaryl-amino, N-alkyl-N-aryl-amino, N-monocyclo alkylamino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl sulfamoyl, N,N-diaryl-sulfamoyl, N-monocycloalkyl-N-monoarylsulfamoyl, N-monoalkyl- N-monoarylsulfamoyl or SO₃M;
      or alkyl or aryl substituted by -SO₂X; whereby
   X is vinyl or a radical -CH₂CH₂-Y where Y is a group removable under alkaline conditions such as OSO₂M, SSO₂M, OCOCH₃, OPO₃M or halogen;
      and whereby, in the general formula K2 the point of attachment and R⁵ can be positioned ortho or para to the amino rest bearing the substituents R⁶ and R⁷, meaning that when the point of attachment is positioned ortho to amino rest bearing the substituents R⁶ and R⁷, R⁵ is positioned para to the same, and vice versa.
      whereby
   T is a reactive anchor of general formulae (T1) to (T3); 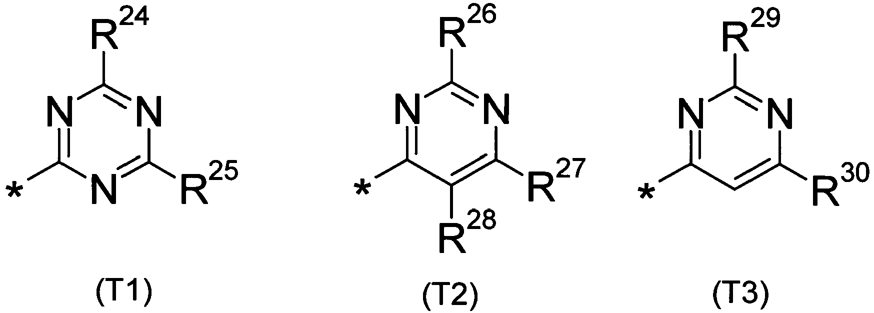 wherein
      R²⁴ and R²⁵, independent from each other are halogen or 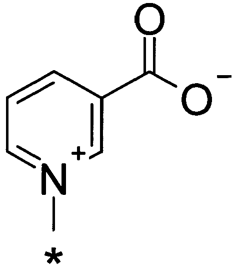
      R²⁶, R²⁷, R²⁸, R²⁹ and R³⁰ independent from each other are halogen;
      or each of R²⁴ to R³⁰, independent from each other are substituted by one of the groups selected from general formulae (1a) to (1c); 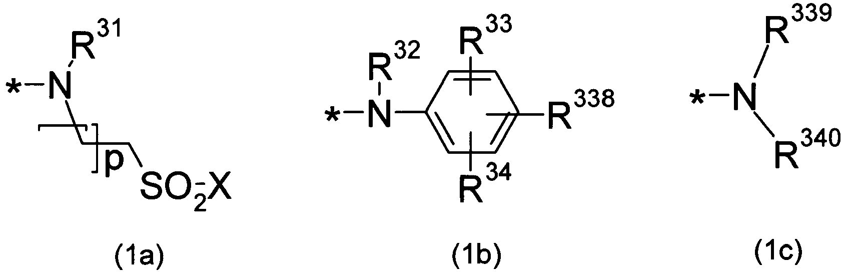 wherein
         R³¹, R³², R³³⁹ and R³⁴⁰, independent from one another, are hydrogen, alkyl, phenyl or phenyl substituted by one of the groups selected from alkyl, alkoxy, halogen, or-SO₃M; alkenyl, cycloalkyl, trifluoromethyl, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkylsulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N,N-dicycloalkylamino, N-alkyl-N-cycloalkyl-amino, N-aryl-N-cycloalkyl-amino, N-heteroarylamino, N-heterocycloalkylamino or hydroxyakylsulfonylalkyl,
            or
            are alkyl interrupted by one or more heteroatoms such as oxygen or sulfur;
            or
            are alkyl substituted by one or more substituents selected from the group consisting of hydroxy, aryl, cycloalkyl, alkoxy, thioalkoxy, amino, N-monoalkyl-amino, N,N-dialkyl amino, N-monoaryl-amino, N,N-diaryl-amino, N-alkyl-N-aryl-amino, N-monocyclo alkylamino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl sulfamoyl, N,N-diaryl-sulfamoyl, N-monocycloalkyl-N-monoarylsulfamoyl, N-monoalkyl- N-monoarylsulfamoyl or SO₃M;
         each of R³³, R³⁴ and R³³⁸, independent from each other, are hydrogen, alkyl, alkoxyl, halogen, trifluoromethyl, cyano, nitro, ester, carbamoyl, SO₃M or-SO₂X;
         where M is hydrogen, sodium, potassium, lithium or ammonium;
         X is vinyl or a radical -CH₂CH₂-Y where Y is a group removable under alkaline conditions such as OSO₃M, SSO₃M, OCOCH₃, OPO₃M or halogen;
         p is an integer from 1 to 5;
         R¹³ and R¹⁵, independent from each other, are hydrogen, alkyl, cycloalkyl, trifluoromethyl; alkoxy, cyano, carbamoyl, alkoxycarbonyl, COOM, amino; hydroxyl, monocycloalkyl-amino; monoalkyl-amino; di(cyclo)alkyl-amino; dialkyl-amino; monoaryl-amino; diaryl-amino; monocycloalkyl monoarylamino; monoalkyl monoaryl amino; alkylthio; arylthio;
            or
            are alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido or phenylureido;
         R¹², R¹⁶ and R²², independent from each other,
            are cyano, carbamoyl, alkoxycarbonyl, trifluoromethyl, carbonyltrifluoromethyl, halogen, methyl sulfonyl or -SO₃M;
         R¹⁴, R¹⁷ to R²⁰ and R²³, independent from each other,
            are hydrogen, alkyl, alkenyl, cycloalkyl, trifluoromethyl, carbonyltrifluoromethyl, halogen, methyl sulfonyl or -SO₃M; aryl, heteroaryl, heterocycloalkyl, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkylsulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N;N-dicycloalkylamino, N-alkyl-N-cycloalkyl-amino, N-aryl-Ncycloalkyl-amino, N-heteroarylamino, N-heterocycloalkylamino or hydroxyakylsulfonylalkyl,
            or
            are alkyl interrupted by one or more heteroatoms such as oxygen or sulfur;
            or
            are alkyl substituted by one or more substituents selected from the group consisting of hydroxy, aryl, cycloalkyl, alkoxy, thioalkoxy, amino, N-monoalkyl-amino, N,N-dialkyl amino, N-monoaryl-amino, N,N-diaryl-amino, N-alkyl-N-aryl-amino, N-monocyclo alkylamino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl sulfamoyl, N,N-diaryl-sulfamoyl, N-monocycloalkyl-N-monoarylsulfamoyl, N-monoalkyl- N-monoarylsulfamoyl or SO₃M;
         R²¹ is hydroxyl or amino group;
            and whereby, in the general formula K5 the point of attachment and R¹⁶ can be positioned ortho or para to the amino rest bearing the substituents R¹⁷ and R¹⁸, meaning that when the point of attachment is positioned ortho to amino rest bearing the substituents R¹⁷ and R¹⁸, R¹⁶ is positioned para to the same, and vice versa,
         A is a phenylene or napthylene middle component and has the general formula (A1) or (A2); 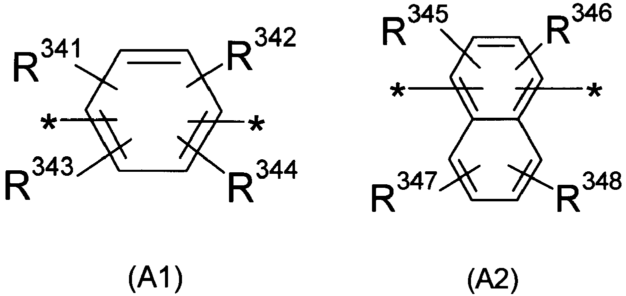 wherein
            R³⁴¹ to R³⁴⁸ independent from one another, are hydrogen, alkyl, alkyl substituted, alkyl chain interrupted by one or two heteroatoms, alkoxy, alkoxy substituted, halogen, trifluoromethyl; cycloalkyl; heterocycloalkyl; cyano; nitro; acyloxy; alkylcarbonyl, acylamino; aryloylamino, cinnamoylamino, alkylsulfonylamino; alkylthio; alkylsulfonyl, alkoxycarbonyl, carbamoyl, sulfamoyl, ureido, alkylureido, SO₃M, COOM or a group of formulae (2a) to (2c) 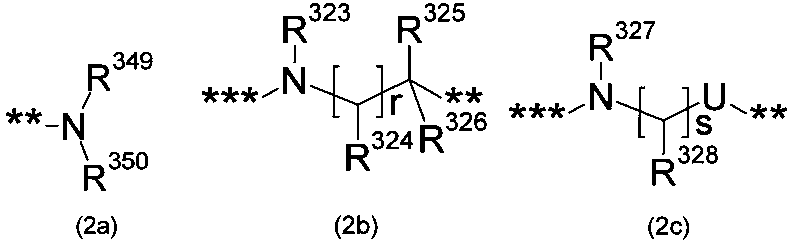
            whereby, R³⁴⁹ and R³⁵⁰ independent from each other, are hydrogen, alkyl, alkyl substituted by SO₂M, alkyl chain interrupted by one or two heteroatoms, or T, whereby T has the same meaning as above;
            U is -O-, -S- or -N(R³²⁹)-;
            R³²³, R³²⁷ and R³²⁹, independent from one another, are hydrogen, alkyl, alkyl substituted by SO₂M, alkyl chain interrupted by one or two heteroatoms;
            R³²⁴, R³²⁵, R³²⁶ and R³²⁸, independent from one another are hydrogen, alkyl or alkyl chain interrupted by one or two heteroatoms;
            r is an integer of 0 to 6;
            s is an integer of 1 to 6;
            ** refers to attachment point with A1 and A2;
            *** refers to attachment point with T;
         B is the diazo component and has one of the general formula (B1) or (B2); 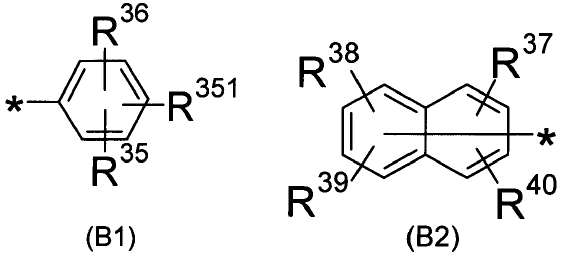 wherein
            R³⁵ to R⁴⁰ and R³⁵¹, independent from one another, are hydrogen or alkyl, alkoxy, halogen, cyano, -SO₃M, trifluoromethyl, nitro, ester, NHC(O)R⁴¹, CONH₂, S(O)₂R⁴² - SO₂X or one of the general formulae (E1) to (E3);
               wherein R⁴¹ and R⁴², independent from one another, are hydrogen, alkyl or alkyl substituted by hydroxy or halogen, and
               wherein (E1) to (E3) are 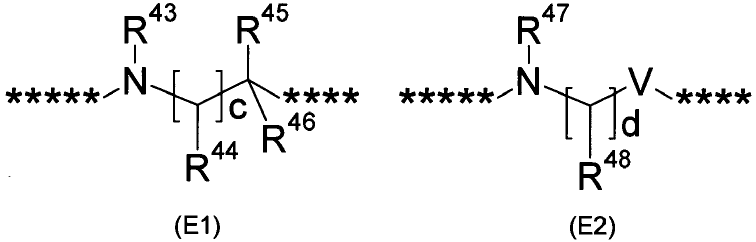 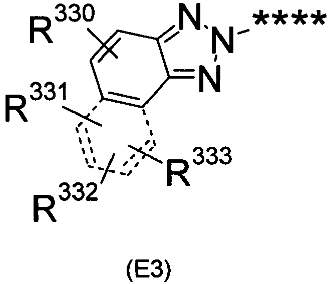 wherein
            V is -O-, -S- or -N(R³⁵²)-;
            R⁴³, R⁴⁷ and R³⁵², independent from one another are hydrogen, alkyl, alkyl substituted by SO₃M, alkyl chain interrupted by one or two heteroatoms;
            R⁴⁴, R⁴⁵, R⁴⁶ and R⁴⁸, independent from one another are hydrogen, alkyl or alkyl chain interrupted by one or two heteroatoms;
            R³³⁰, R³³¹, R³³² and R³³³, independent from one another are hydrogen or alkyl, alkoxy, halogen, cyano, -SO₃M, trifluoromethyl, nitro, ester, NHC(O)R³³⁴, CONH₂, S(O)₂R³³⁵ or a group of formula (3a); 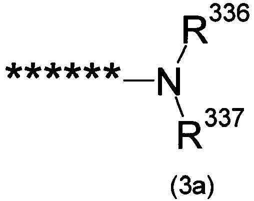
         R³³⁶ and R³³⁷, independent from one another are hydrogen, alkyl, alkenyl, cycloalkyl, trifluoromethyl, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkylsulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N;N-dicycloalkylamino, N-alkyl-N-cycloalkyl-amino, N-aryl-Ncycloalkyl-amino, N-heteroarylamino, N-heterocycloalkylamino or hydroxyakylsulfonylalkyl,
            or
            are alkyl interrupted by one or more heteroatoms such as oxygen or sulfur;
            or
            are alkyl substituted by one or more substituents selected from the group consisting of hydroxy, aryl, cycloalkyl, alkoxy, thioalkoxy, amino, N-monoalkyl-amino, N,N-dialkyl amino, N-monoaryl-amino, N,N-diaryl-amino, N-alkyl-N-aryl-amino, N-monocyclo alkylamino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl sulfamoyl, N,N-diaryl-sulfamoyl, N-monocycloalkyl-N-monoarylsulfamoyl, N-monoalkyl- N-monoarylsulfamoyl or SO₃M; alkyl containing a rest with free valence to link to rest reactive anchor T;
         R⁴¹, R⁴², R³³⁴ and R³³⁵, independent from one another, are hydrogen, alkyl or alkyl substituted by hydroxy or halogen;
         c is an integer of 0 to 6
         d is an integer of 1 to 6
         **** refers to attachment point with B1 and B2
         ***** refers to attachment point with T
         ******refers to attachement point with E3
         T and X are the same as defined above;
            with the general proviso that the dyes of general formula (I) contain at least one reactive anchor.

This invention refers to all kinds of tautomeric and geometric isomers of the dyes of the formula (I).

Alkyl groups appearing in this application may be straight-chain or branched and are for example methyl, ethyl, n-propyl, isopropyl, n-butyl, sec-butyl, tert-butyl, isobutyl, n-pentyl, isopentyl, methylbutyl and n-hexyl. The same logic applies to alkoxy groups which for example are methoxy and ethoxy.

Cycloalkyl groups are preferably cyclopentyl and cyclohexyl. The term cyloalkyl comprises for the purpose of the present application substituted cycloalklyl groups and unsaturated cycloalkyl groups as well. A preferred group of this type is cyclopentenyl.

Alkenyl groups may be straight-chain or branched and are for example vinyl and allyl. The term alkenyl comprises for the purpose of the present application alkynyl groups as well, for example ethynyl and propargyl.

Heterocycloalkyl groups are preferably pyrrolidine, piperidine, morpholine or piperazine, tetrahydrofuran, imidazole, triazole. The terms heterocycloalkyl comprises the above groups in unsubstituted as well as in substituted form.

Aryl is in particular phenyl or naphthyl. The terms phenyl and naphthyl comprise unsubstituted as well as substituted phenyl and naphthyl.

Halogen is preferably fluorine, chlorine or bromine.

Preferred embodiments of the present invention are dyes of the formulae (Iy) to (Iab) and mixtures thereof; 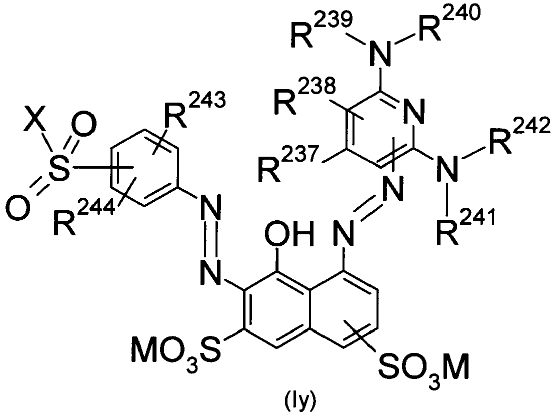 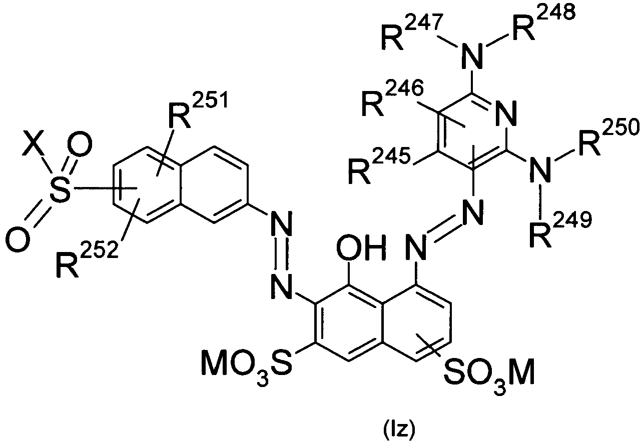 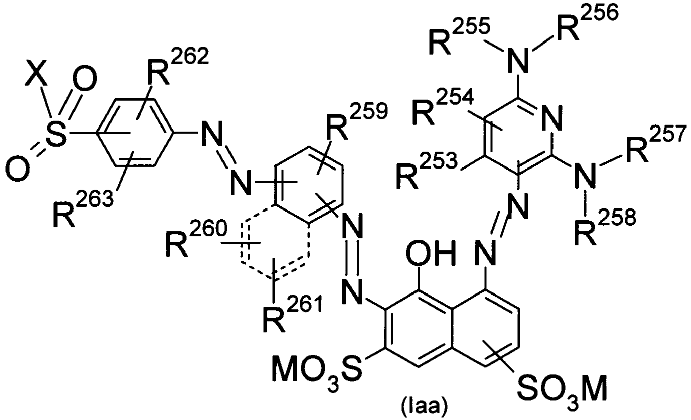 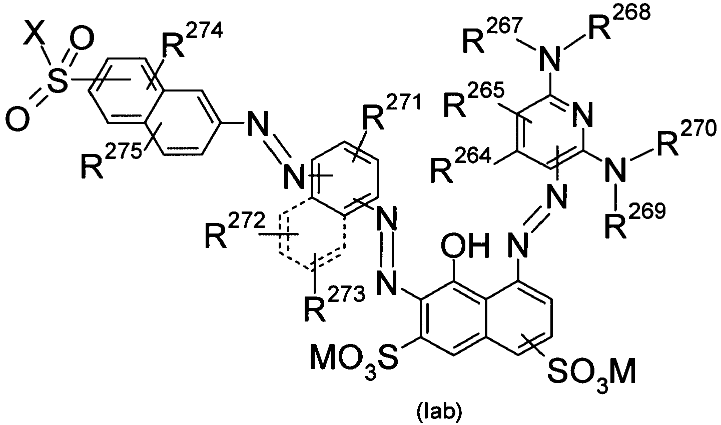 wherein
R²³⁷, R²⁴⁵, R²⁵³ and R²⁶⁴ independent from each other are hydrogen, alkyl, cycloalkyl, trifluoromethyl; alkoxy, cyano, carbamoyl, alkoxycarbonyl, COOM, amino; hydroxyl, monocycloalkyl-amino; monoalkyl-amino; di(cyclo)alkyl-amino; dialkyl-amino; monoaryl-amino; diaryl-amino; monocycloalkyl monoarylamino; monoalkyl monoaryl amino; alkylthio; arylthio;
   or
   is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido or phenylureido;
R²³⁸, R²⁴⁶, R²⁵⁴ and R²⁶⁵ independent from each other are cyano, carbamoyl, alkoxycarbonyl, trifluoromethyl, carbonyltrifluoromethyl, halogen, methyl sulfonyl or - SO₃M;
R²³⁹ to R²⁴², R²⁴⁷ to R²⁵⁰, R²⁵⁵ to R²⁵⁸ and R²⁶⁷ to R²⁷⁰, independent from each other are hydrogen, alkyl, alkenyl, cycloalkyl, trifluoromethyl, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkylsulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N;N-dicycloalkylamino, N-alkyl-N-cycloalkyl-amino, N-aryl-Ncycloalkyl-amino, N-heteroarylamino, N-heterocycloalkylamino or hydroxyakylsulfonylalkyl,
   or
   are alkyl interrupted by one or more heteroatoms such as oxygen or sulfur;
   or
   are alkyl substituted by one or more substituents selected from the group consisting of hydroxy, aryl, cycloalkyl, alkoxy, thioalkoxy, amino, N-monoalkyl-amino, N,N-dialkyl amino, N-monoaryl-amino, N,N-diaryl-amino, N-alkyl-N-aryl-amino, N-monocyclo alkylamino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl sulfamoyl, N,N-diaryl-sulfamoyl, N-monocycloalkyl-N-monoarylsulfamoyl, N-monoalkyl- N-monoarylsulfamoyl or SO₃M; or alkyl interrupted by one or more heteroatoms such as oxygen or sulphur; or contains a rest with free valence to link to rest reactive anchor T;
R²⁴³, R²⁴⁴, R²⁵¹, R²⁵², R²⁶², R²⁶³, R²⁷⁴ and R²⁷⁵, independent from one another, are hydrogen or alkyl, alkoxy, halogen, cyano, -SO₃M, trifluoromethyl, nitro, ester, NHC(O)R²⁷⁶, CONH₂, S(O)₂R²⁷⁷ or -SO₂X;
R²⁷⁶ and R²⁷⁷, independent from one another, are hydrogen, alkyl or alkyl substituted by hydroxy or halogen;
R²⁵⁹ to R²⁶¹ and R²⁷¹ to R²⁷³, independent from one another, are hydrogen, alkyl, alkyl substituted, alkyl chain interrupted by one or two heteroatoms, alkoxy, alkoxy substituted, halogen ,trifluoromethyl; cycloalkyl; heterocycloalkyl; cyano; nitro; acyloxy; alkylcarbonyl, acylamino; aryloylamino, cinnamoylamino, alkylsulfonylamino; alkylthio; alkylsulfonyl, alkoxycarbonyl, carbamoyl, sulfamoyl, ureido, alkylureido, SO₂M, COOM; or a group of formulae (2a) to (2c) as defined above;

In the especially preferred dyes of the formulae (Iy) to (Iab),
R²³⁷, R²⁴⁵, R²⁵³ and R²⁶⁴ are hydrogen or (C₁-C₄) alkyl, aryl, (C₁-C₄) alkyloxy;
R²³⁸, R²⁴⁶, R²⁵⁴ and R²⁶⁵ are (C₁-C₄)alkyl, cyano, carbamido, alkoxy carbonyl, carbonyl or sulfomethyl;
R²³⁹ to R²⁴², R²⁴⁷ to R²⁵⁰, R²⁵⁵ to R²⁵⁸ and R²⁶⁷ to R²⁷¹, independent from one another, are hydrogen, (C₁-C₄)alkyl, (C₁-C₆)alkyloxy, aryl;
Or -Alk-SO₂X,
Or aryl substituted by one or more groups selected from halogen, -SO₃M or -SO₂X or free valence substituted with T;
R²⁴³, R²⁴⁴, R²⁵¹, R²⁵², R²⁶², R²⁶³, R²⁷⁴ and R²⁷⁵, independent from one another, are hydrogen, (C₁-C₄)alkyl, (C₁-C₄)alkoxyl, halogen or -SO₃M;
R²⁵⁹ to R²⁶¹ and R²⁷¹ to R²⁷³, independent from one another, are hydrogen, (C₁-C₄)alkyl, (C₁-C₄)alkoxyl, hydroxyl, carbamido, halogen or -SO₃M or contain the group of formulae (2a) to (2c);
T and X have the same meanings as defined above.

Further preferred embodiments of the present invention are dyes of the formulae (Iac) to (Iaf) and mixtures thereof; 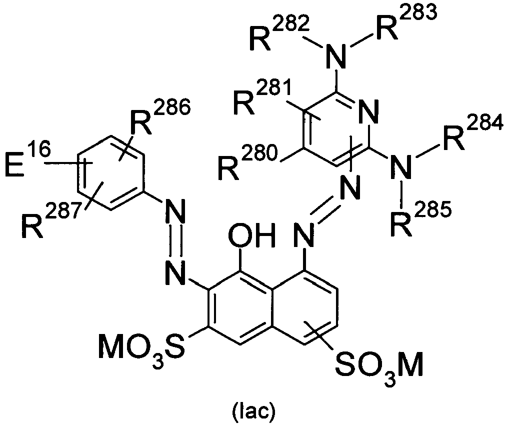 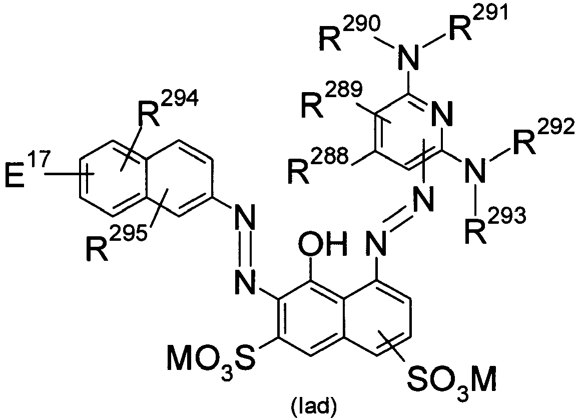 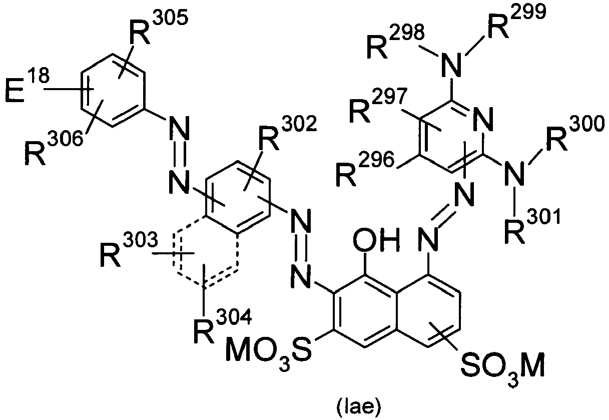 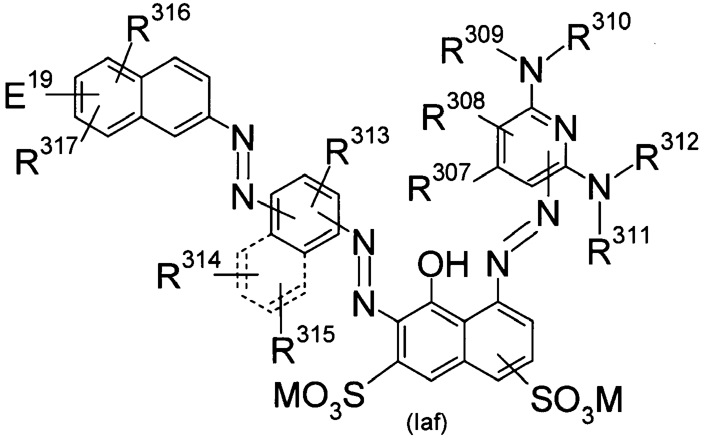 wherein
R²⁸⁰, R²⁸⁸, R²⁹⁶ and R³⁰⁷ independent from each other are hydrogen, alkyl, cycloalkyl, trifluoromethyl; alkoxy, cyano, carbamoyl, alkoxycarbonyl, COOM, amino; hydroxyl, monocycloalkyl-amino; monoalkyl-amino; di(cyclo)alkyl-amino; dialkyl-amino; monoaryl-amino; diaryl-amino; monocycloalkyl monoarylamino; monoalkyl monoaryl amino; alkylthio; arylthio;
   or
   are alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido or phenylureido;
R²⁸¹, R²⁸⁹, R²⁹⁷ and R³⁰⁸ are cyano, carbamoyl, alkoxycarbonyl, trifluoromethyl, carbonyltrifluoromethyl, halogen, methyl sulfonyl or -SO₃M;
R²⁸² to R²⁸⁵, R²⁹⁰ to R²⁹³, R²⁹⁸ to R³⁰¹ and R³⁰⁹ to R³¹², independent from each other, are hydrogen, alkyl, alkenyl, cycloalkyl, trifluoromethyl, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkylsulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N;N-dicycloalkylamino, N-alkyl-N-cycloalkyl-amino, N-aryl-Ncycloalkyl-amino, N-heteroarylamino, N-heterocycloalkylamino or hydroxyakylsulfonylalkyl,
   or
   are alkyl interrupted by one or more heteroatoms such as oxygen or sulfur;
   or
   are alkyl substituted by one or more substituents selected from the group consisting of hydroxy, aryl, cycloalkyl, alkoxy, thioalkoxy, amino, N-monoalkyl-amino, N,N-dialkyl amino, N-monoaryl-amino, N,N-diaryl-amino, N-alkyl-N-aryl-amino, N-monocyclo alkylamino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl sulfamoyl, N,N-diaryl-sulfamoyl, N-monocycloalkyl-N-monoarylsulfamoyl, N-monoalkyl- N-monoarylsulfamoyl or SO₃M; or alkyl interrupted by one or more heteroatoms such as oxygen or sulphur; or a rest with free valence to link to rest reactive anchor T;
R²⁸⁶, R²⁸⁷, R²⁹⁴, R²⁹⁵, R³⁰⁵, R³⁰⁶, R³¹⁶ and R³¹⁷, independent from one another, are hydrogen or alkyl, alkoxy, halogen, cyano, -SO₃M, trifluoromethyl, nitro, ester, NHC(O)R³¹⁸, CONH₂, S(O)₂R³¹⁹ or -SO₂X;
R³¹⁸ and R³¹⁹, independent from one another are hydrogen, alkyl or alkyl substituted by hydroxy or halogen;
R³⁰² to R³⁰⁴ and R³¹³ to R³¹⁵, independent from one another, are hydrogen, alkyl, alkyl substituted, alkyl chain interrupted by one or two heteroatoms, alkoxy, alkoxy substituted, halogen ,trifluoromethyl; cycloalkyl; heterocycloalkyl; cyano; nitro; acyloxy; alkylcarbonyl, acylamino; aryloylamino, cinnamoylamino, alkylsulfonylamino; alkylthio; alkylsulfonyl, alkoxycarbonyl, carbamoyl, sulfamoyl, ureido, alkylureido, SO₂M, COOM; or a group of formulae (2a) to (2c) as defined above;
E¹⁶ to E¹⁹, independent from each other, are a group of general formulae (E1) to (E3) as defined above;
T and X have the same meanings as defined above.

In the especially preferred dyes of the formulae (Iac) to (Iaf),
R²⁸⁰, R²⁸⁸, R²⁹⁶ and R³⁰⁷ independent from each other are hydrogen or (C₁-C₄) alkyl, aryl, (C₁-C₄) alkyloxy;
R ²⁸¹ R²⁸⁹, R²⁹⁷ and R³⁰⁸ independent from each other are (C₁-C₄)alkyl, cyano, carbamido, alkoxy carbonyl, carbonyl or sulfomethyl;
R²⁸² to R²⁸⁵, R²⁹⁰ to R²⁹³, R²⁹⁸ to R³⁰¹ and R³⁰⁹ to R³¹¹, independent from one another, are hydrogen, (C₁-C₄)alkyl, (C₁-C₆)alkyloxy, aryl
Or -Alk-SO₂X,
Or aryl substituted by one or more groups selected from halogen, -SO₃M or -SO₂X or free valence substituted with T;
R²⁸⁶, R²⁸⁷, R²⁹⁴, R²⁹⁵, R³⁰⁵, R³⁰⁶, R³¹⁶ and R³¹⁷, independent from one another, are hydrogen, (C₁-C₄)alkyl, (C₁-C₄)alkoxyl, halogen or-SO₃M;
R³⁰² to R³⁰⁴ and R³¹³ to R³¹⁵, independent from one another are hydrogen, (C₁-C₄)alkyl, (C₁-C₄)alkoxyl, hydroxyl, carbamido, halogen or or contains the group of formulae (2a) to (2c);
E¹⁶ to E¹⁹, independent from each other, are a group of general formulae (E1) to (E3); T and X are the same as defined above.

Examples of the preferred dyes of this invention are the dyes from 1 to 79 (Table1) corresponding to the general formula (II). 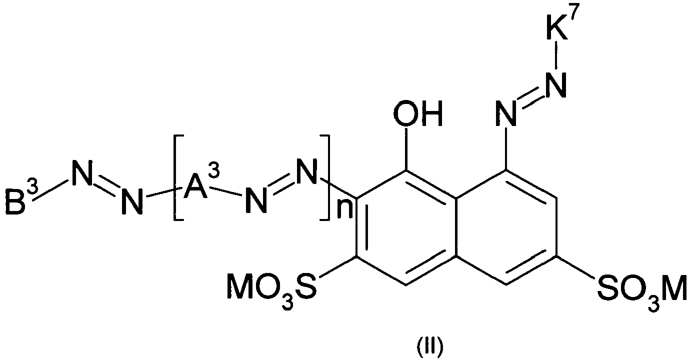 wherein
n is 0 or 1;
K⁷ is a radical of heterocyclic coupling component and has the same meaning as described above for K;
A³ is a radical of middle component and has the same meaning as described above for A;
B³ is a radical of diazo component and has the same meaning as described above for B;
M is hydrogen, sodium, potassium, lithium or ammonium;

**Table 1**

| Serial number | B³ | A³ | K⁷ |
|---|---|---|---|
| 1 | 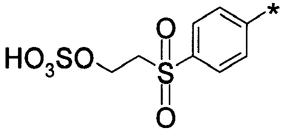 | - | 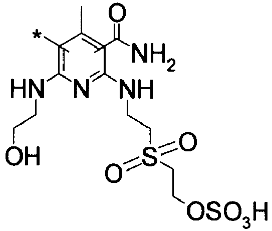 |
| 2 | 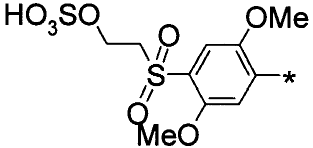 | - | 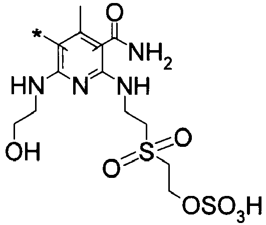 |
| 3 | 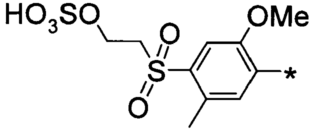 | - | 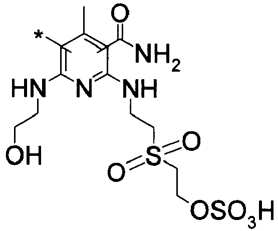 |
| 4 | 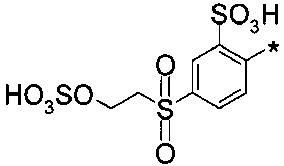 | - | 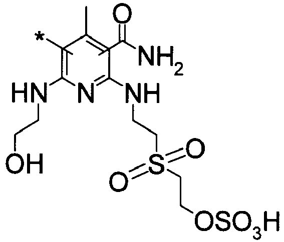 |
| 5 | 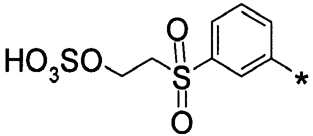 | - | 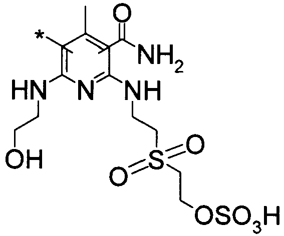 |
| 6 | 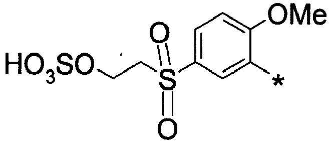 | - | 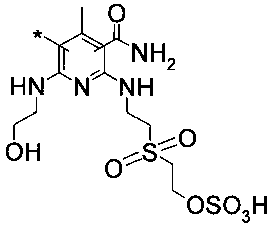 |
| 7 | 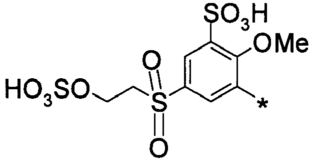 | - | 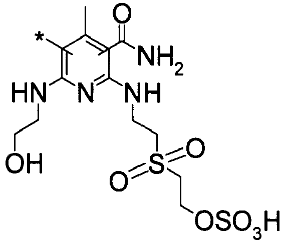 |
| 8 | 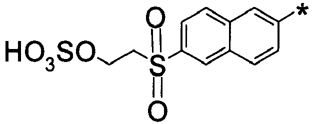 | - | 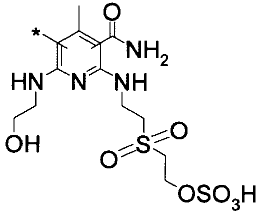 |
| 9 | 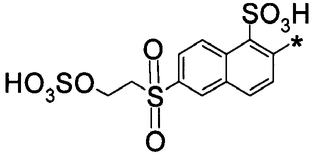 | - | 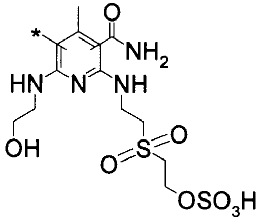 |
| 10 | 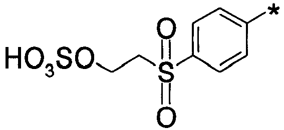 | 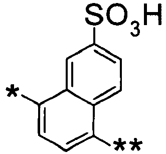 | 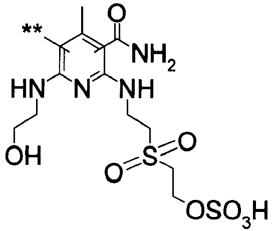 |
| 11 | 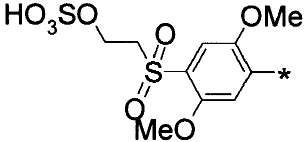 | 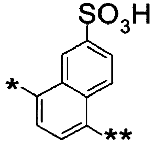 | 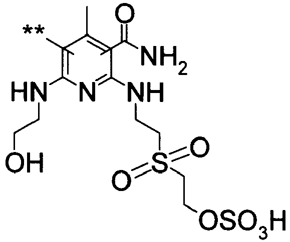 |
| 12 | 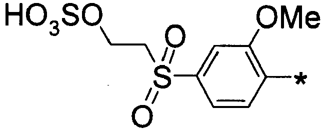 | 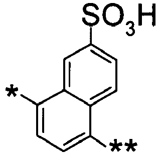 | 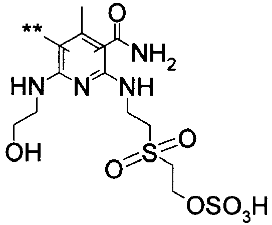 |
| 13 | 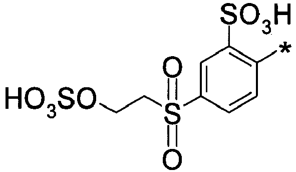 | 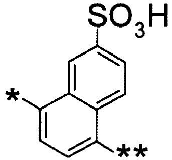 | 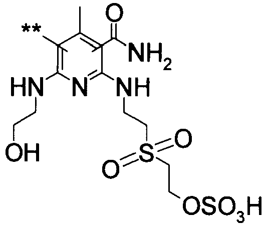 |
| 14 | 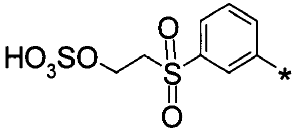 | 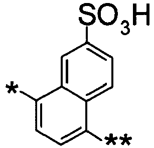 | 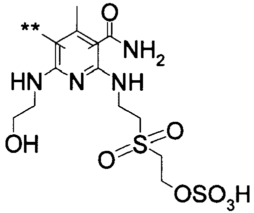 |
| 15 | 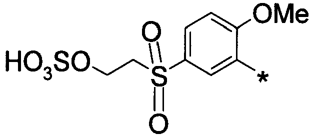 | 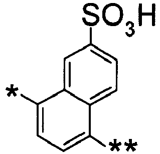 | 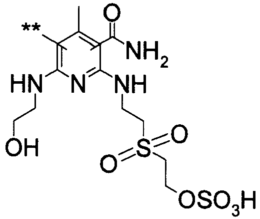 |
| 16 | 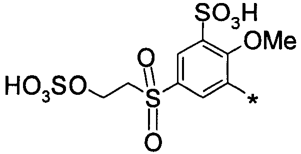 | 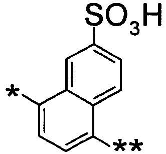 | 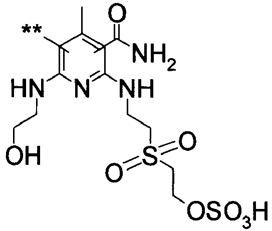 |
| 17 | 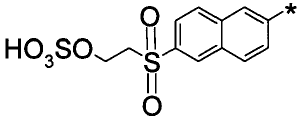 | 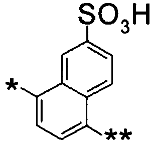 | 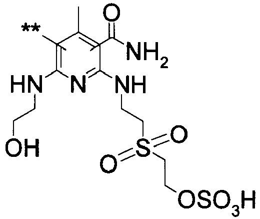 |
| 18 | 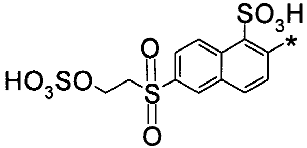 | 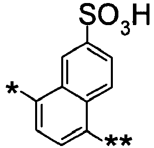 | 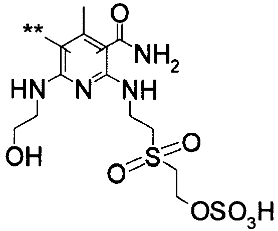 |
| 19 | 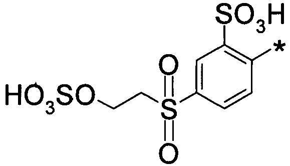 | 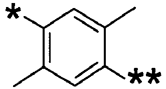 | 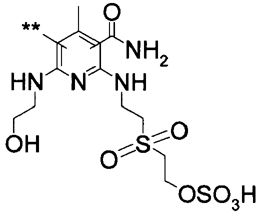 |
| 20 | 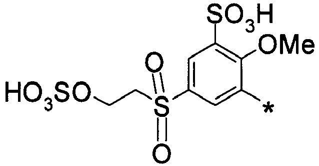 | 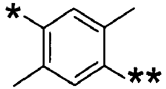 | 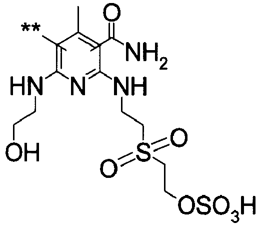 |
| 21 | 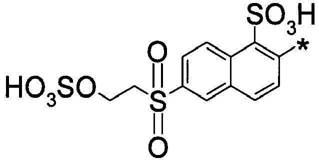 | 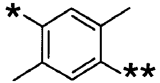 | 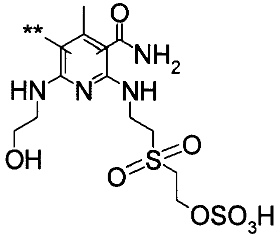 |
| 22 | 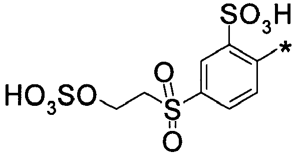 | 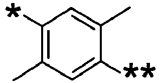 | 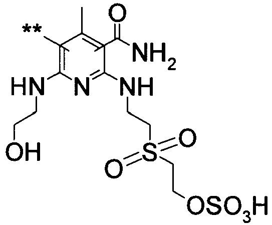 |
| 23 | 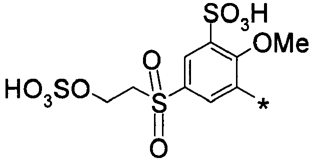 | 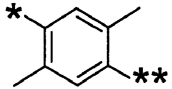 | 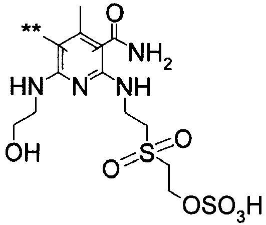 |
| 24 | 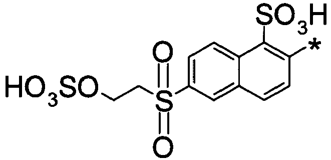 | 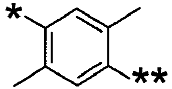 | 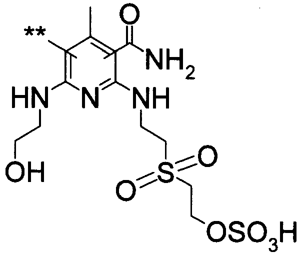 |
| 25 | 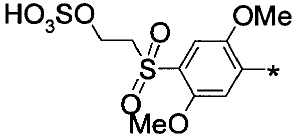 | 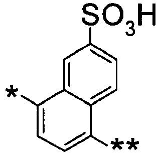 | 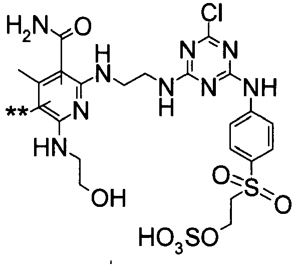 |
| 26 | 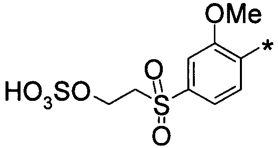 | 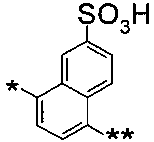 | 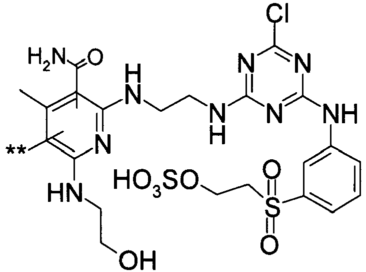 |
| 27 | 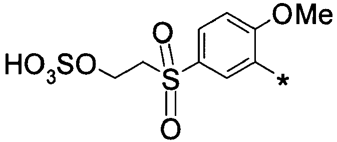 | 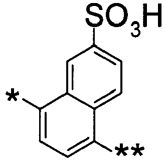 | 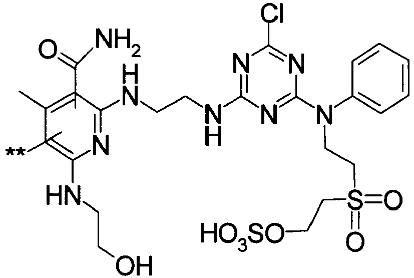 |
| 28 | 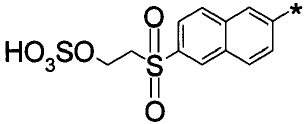 | 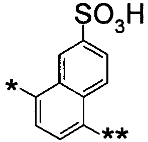 | 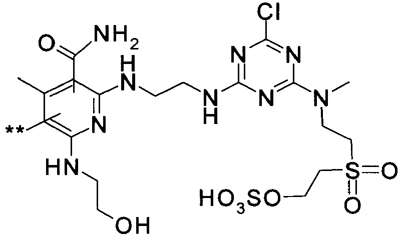 |
| 29 | 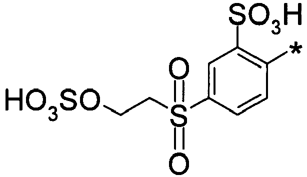 | 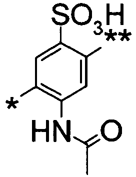 | 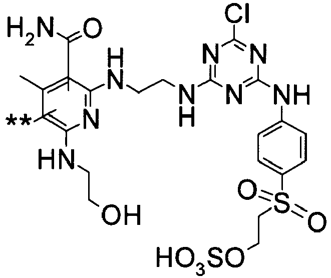 |
| 30 | 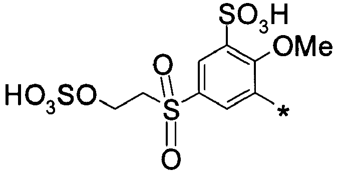 | 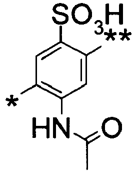 | 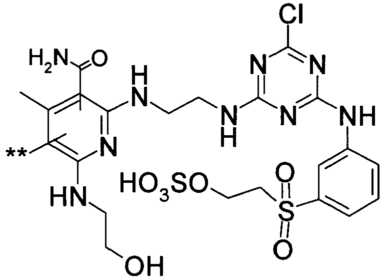 |
| 31 | 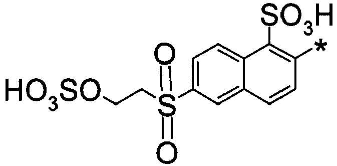 | 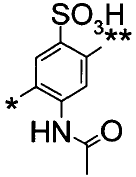 | 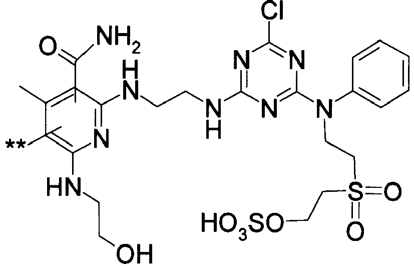 |
| 32 | 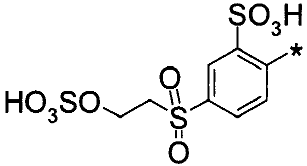 | 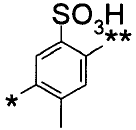 | 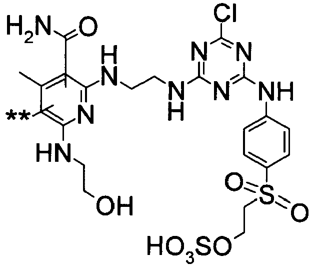 |
| 33 | 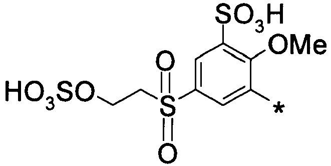 | 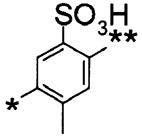 | 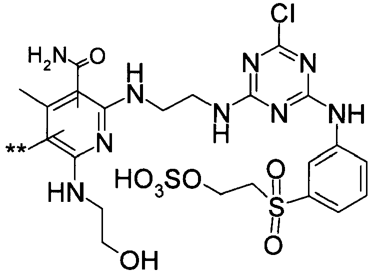 |
| 34 | 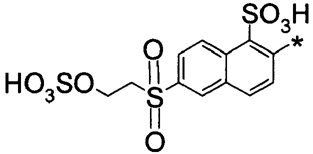 | 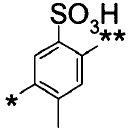 | 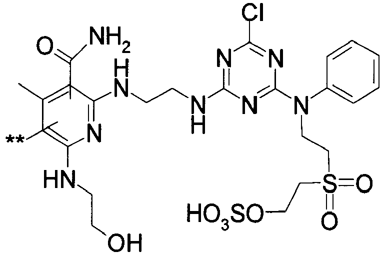 |
| 35 | 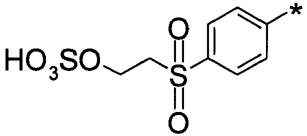 | 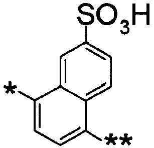 | 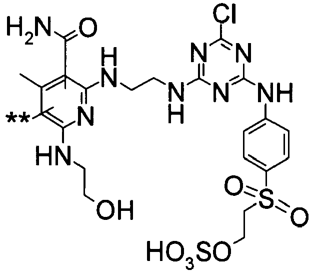 |
| 36 | 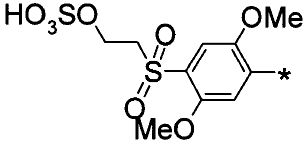 | 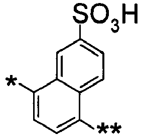 | 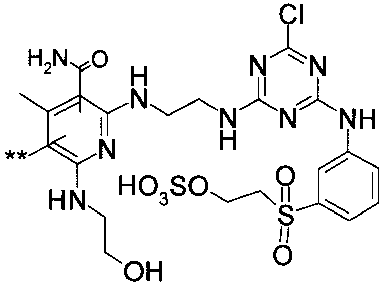 |
| 37 | 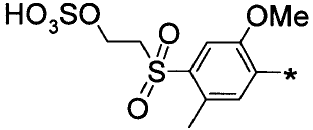 | 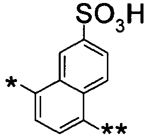 | 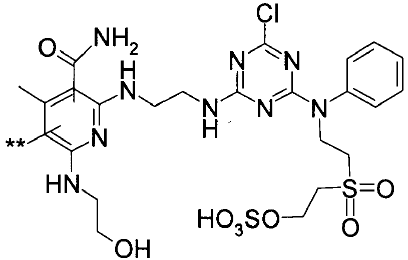 |
| 38 | 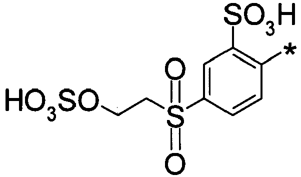 | 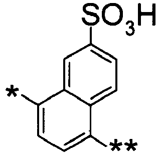 | 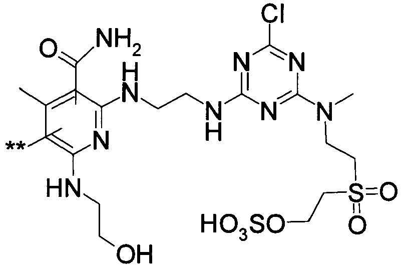 |
| 39 | 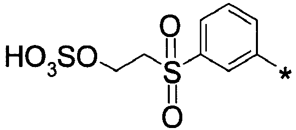 | 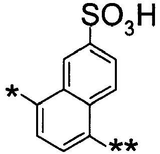 | 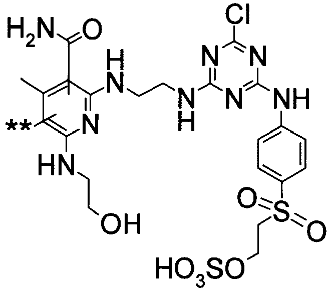 |
| 40 | 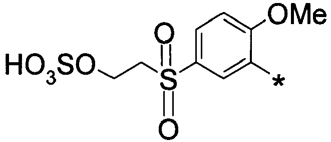 | 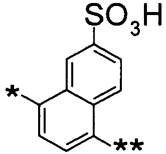 | 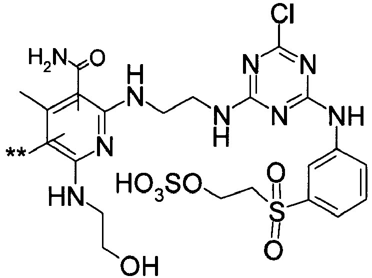 |
| 41 | 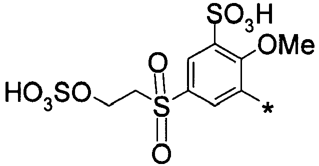 | 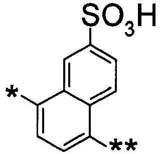 | 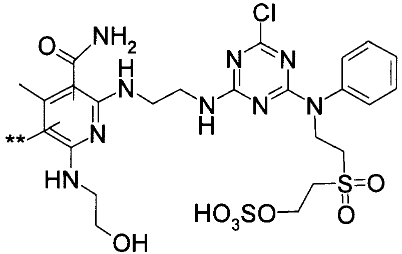 |
| 42 | 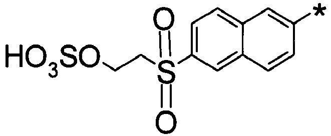 | 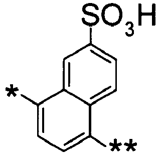 | 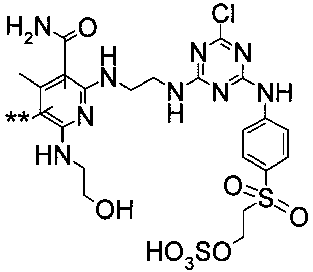 |
| 43 | 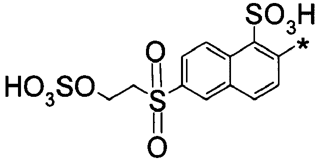 | 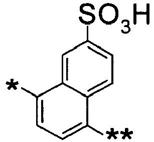 | 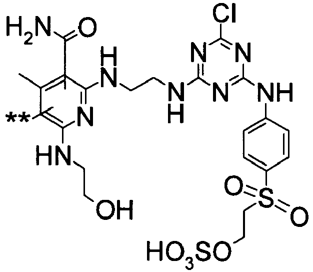 |
| 44 | 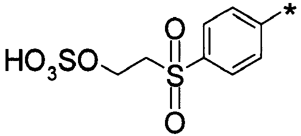 | - | 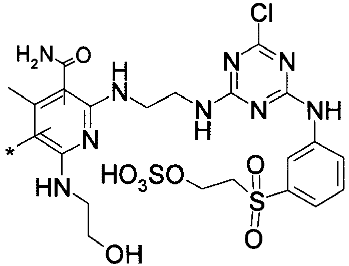 |
| 45 | 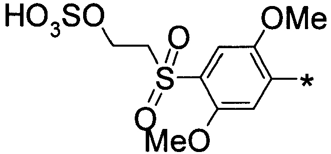 | - | 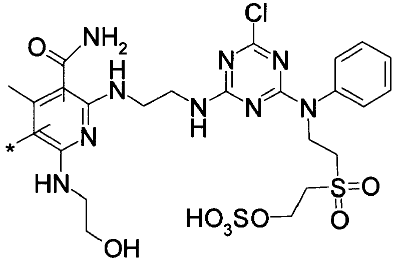 |
| 46 | 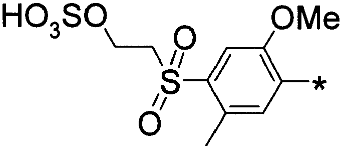 | - | 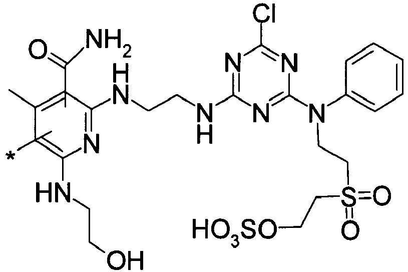 |
| 47 | 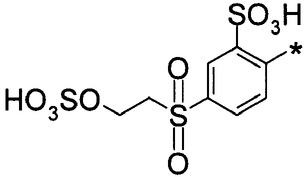 | - | 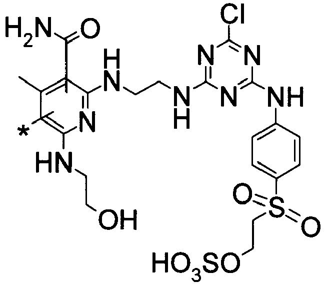 |
| 48 | 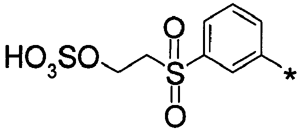 | - | 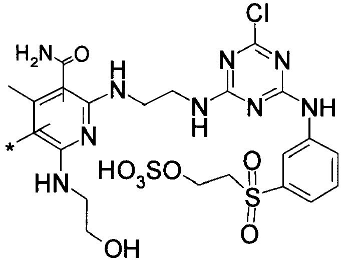 |
| 49 | 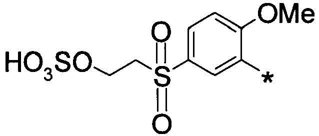 | - | 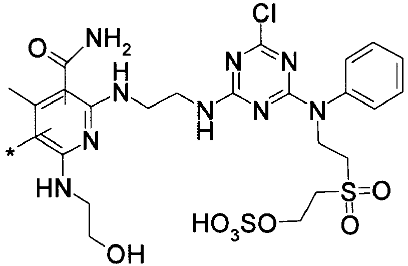 |
| 50 | 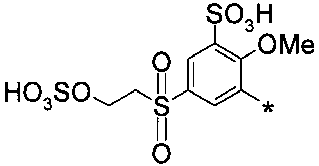 | - | 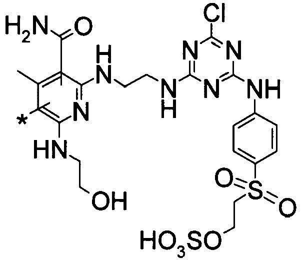 |
| 51 | 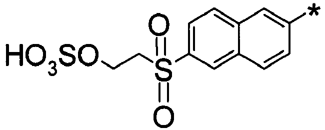 | - | 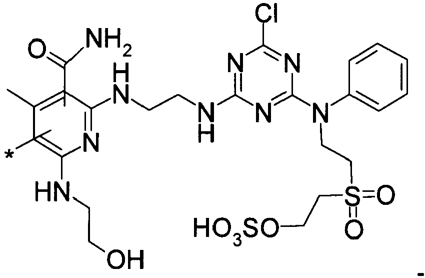 |
| 52 | 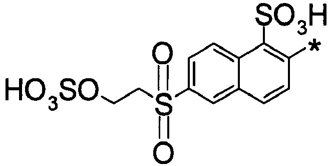 | - | 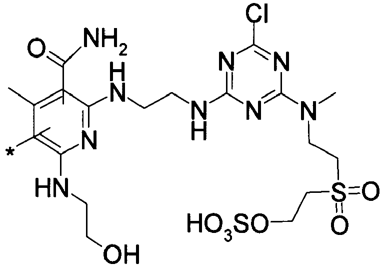 |
| 53 | 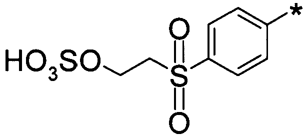 | - | 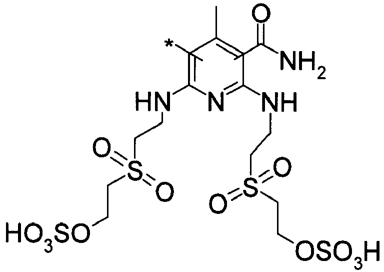 |
| 54 | 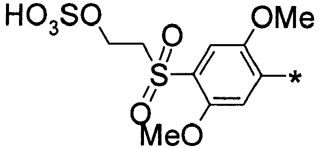 | - | 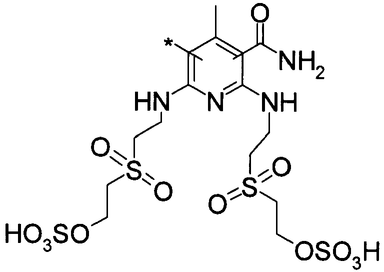 |
| 55 | 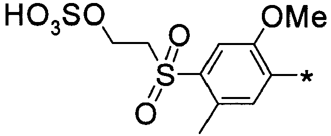 | - | 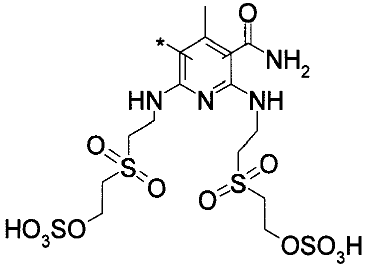 |
| 56 | 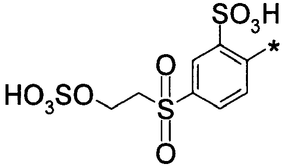 | - | 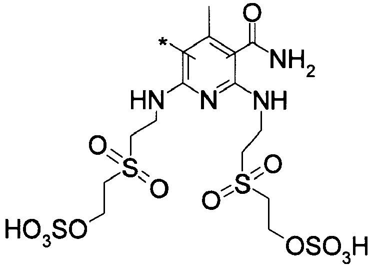 |
| 57 | 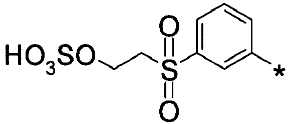 | - | 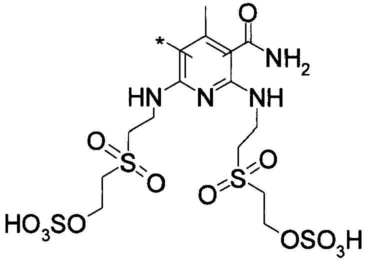 |
| 58 | 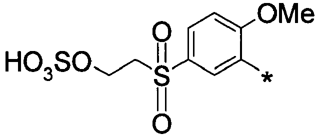 | - | 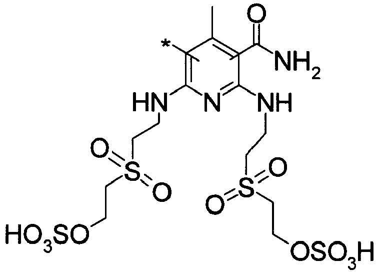 |
| 59 | 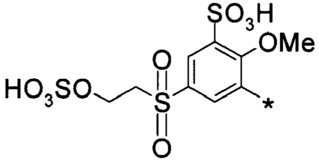 | - | 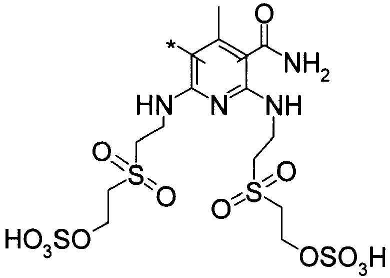 |
| 60 | 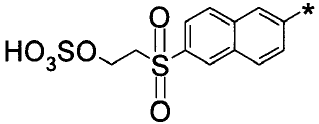 | - | 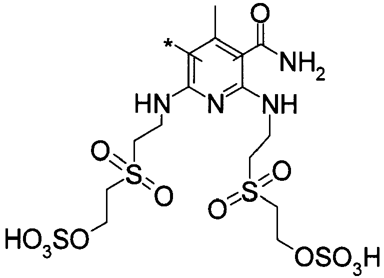 |
| 61 | 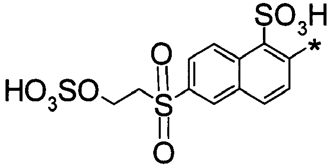 | - | 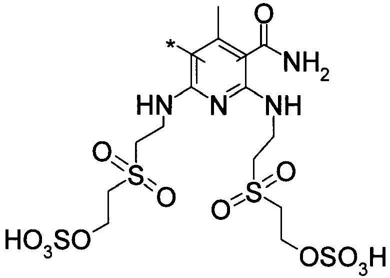 |
| 62 | 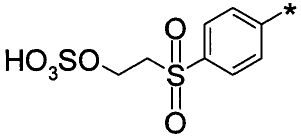 | 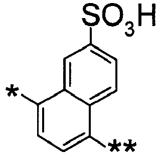 | 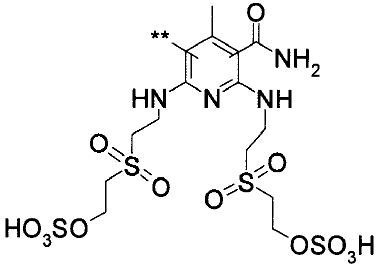 |
| 63 | 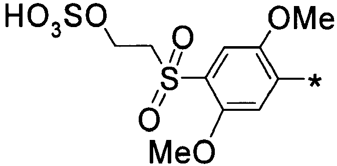 | 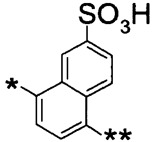 | 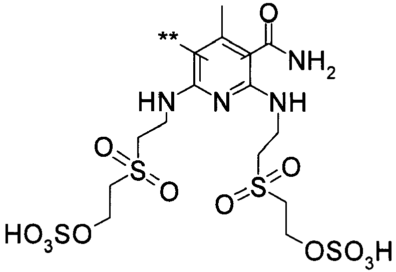 |
| 64 | 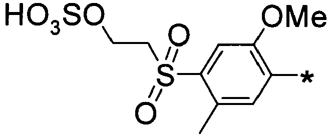 | 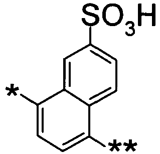 | 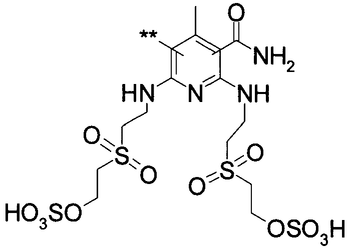 |
| 65 | 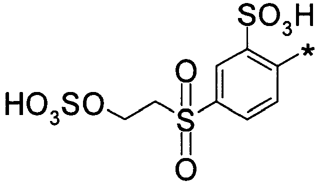 | 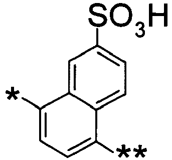 | 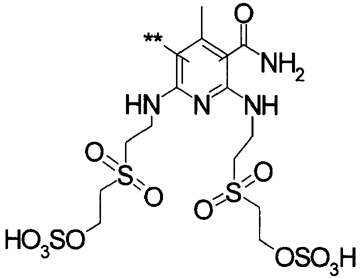 |
| 66 | 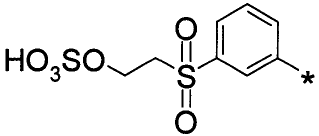 | 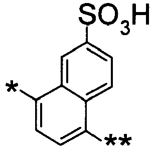 | 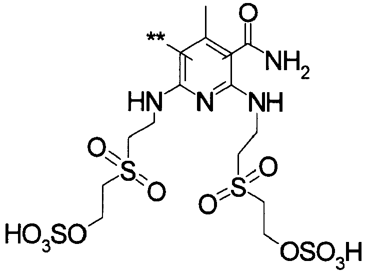 |
| 67 | 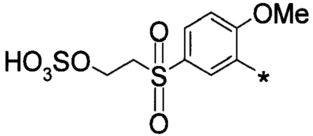 | 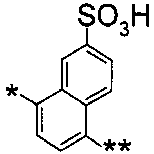 | 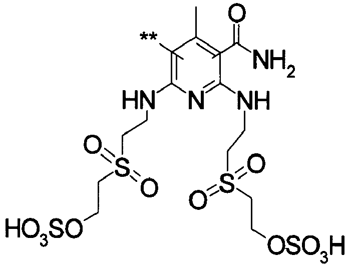 |
| 68 | 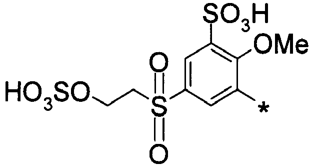 | 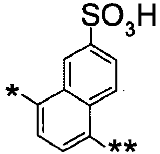 | 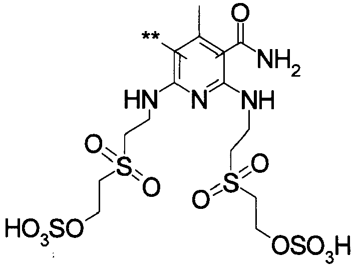 |
| 69 | 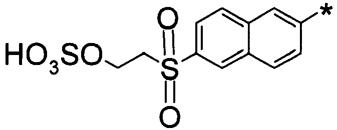 | 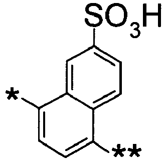 | 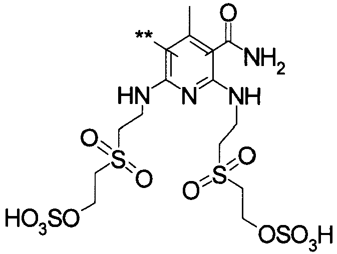 |
| 70 | 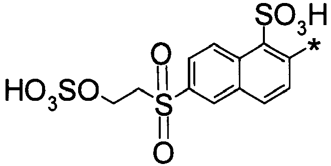 | 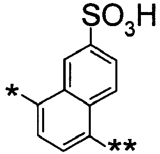 | 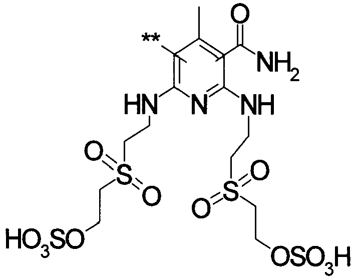 |
| 71 | 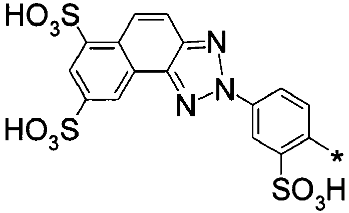 | - | 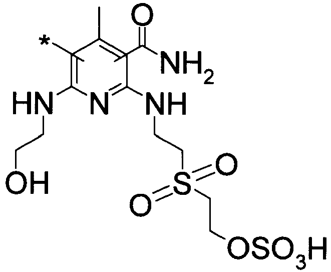 |
| 72 | 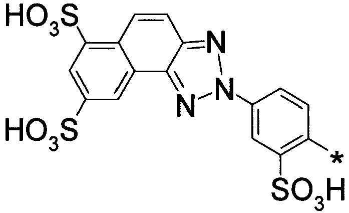 | 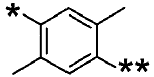 | 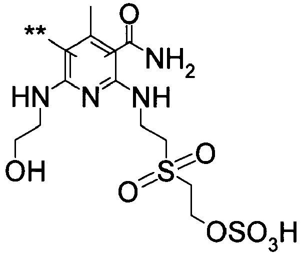 |
| 73 | 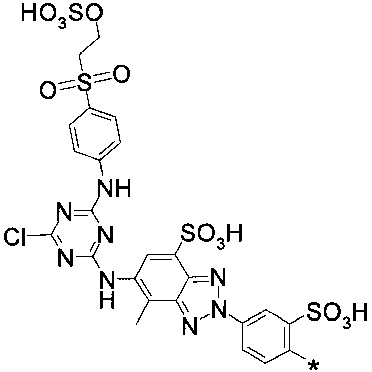 | 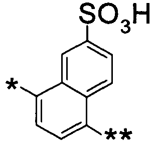 | 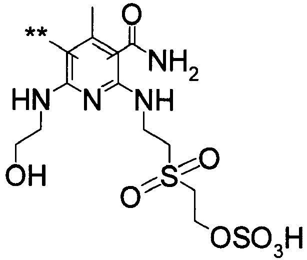 |
| 74 | 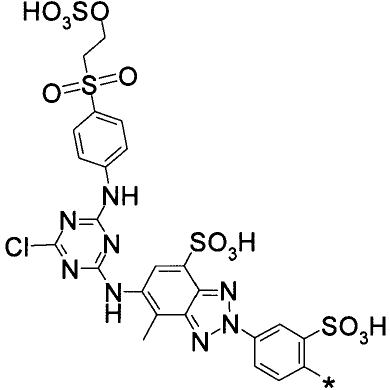 | - | 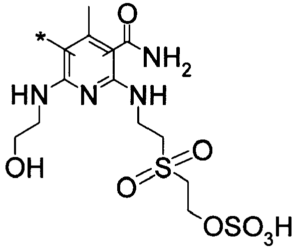 |
| 75 | 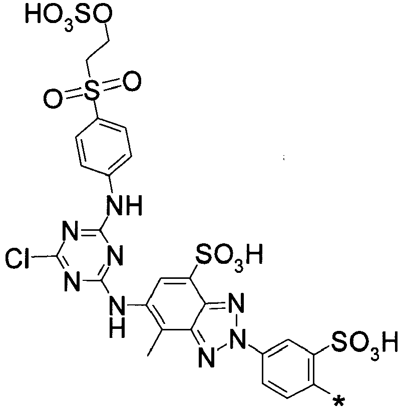 | 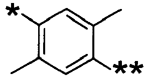 | 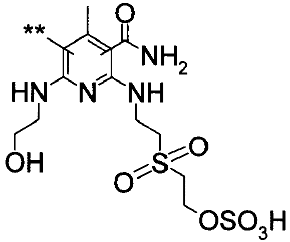 |
| 76 | 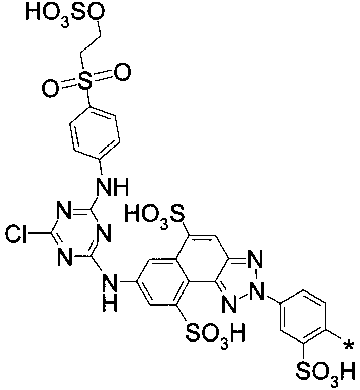 | 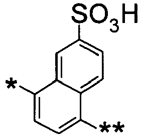 | 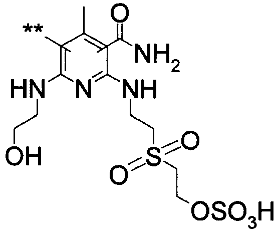 |
| 77 | 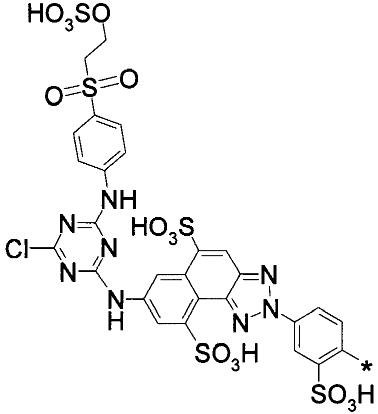 | - | 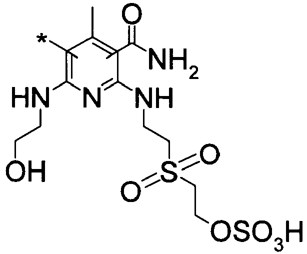 |
| 78 | 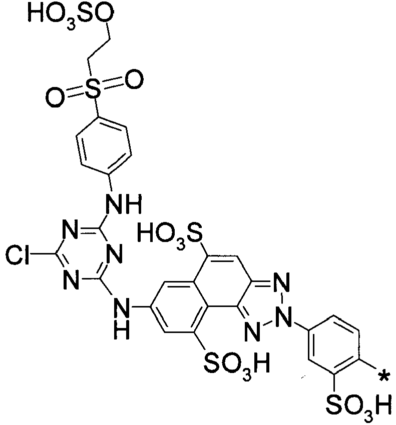 | 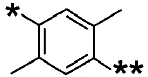 | 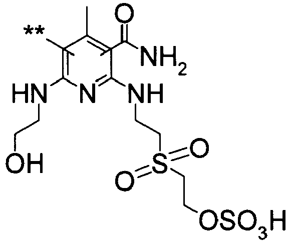 |
| 79 | 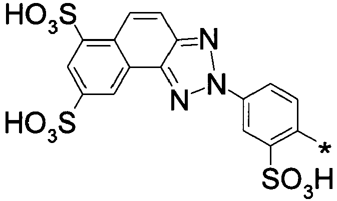 | 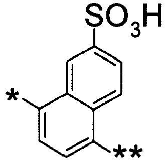 | 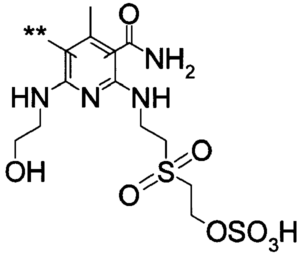 |

*refers to the attachment point of B³ and the rest containing K⁷ when n is an integer of 0;
*refers to the attachment point between B³ and A³;
**refers to the attachment point of A³ and of the rest containing K⁷ when n is an integer of 1.

Further examples of the preferred dyes of this invention are the dyes from 80 to 158 (Table 2) corresponding to the general formula (III). 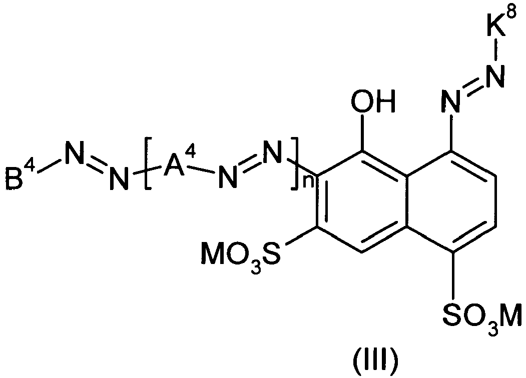 wherein
n is 0 or 1;
K⁸ is a radical of heterocyclic coupling component and has the same meaning as described above for K;
A⁴ is a radical of middle component and has the same meaning as described above for A;
B⁴ is a radical of diazo component and has the same meaning as described above for B;
M is hydrogen, sodium, potassium, lithium or ammonium;

**Table 2**

| Serial number | B⁴ | A⁴ | K⁸ |
|---|---|---|---|
| 80 | 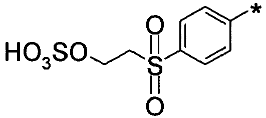 | - | 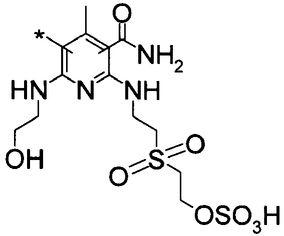 |
| 81 | 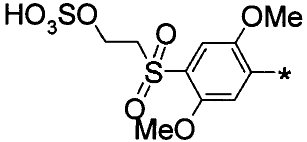 | - | 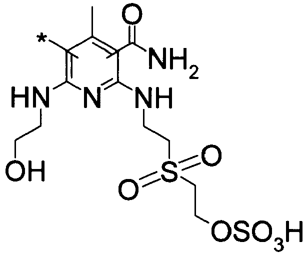 |
| 82 | 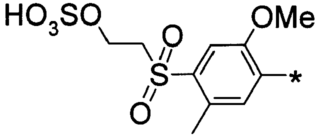 | - | 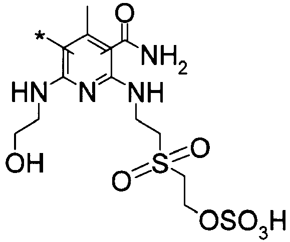 |
| 83 | 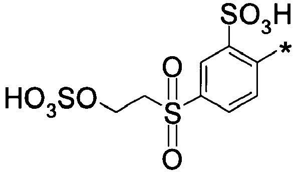 | - | 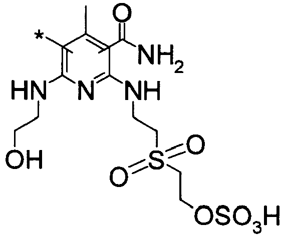 |
| 84 | 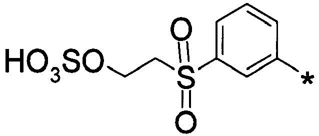 | - | 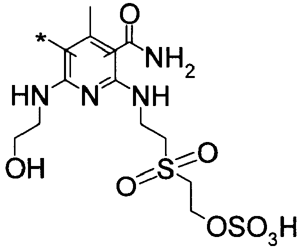 |
| 85 | 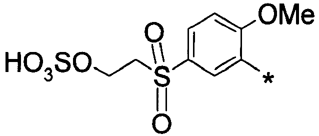 | - | 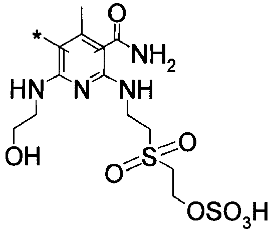 |
| 86 | 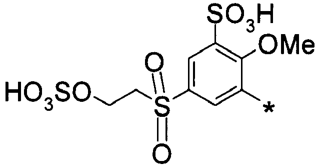 | - | 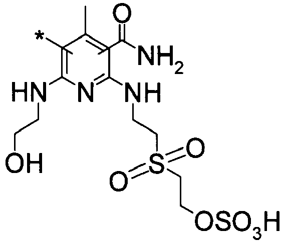 |
| 87 | 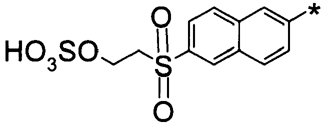 | - | 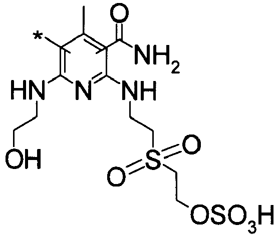 |
| 88 | 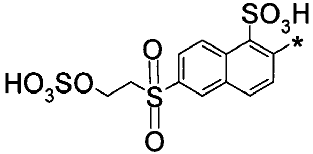 | - | 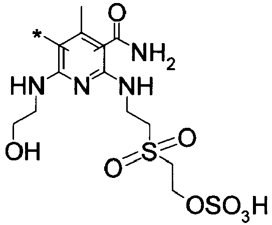 |
| 89 | 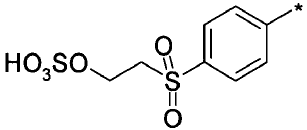 | 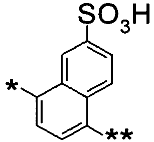 | 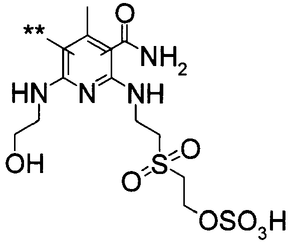 |
| 90 | 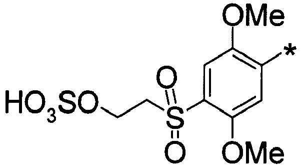 | 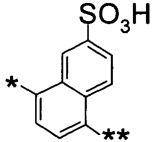 | 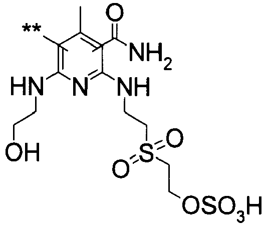 |
| 91 | 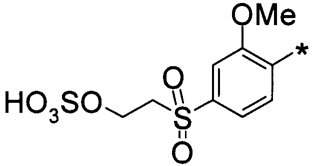 | 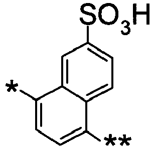 | 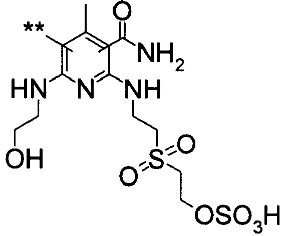 |
| 92 | 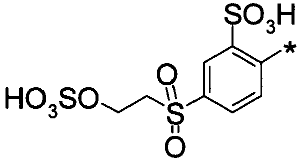 | 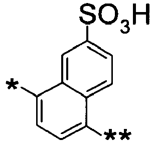 | 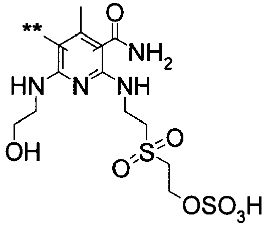 |
| 93 | 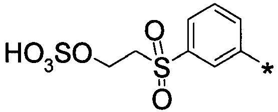 | 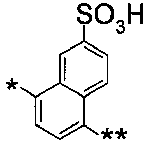 | 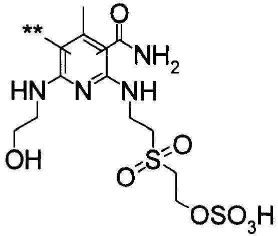 |
| 94 | 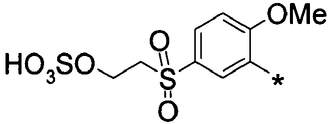 | 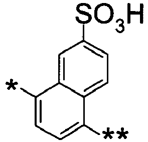 | 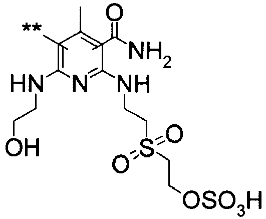 |
| 95 | 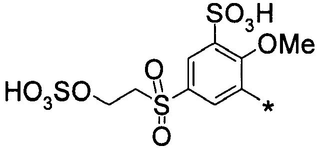 | 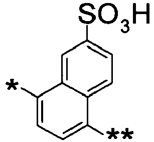 | 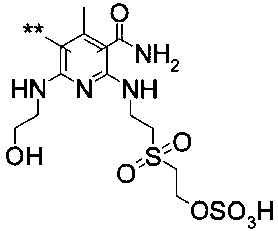 |
| 96 | 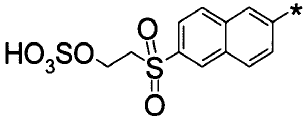 | 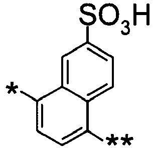 | 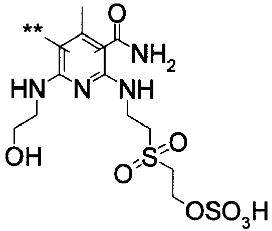 |
| 97 | 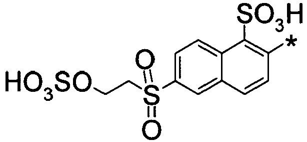 | 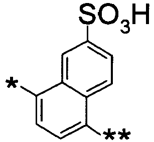 | 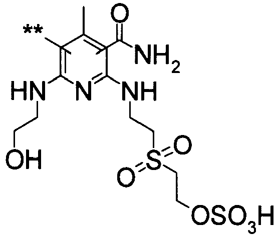 |
| 98 | 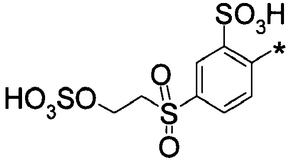 | 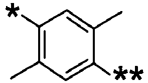 | 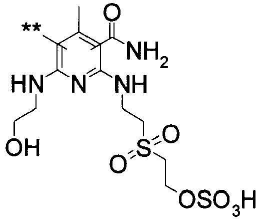 |
| 99 | 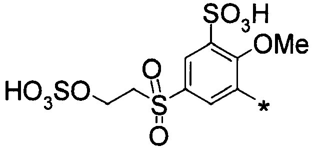 | 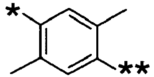 | 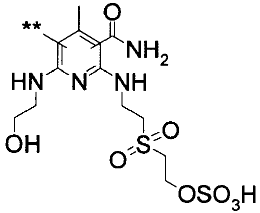 |
| 100 | 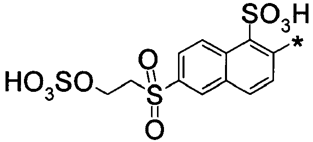 | 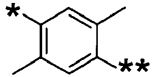 | 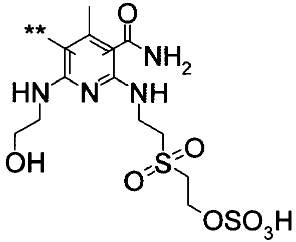 |
| 101 | 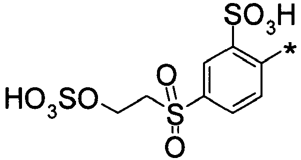 | 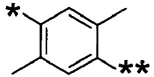 | 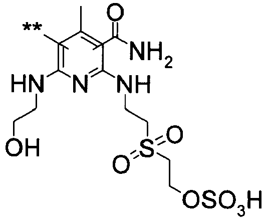 |
| 102 | 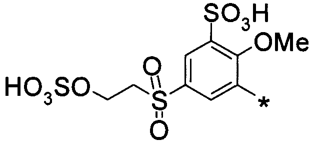 | 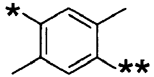 | 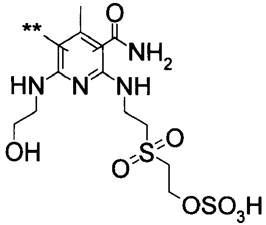 |
| 103 | 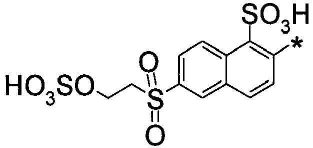 | 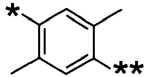 | 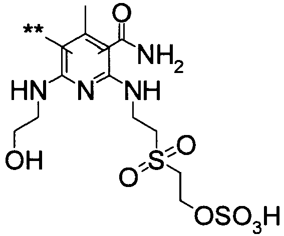 |
| 104 | 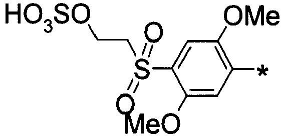 | 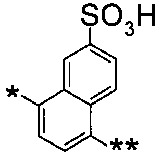 | 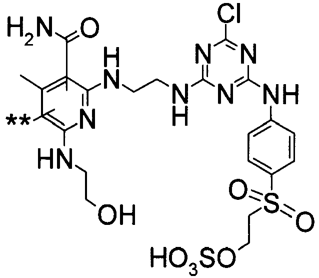 |
| 105 | 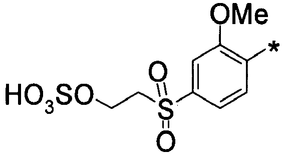 | 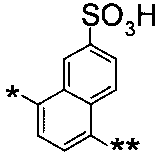 | 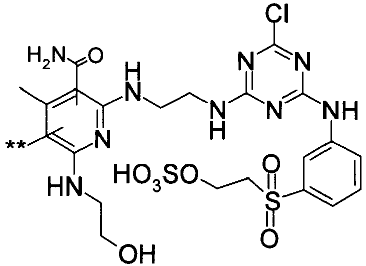 |
| 106 | 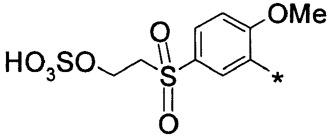 | 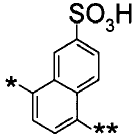 | 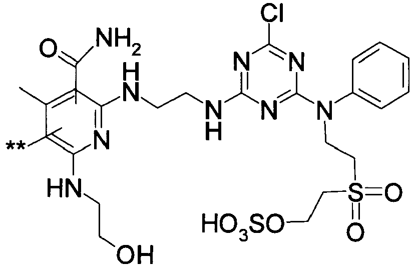 |
| 107 | 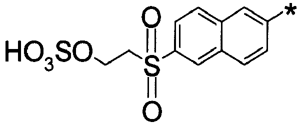 | 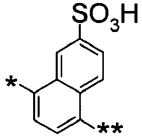 | 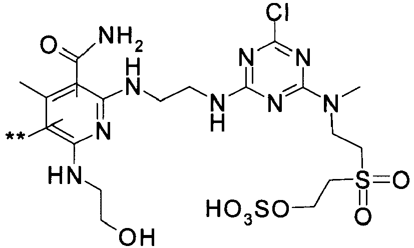 |
| 108 | 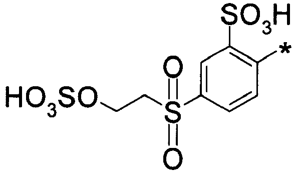 | 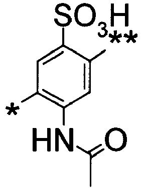 | 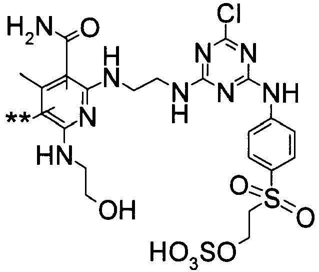 |
| 109 | 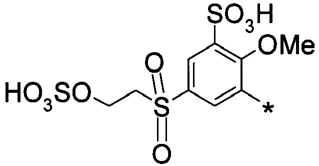 | 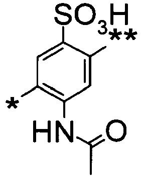 | 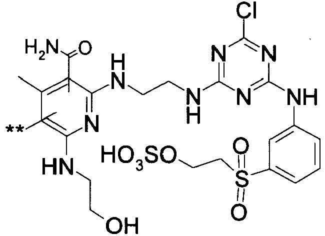 |
| 110 | 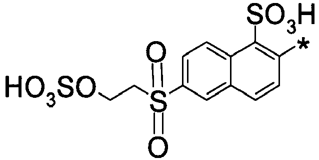 | 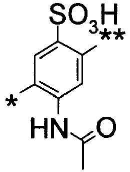 | 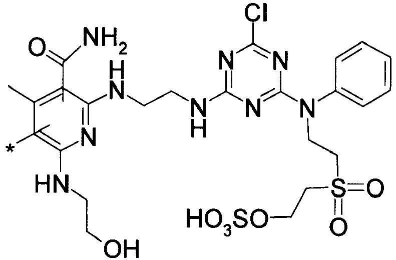 |
| 111 | 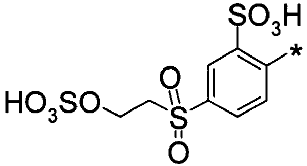 | 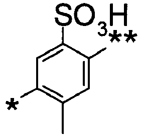 | 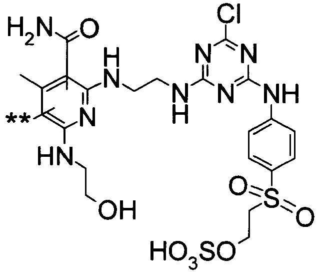 |
| 112 | 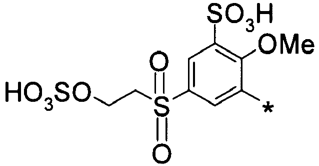 | 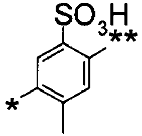 | 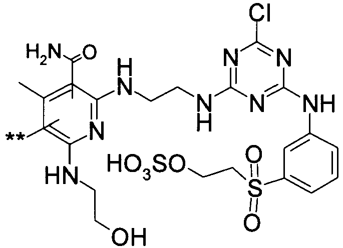 |
| 113 | 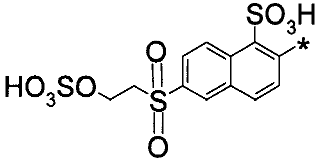 | 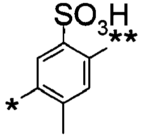 | 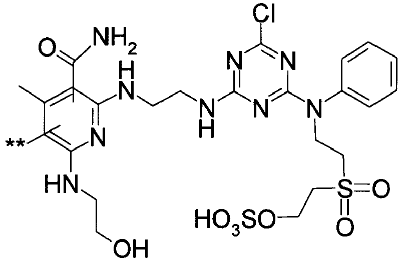 |
| 114 | 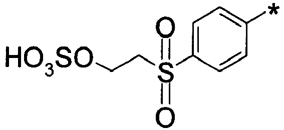 | 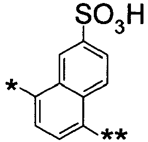 | 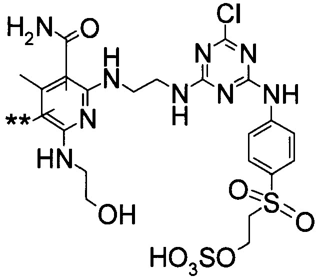 |
| 115 | 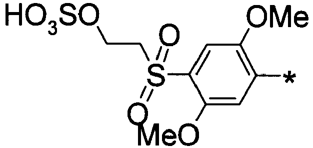 | 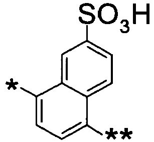 | 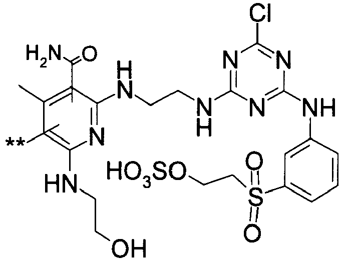 |
| 116 | 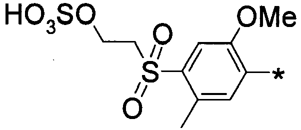 | 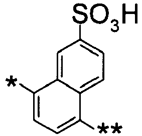 | 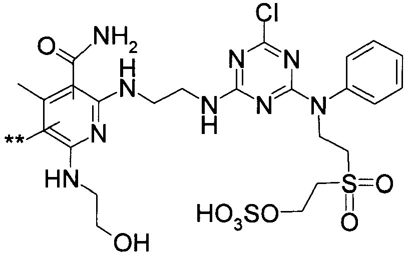 |
| 117 | 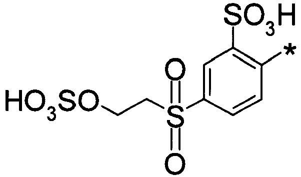 | 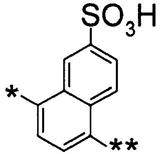 | 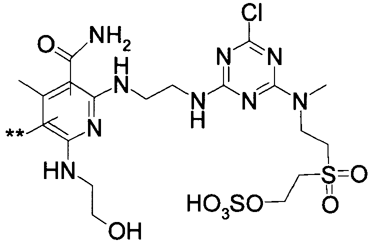 |
| 118 | 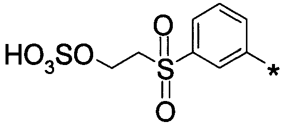 | 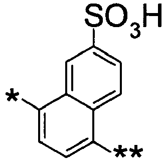 | 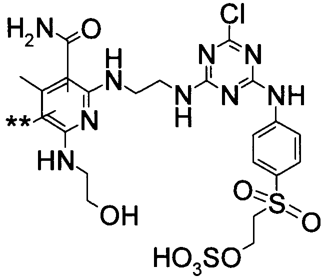 |
| 119 | 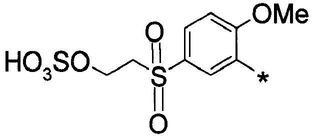 | 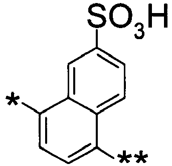 | 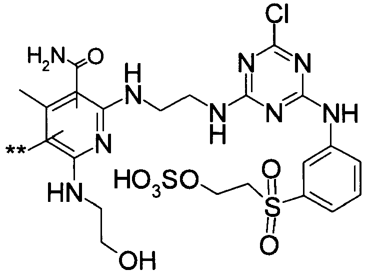 |
| 120 | 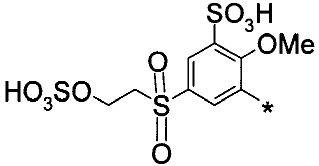 | 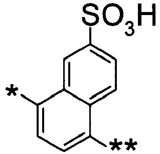 | 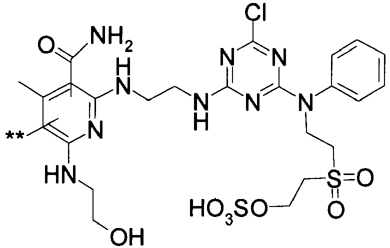 |
| 121 | 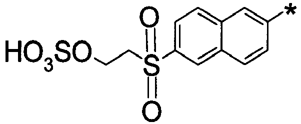 | 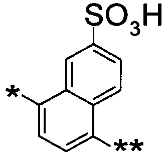 | 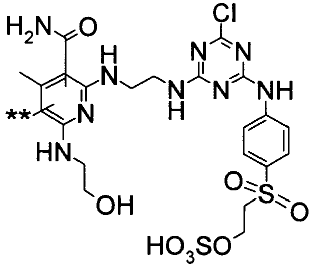 |
| 122 | 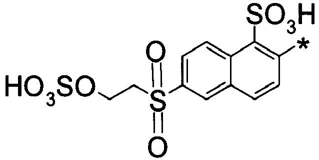 | 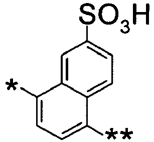 | 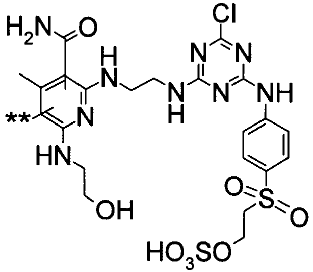 |
| 123 | 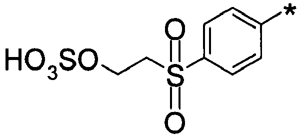 | - | 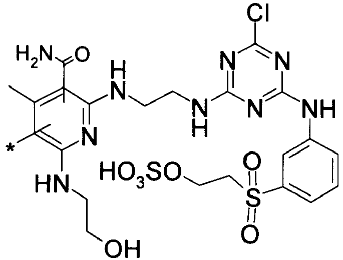 |
| 124 | 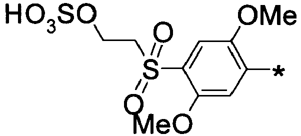 | - | 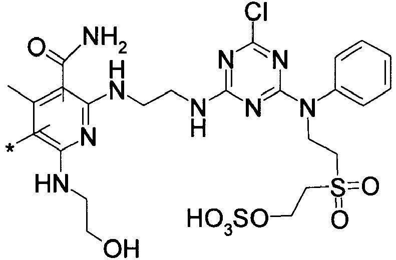 |
| 125 | 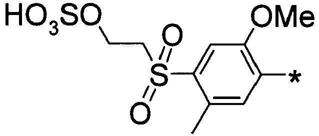 | - | 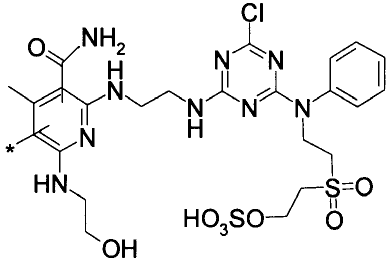 |
| 126 | 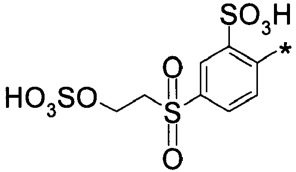 | - | 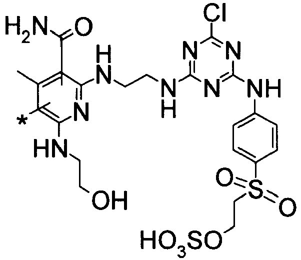 |
| 127 | 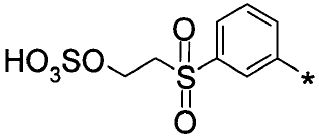 | - | 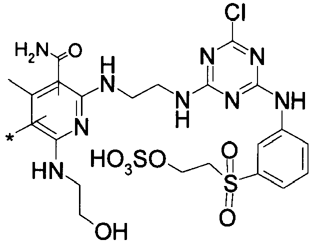 |
| 128 | 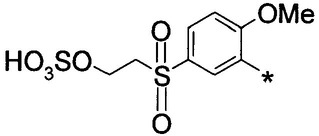 | - | 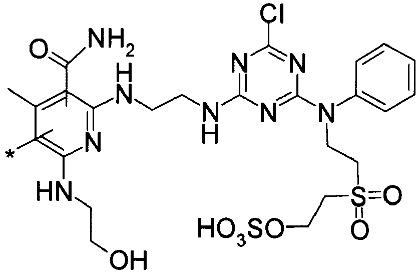 |
| 129 | 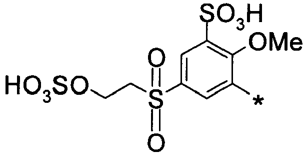 | - | 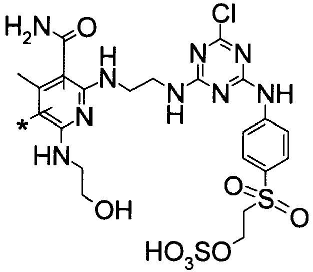 |
| 130 | 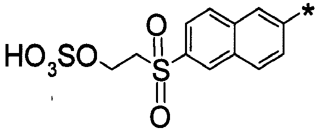 | - | 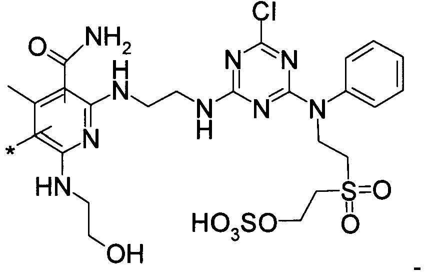 |
| 131 | 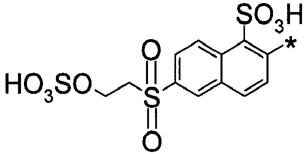 | - | 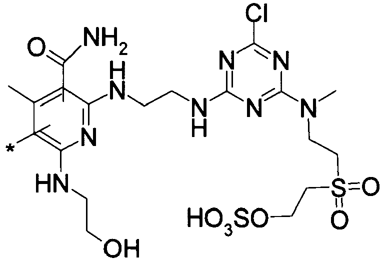 |
| 132 | 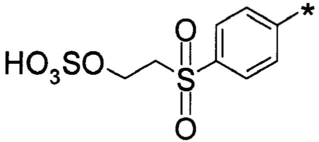 | - | 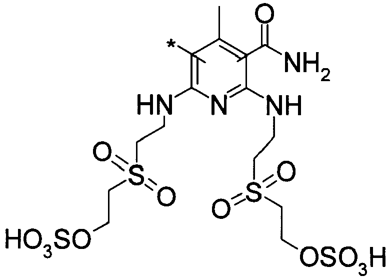 |
| 133 | 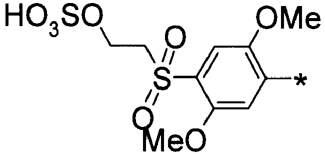 | - | 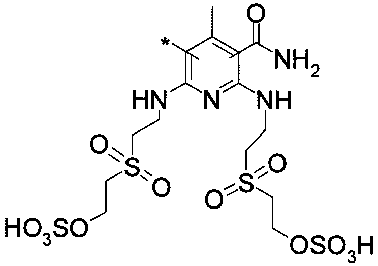 |
| 134 | 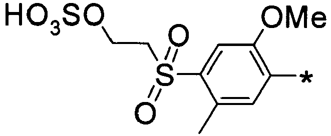 | - | 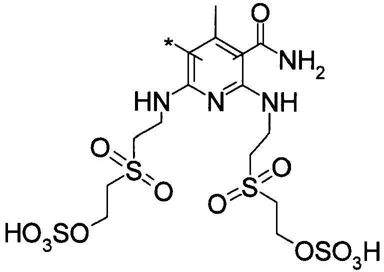 |
| 135 | 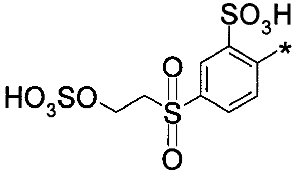 | - | 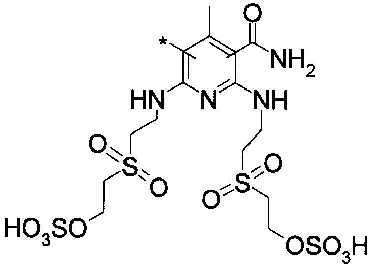 |
| 136 | 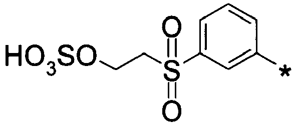 | - | 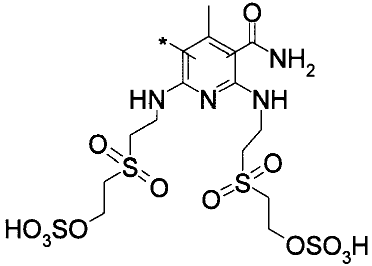 |
| 137 | 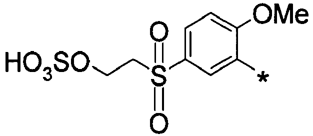 | - | 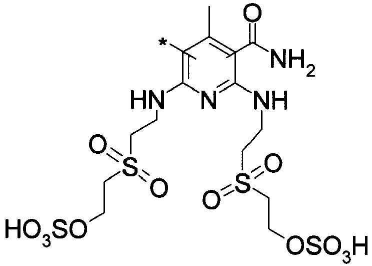 |
| 138 | 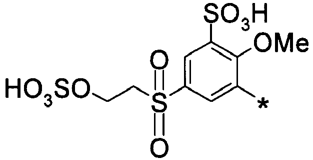 | - | 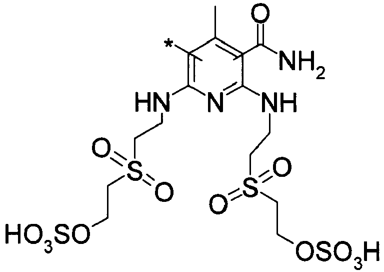 |
| 139 | 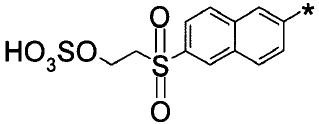 | - | 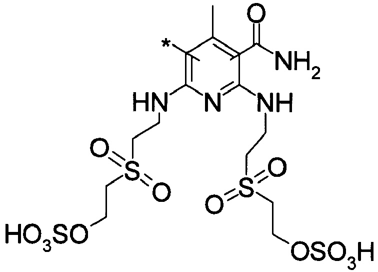 |
| 140 | 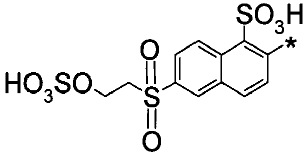 | - | 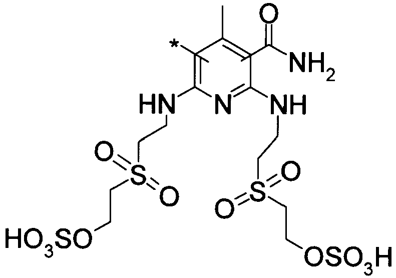 |
| 141 | 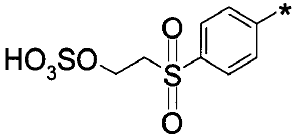 | 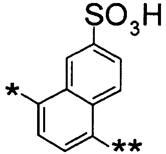 | 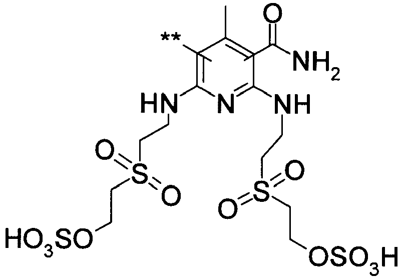 |
| 142 | 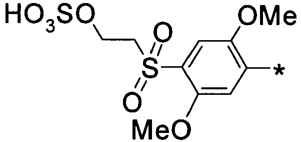 | 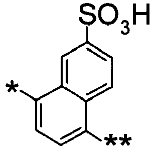 | 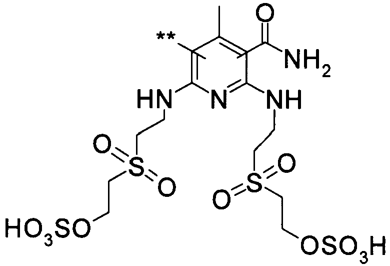 |
| 143 | 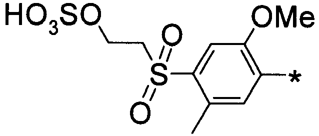 | 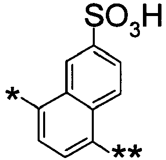 | 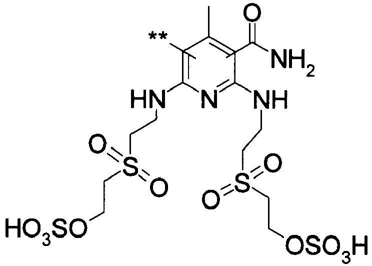 |
| 144 | 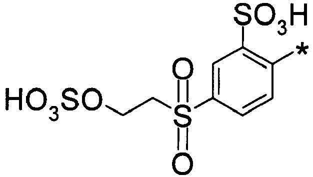 | 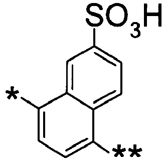 | 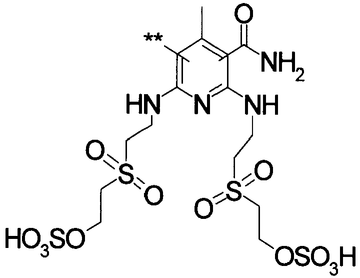 |
| 145 | 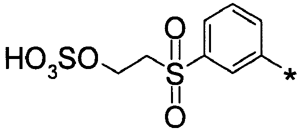 | 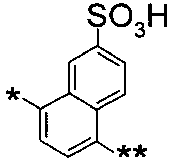 | 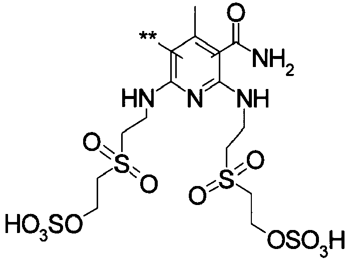 |
| 146 | 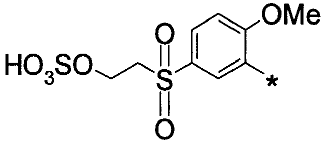 | 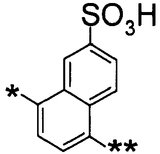 | 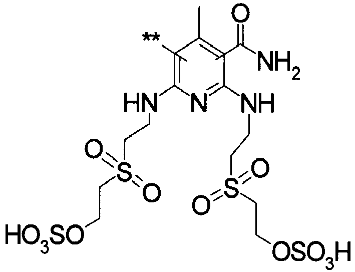 |
| 147 | 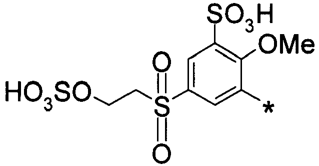 | 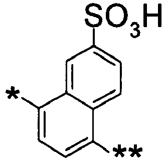 | 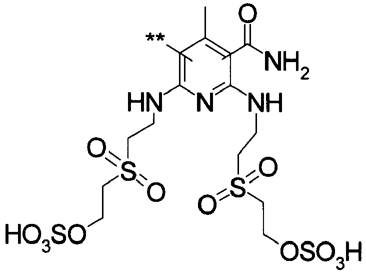 |
| 148 | 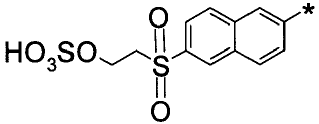 | 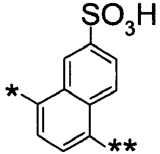 | 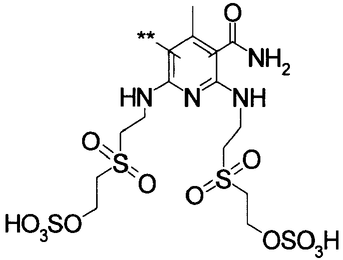 |
| 149 | 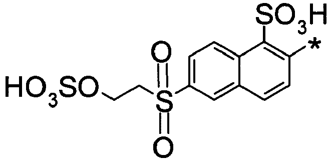 | 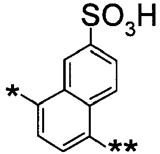 | 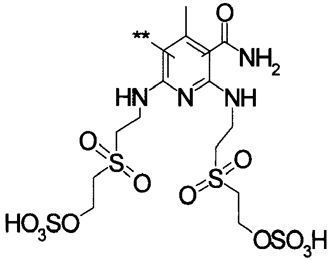 |
| 150 | 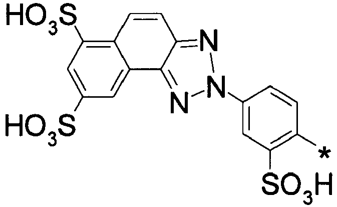 | - | 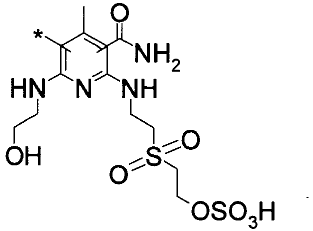 |
| 151 | 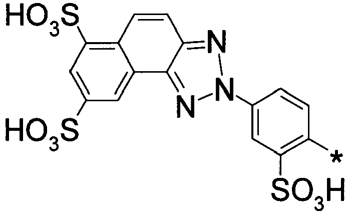 | 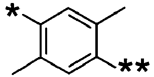 | 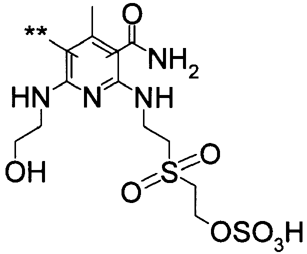 |
| 152 | 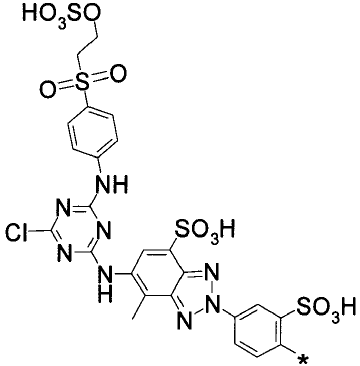 | 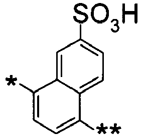 | 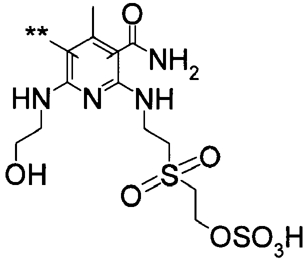 |
| 153 | 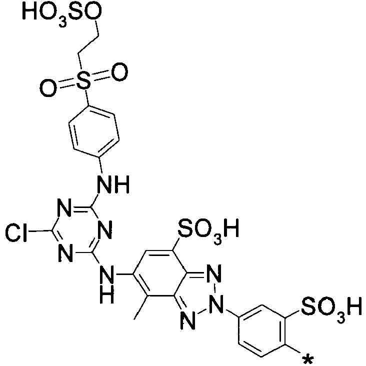 | - | 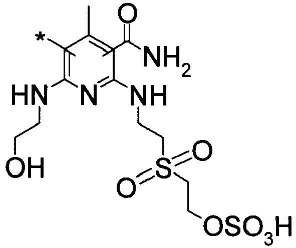 |
| 154 | 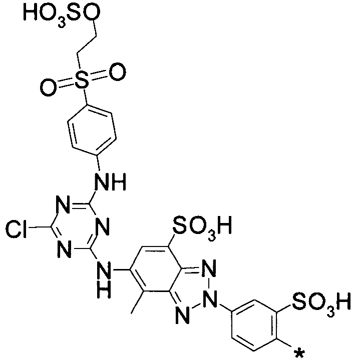 | 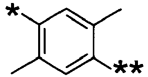 | 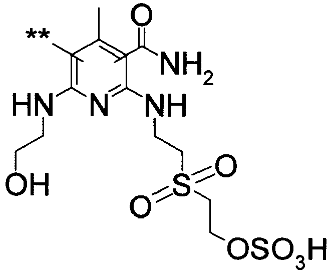 |
| 155 | 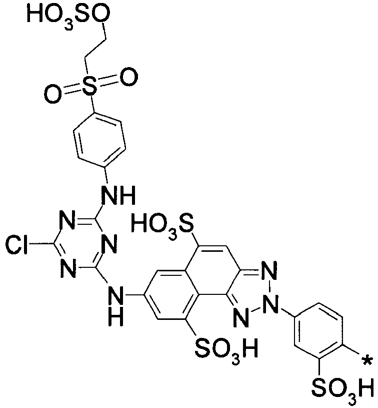 | 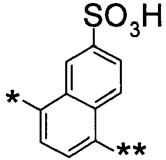 | 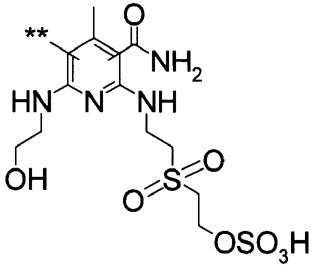 |
| 156 | 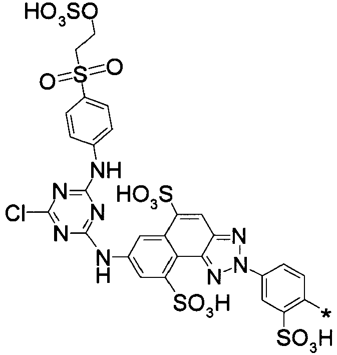 | - | 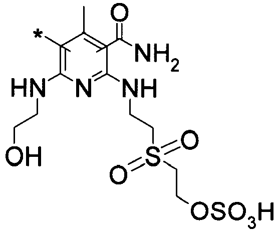 |
| 157 | 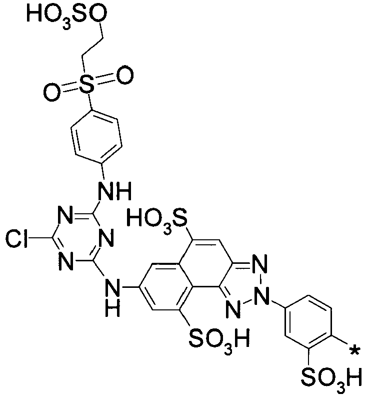 | 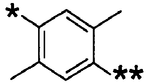 | 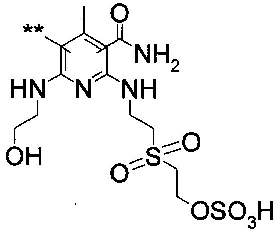 |
| 158 | 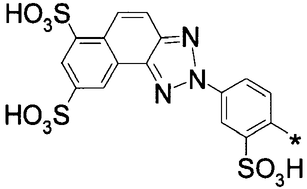 | 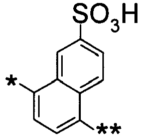 | 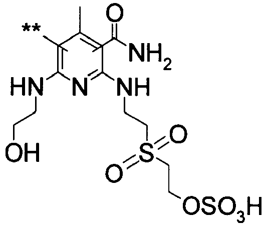 |

*refers to the attachment point of B⁴ and of the rest containing K⁸ when n is an integer of 0;
*refers to the attachment point between B⁴ and A⁴;
**refers to the attachment point of A⁴ and of the rest containing K⁸ when n is an integer of 1.

The present invention also provides a process for the preparation of the dyes of the formula (I) which comprises diazotization of the compounds of the formula (IV) and reacting the correspondingly obtained diazonium salts with a compound of the formula K to obtain the intermediate of general formula (V). 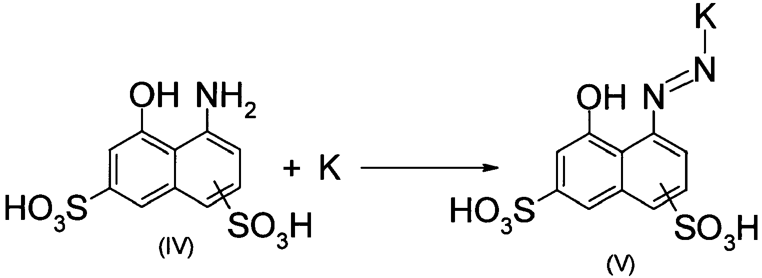 In a further step the diazo component (B-NH₂) is diazotised and coupled onto the intermediate V to obtain the bisazo dye product of general formula (VI).

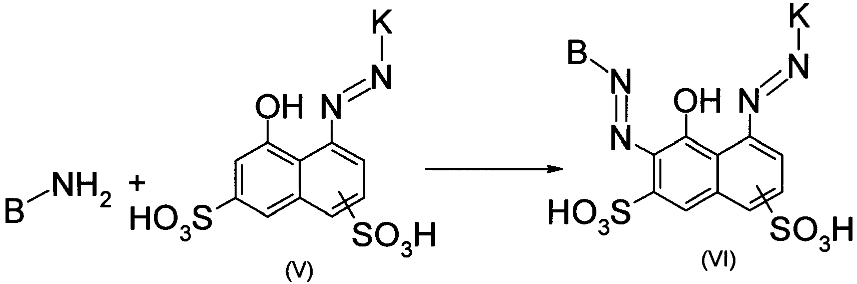

Alternatively, the diazo component (B-NH₂) can be diazotised and coupled onto the compound (A-NH₂) to obtain intermediate (VII). Further, the intermediate (VII) is diazotised and coupled onto compound (V) to obtain the trisazo dye product of general formula (VIII).

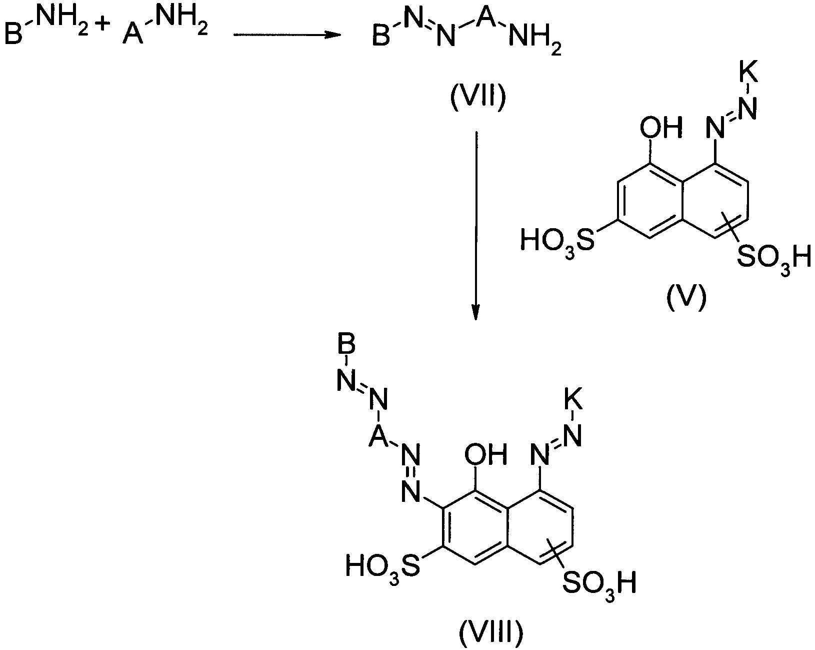

Wherein A, B and K have the same meaning as described above.
The diazotization of the compounds of the formulae (IV), B-NH₂ and (VII) can be performed by means of diazotization methods that are known to a person skilled in the art, preferably by using sodium nitrite or nitrosylsulfuric acid in acidic medium using inorganic acids such as hydrochloric acid, sulfuric acid or phosphoric acid or mixtures thereof or organic acids such as acetic acid or propionic acid or mixtures thereof. Also mixtures of inorganic acid with organic acids can be advantageously used.

The coupling reaction of the diazotized compounds of the formulae (IV), B-NH₂ and (VII) onto the compound of formula (K) and (V) can likewise be performed by known methods.

The compounds of the formula A, B and K are known and commercially available or can be synthesised by means of common chemical reactions known to a person skilled in the art.

The present invention also provides for the use of the present invention's dyes for dyeing or printing of hydroxyl-, amino-, and/or carboxamido-containing material, or a process for dyeing or printing of hydroxyl- and/or carboxamido-containing material whereby a dye is applied to the material and fixed on the material by usual means, the process utilizing a dye in accordance with the present invention.

Hydroxyl-containing materials can be of natural or synthetic origin. Examples are cellulose fiber materials, preferably cotton, linen, hemp, jute and ramie fibers, regenerated cellulose fibers such as preferably staple viscose and filament viscose, chemically modified cellulose fibers, such as for example aminated cellulose fibers, and also polyvinyl alcohols.

Carboxamido-containing materials are for example synthetic and natural polyamides and polyurethanes, for example wool and other animal hairs, silk, leather, nylon-6,6, nylon-6, nylon-11 and nylon-4.

The hydroxyl- and/or carboxamido-containing materials mentioned can be present in various forms. For instance in the form of sheetlike structures, such as paper and leather, in the form of films, such as nylon films, or in the form of a bulk mass, for example composed of polyamide and polyurethane, in particular in the form of fibers, for example cellulose fibers. The fibers are preferably textile fibers, for example in the form of woven fabrics or yarns or in the form of hanks or wound packages.

The dyes of the present invention and their salts or mixtures can be used as a single dyeing product in dyeing or printing processes or it can be part of a di/tri or multicomponent combination product in dyeing or in printing compositions.

Dyes of this invention and their salts or mixtures are highly compatible with other known and/or commercially available dyes and they can be used together with such dyes to obtain specific hues of similarly good technical performance. Technical performance includes build-up, fastness properties and levelness.

The dyes according to the invention can be applied to the materials mentioned, especially the fiber materials mentioned, by the application techniques known for water-soluble dyes. This applies to both, dyeing and printing processes.
It applies in particular to the production of dyeings on fiber materials composed of wool or other natural polyamides or of synthetic polyamides and their mixtures with other fiber material. In general, the material to be dyed is introduced into the bath at a temperature of about 40°C, agitated therein for some time, the dyebath is then adjusted to the desired weakly acidic, preferably weakly acetic acid, pH and the actual dyeing is carried out at a temperature between 60 and 98°C. However, the dyeings can also be carried out at the boil or in sealed dyeing apparatus at temperatures of up to 106°C.

Since the water solubility of the dyes according to the invention is very good, they can also be used with advantage in customary continuous dyeing processes.
The dyes of the present invention can also be used in digital printing processes, in particular in digital textile printing. For this the dyes of the present invention need to be formulated in inks. Aqueous inks for digital printing which comprise a dye in accordance with the present invention likewise form part of the subject matter of the present invention.

The inks of the present invention comprise the dye of the present invention in amounts which preferably range from 0.1% by weight to 50% by weight, more preferably from 1% by weight to 30% by weight and most preferably from 1% by weight to 15% by weight, based on the total weight of the ink.
The inks, as well as the dye of the present invention, may if desired contain further dyes used in digital printing.

For the inks of the present invention to be used in the continuous flow process, a conductivity of 0.5 to 25 mS/m can be set by adding an electrolyte. Useful electrolytes include for example lithium nitrate and potassium nitrate. The inks of the present invention may include organic solvents at a total level of 1-50% and preferably 5-30% by weight. Suitable organic solvents are for example alcohols, for example methanol, ethanol, 1-propanol, isopropanol, 1-butanol, tert-butanol, pentyl alcohol, polyhydric alcohols for example: 1,2-ethanediol, 1,2,3-propanetriol, butanediol, 1,3-butanediol, 1,4-butanediol, 1,2-propanediol, 2,3-propanediol, pentanediol, 1,4-pentanediol, 1,5-pentanediol, hexanediol, D,L-1,2-hexanediol, 1,6-hexanediol, 1,2,6-hexanetriol, 1,2-octanediol, polyalkylene glycols, for example: polyethylene glycol, polypropylene glycol, alkylene glycols having 1 to 8 alkylene groups, for example: monoethylene glycol, diethylene glycol, triethylene glycol, tetraethylene glycol, thioglycol, thiodiglycol, butyltriglycol, hexylene glycol, propylene glycol, dipropylene glycol, tripropylene glycol, low alkyl ethers of polyhydric alcohols, for example: ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol monohexyl ether, triethylene glycol monomethyl ether, triethylene glycol monobutyl ether, tripropylene glycol monomethyl ether, tetraethylene glycol monomethyl ether, tetraethylene glycol monobutyl ether, tetraethylene glycol dimethyl ether, propylene glycol monomethyl ether, propylene glycol monoethyl ether, propylene glycol monobutyl ether, tripropylene glycol isopropyl ether, polyalkylene glycol ethers, such as for example: polyethylene glycol monomethyl ether, polypropylene glycol glycerol ether, polyethylene glycol tridecyl ether, polyethylene glycol nonylphenyl ether, amines, such as for example: methylamine, ethylamine, triethylamine, diethylamine, dimethylamine, trimethylamine, dibutylamine, diethanolamine, triethanolamine, N-acetylethanolamine, N-formylethanolamine, ethylenediamine, urea derivatives, such as for example: urea, thiourea, N-methylurea, N,N'-epsilon dimethylurea, ethyleneurea, 1,1,3,3-tetramethylurea, amides, such as for example: dimethylformamide, dimethylacetamide, acetamide, ketones or keto alcohols, such as for example: acetone, diacetone alcohol, cyclic ethers, such as for example: tetrahydrofuran, trimethylolethane, trimethylolpropane, 2-butoxyethanol, benzyl alcohol, 2-butoxyethanol, gamma butyrolactone, epsilon-caprolactam, further sulfolane, dimethylsulfolane, methylsulfolane, 2,4-dimethylsulfolane, dimethyl sulfone, butadiene sulfone, dimethyl sulfoxide, dibutyl sulfoxide, N-cyclohexylpyrrolidone, N-methyl-2-pyrrolidone, N-ethylpyrrolidone, 2-pyrrolidone, 1-(2-hydroxyethyl)-2-pyrrolidone, 1-(3-hydroxypropyl)-2-pyrrolidone, 1,3-dimethyl-2-imidazolidinone, 1,3-dimethyl-2-imidazolinone, 1,3-bismethoxymethylimidazolidine, 2-(2-methoxyethoxy)ethanol, 2-(2-ethoxyethoxy)ethanol, 2-(2-butoxyethoxy)ethanol, 2-(2-propoxyethoxy)ethanol, pyridine, piperidine, butyrolactone, trimethylpropane, 1,2-dimethoxypropane, dioxane ethyl acetate, ethylenediaminetetraacetate ethyl pentyl ether, 1,2-dimethoxypropane and trimethylpropane.
The inks of the invention may further include customary additives, for example viscosity moderators to set viscosities in the range from 1.5 to 40.0 mPas in a temperature range from 20 to 50°C. Preferred inks have a viscosity of 1.5 to 20 mPas and particularly preferred inks have a viscosity of 1.5 to 15 mPas.

Useful viscosity moderators include rheological additives, for example: polyvinylcaprolactam, polyvinylpyrrolidone and their copolymers polyetherpolyol, associative thickeners, polyurea, polyurethane, sodium alginates, modified galactomannans, polyetherurea, polyurethane, nonionic cellulose ethers.

As further additives the inks of the invention may include surface-active substances to set surface tensions of 20 to 65 mN/m, which are adapted if necessary as a function of the process used (thermal or piezo technology). Useful surface-active substances include for example: all surfactants, preferably nonionic surfactants, butyldiglycol, 1,2-hexanediol.

The inks of the present invention may further include customary additives, for example substances to inhibit fungal and bacterial growth in amounts from 0.01 to 1% by weight based on the total weight of the ink.

The inks may be prepared in a conventional manner by mixing the components in water.

The inks of the invention are particularly useful in inkjet printing processes for printing a wide variety of pretreated materials, such as silk, leather, wool, polyamide fibers and polyurethanes, and cellulosic fiber materials of any kind. Blend fabrics, for example blends of cotton, silk, wool with polyester fibers or polyamide fibers can similarly be printed.

In contrast to conventional textile printing, where the printing ink already contains all necessary chemicals, in digital or inkjet printing the auxiliaries have to be applied to the textile substrate in a separate pretreatment step.

The pretreatment of the textile substrate, for example cellulose and regenerated cellulose fibers and also silk and wool, is effected with an aqueous alkaline liquor prior to printing. In addition there is a need for thickeners to prevent flowing of the motives when the printing ink is applied, for example sodium alginates, modified polyacrylates or highly etherified galactomannans.

These pretreatment reagents are uniformly applied to the textile substrate in a defined amount using suitable applicators, for example using a 2- or 3-roll pad, contactless spraying technologies, by means of foam application or using appropriately adapted inkjet technologies, and subsequently dried.

## Claims

1. Chemical compound of formula (I): 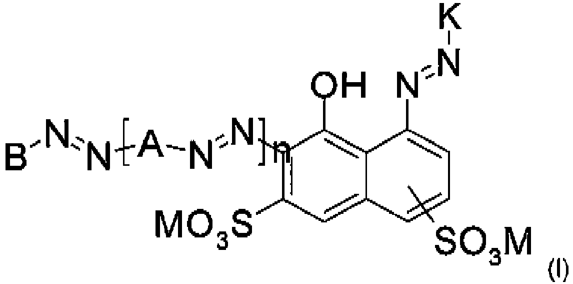 wherein
n is 0 or 1,
A is a radical of a middle component as described below,
B is a radical of a diazo component as described below,
M is hydrogen, sodium, potassium, lithium or ammonium,
K is a coupling component of general formula (K2): 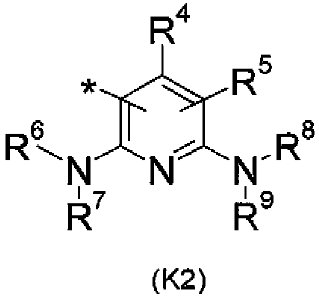 wherein,
R⁴ is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkyl monoarylamino, monoalkyl monoaryl amino, alkylthio, arylthio,
or
are alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido or phenylureido,
R⁵ is cyano, carbamoyl, alkoxycarbonyl, trifluoromethyl, carbonyltrifluoromethyl, halogen, sulfomethyl or -SO₃M,
R⁶ to R⁹ independent from each other
are hydrogen, alkyl, alkenyl, cycloalkyl, trifluoromethyl, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkylsulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N,N-dicycloalkylamino, N-alkyl-N-cycloalkyl-amino, N-aryl-Ncycloalkyl-amino, N-heteroarylamino, N-heterocycloalkylamino or hydroxyakylsulfonylalkyl,
or
alkyl interrupted by one or more heteroatoms such as oxygen or sulfur,
or
alkyl substituted by one or more substituents selected from the group consisting of hydroxy, aryl, cycloalkyl, alkoxy, thioalkoxy, amino, N-monoalkyl-amino, N,N-dialkyl amino, N-monoaryl-amino, N,N-diaryl-amino, N-alkyl-N-aryl-amino, N-monocyclo alkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl sulfamoyl, N,N-diaryl-sulfamoyl, N-monocycloalkyl-N-monoarylsulfamoyl, N-monoalkyl- N-monoarylsulfamoyl or SO₃M,
or
alkyl or aryl substituted by -SO₂X, whereby
X is vinyl or a radical -CH₂CH₂-Y where Y is a group removable under alkaline conditions such as OSO₃M, SSO₃M, OCOCH₃, OPO₃M or halogen, and whereby, in the general formula K2 the point of attachment and R⁵ can be positioned ortho or para to the amino rest bearing the substituents R⁶ and R⁷, meaning that when the point of attachment is positioned ortho to amino rest bearing the substituents R⁶ and R⁷, R⁵ is positioned para to the same, and
vice versa,
whereby
T is a reactive anchor of one of general formulae (T1) to (T3), 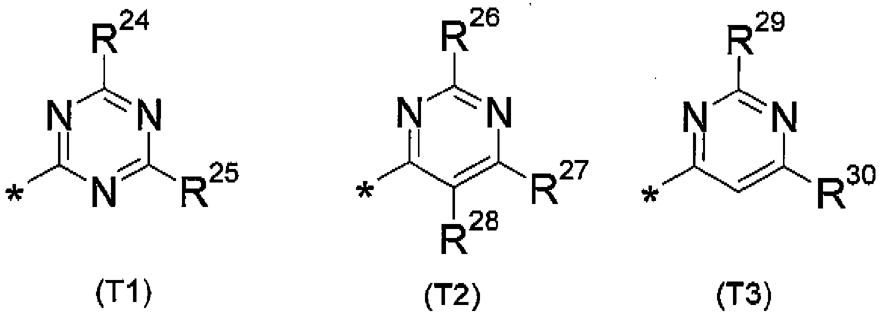 wherein
R²⁴ and R²⁵, independent from each other are halogen or 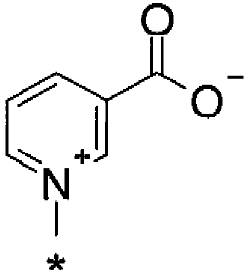 R²⁶, R²⁷, R²⁸, R²⁹ and R³⁰, independent from each other are halogen,
or
each of R²⁴, R²⁶, R²⁶, R²⁷, R²⁸, R²⁹ and R³⁰, independent from each other are substituted by one of the groups selected from general formulae (1a) to (1c), 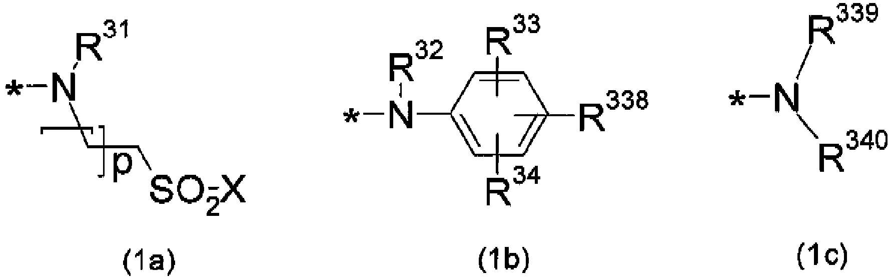 wherein
R³¹, R³², R³³⁹ and R³⁴⁰, independent from one another, are hydrogen, alky, phenyl or phenyl substituted by one member of the group selected from alkyl, alkoxy, halogen, or -SO₃M, alkenyl, cycloalkyl, trifluoromethyl, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkylsulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N,N-dicycloalkylamino, N-alkyl-N-cycloalkyl-amino, N-aryl-N-cycloalkyl-amino, N-heteroarylamino, N-heterocycloalkylamino or hydroxyakylsulfonylalkyl,
or
are alkyl interrupted by one or more heteroatoms such as oxygen or sulfur,
or
are alkyl substituted by one or more substituents selected from the group consisting of hydroxy, aryl, cycloalkyl, alkoxy, thioalkoxy, amino, N-monoalkyl-amino, N,N-dialkyl amino, N-monoaryl-amino, N,N-diaryl-amino, N-alkyl-N-aryl-amino, N-monocyclo alkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl sulfamoyl, N,N-diaryl-sulfamoyl, N-monocycloalkyl-N-monoarylsulfamoyl, N-monoalkyl- N-monoarylsulfamoyl or SO₃M,
R³³, R³⁴ and R³³⁸, independent from each other, are hydrogen, alkyl, alkoxyl, halogen, trifluoromethyl, cyano, nitro, ester, carbamoyl, SO₃M or -SO₂X, where M is hydrogen, sodium, potassium, lithium or ammonium,
X is vinyl or a radical -CH₂CH₂-Y where Y is a group removable under alkaline conditions such as OSO₃M, SSO₃M, OCOCH₃, OPO₃M or halogen,
p is an integer from 1 to 5,
R¹³ and R¹⁵, independent from each other, are hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkyl monoarylamino, monoalkyl monoaryl amino, alkylthio, arylthio,
or
are alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido or phenylureido,
R¹², R¹⁶ and R²², independent from each other, are cyano, carbamoyl, alkoxycarbonyl, trifluoromethyl, carbonyltrifluoromethyl, halogen, methyl sulfonyl or -SO₃M,
R¹⁴, R¹⁷ to R²⁰ and R²³, independent from each other, are hydrogen, alkyl, alkenyl, cycloalkyl, trifluoromethyl, carbonyltrifluoromethyl, halogen, methyl sulfonyl or -SO₃M, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkylsulfamoyl, N,N-dialkyl-sulfamoyl, N-monoaryl-sulfamoyl, N,N-diaryl-sulfamoyl, N-monocycloalkyl-N-monoarylaulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N,N-dicycloalkylamino, N-alkyl-N-cycloalkyl-amino, N-aryl-Ncycloalkyl-amino, N-heteroarylamino, N-heterocycloalkylamino or hydroxyakylsulfonylalkyl,
or
are alkyl interrupted by one or more heteroatoms such as oxygen or sulfur,
or
alkyl substituted by one or more substituents selected from the group consisting of hydroxy, aryl, cycloalkyl, alkoxy, thioalkoxy, amino, N-monoalkyl-amino, N,N-dialkyl amino, N-monoaryl-amino, N,N-diaryl-amino, N-alkyl-N-aryl-amino, N-monocyclo alkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl sulfamoyl, N,N-diaryl-sulfamoyl, N-monocycloalkyl-N-monoarylsulfamoyl, N-monoalkyl- N-monoarylsulfamoyl or SO₃M, R²¹ is hydroxyl or amino group, And whereby, in the general formula K5 the point of attachment and R¹⁶ can be positioned ortho or para to the amino rest bearing the substituents R¹⁷ and R¹⁸, meaning that when the point of attachment is positioned ortho to amino rest bearing the substituents R¹⁷ and R¹⁸, R¹⁶ is positioned para to the same, and vice versa,
A is the middle component based on phenylene or napthylene and has the general formula (A1) or (A2), 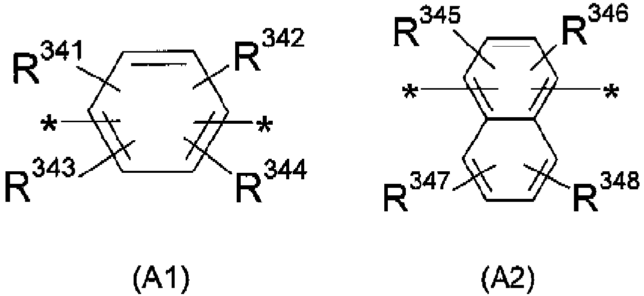 wherein
R³⁴¹ to R³⁴⁸, independent from one another, are hydrogen, alkyl, alkyl substituted, alkyl chain interrupted by one or two heteroatoms, alkoxy, alkoxy substituted, halogen, trifluoromethyl; cycloalkyl; heterocycloalkyl; cyano; nitro; acyloxy; alkylcarbonyl, acylamino; aryloylamino, cinnamoylamino, alkylsulfonylamino; alkylthio; alkylsulfonyl, alkoxycarbonyl, carbamoyl, sulfamoyl, ureido, alkylureido, SO₃M, COOM; or a group of formulae (2a) to (2c), 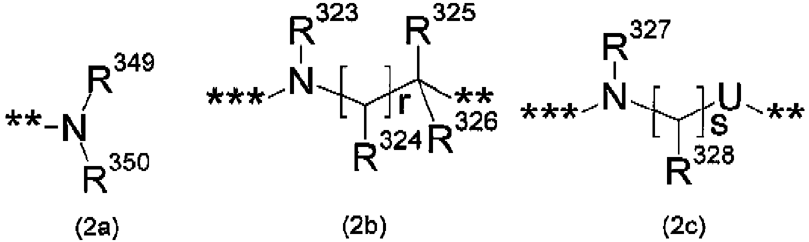
whereby, R³⁴⁹ and R³⁵⁰ independent from each other, are hydrogen, alkyl, alkyl substituted by SO₃M, alkyl chain interrupted by one or two heteroatoms, or T, whereby T has the same meaning as above;
U is -O-, -S- or -N(R³²⁹)-;
R³²³, R³²⁷ and R³²⁹, independent from one another, are hydrogen, alkyl, alkyl substituted by SO₃M, alkyl chain interrupted by one or two heteroatoms;
R³²⁴, R³²⁵, R³²⁶ and R³²⁸, independent from one another are hydrogen, alkyl or alkyl chain interrupted by one or two heteroatoms;
r is an integer of 0 to 6;
s is an integer of 1 to 6;
** refers to attachment point with A1 and A2;
*** refers to attachment point with T
B is the diazo component and has one of the general formulae (B1) or (B2), 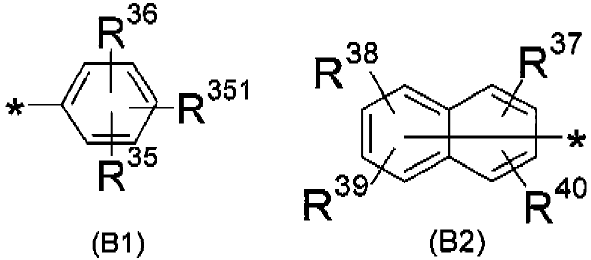 wherein
R³⁵ to R⁴⁰ and R³⁵¹, independent from one another, are hydrogen or alkyl, alkoxy, halogen, cyano, -SO₃M, trifluoromethyl, nitro, ester, NHC(O)R⁴¹, CONH₂, S(O)₂R⁴², -SO₂X or one of the general formulae (E1) to (E3),
wherein R⁴¹ and R⁴², independent from one another, are hydrogen, alkyl or alkyl substituted by hydroxy or halogen, and
wherein (E1) to (E3) are 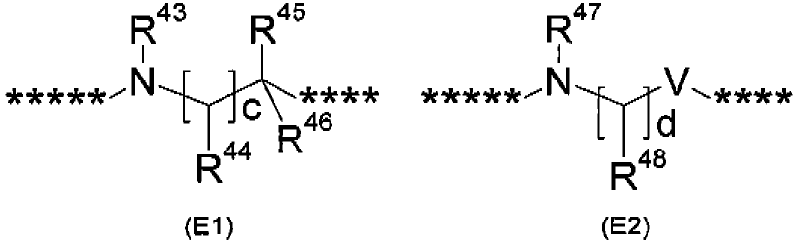 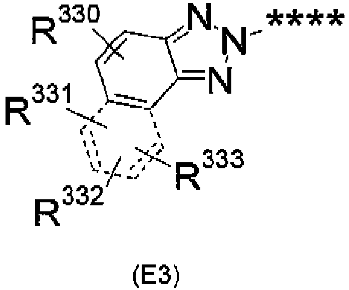 wherein
V is -O-, -S- or -N(R³⁵²)-;
R⁴³, R⁴⁷ and R³⁵², independent from one another are hydrogen, alkyl, alkyl substituted by SO₃M, alkyl chain interrupted by one or two heteroatoms;
R⁴⁴, R⁴⁵, R⁴⁶ and R⁴⁸, independent from one another are hydrogen, alkyl or alkyl chain interrupted by one or two heteroatoms;
R³³⁰, R³³¹, R³³² and R³³³, independent from one another are hydrogen or alkyl, alkoxy, halogen, cyano, -SO₃M, trifluoromethyl, nitro, ester, NHC(O)R³³⁴, CONH₂, S(O)₂R³³⁵ or a group of formula (3a); 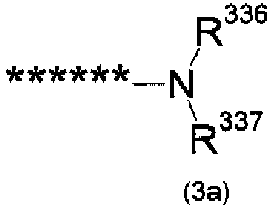
R³³⁶ and R³³⁷, independent from one another are hydrogen, alkyl, alkenyl, cycloalkyl, trifluoromethyl, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkylsulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N;N-dicycloalkylamino, N-alkyl-N-cycloalkyl-amino, N-aryl-Ncycloalkyl-amino, N-heteroarylamino, N-heterocycloalkylamino or hydroxyakylsulfonylalkyl,
or
are alkyl interrupted by one or more heteroatoms such as oxygen or sulfur; or
are alkyl substituted by one or more substituents selected from the group consisting of hydroxy, aryl, cycloalkyl, alkoxy, thioalkoxy, amino, N-monoalkyl-amino, N,N-dialkyl amino, N-monoaryl-amino, N,N-diaryl-amino, N-alkyl-N-aryl-amino, N-monocyclo alkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl sulfamoyl, N,N-diaryl-sulfamoyl, N-monocycloalkyl-N-monoarylsulfamoyl, N-monoalkyl- N-monoarylsulfamoyl or SO₃M;
containing a rest with free valence to link to rest reactive anchor T;
R⁴¹, R⁴², R³³⁴ and R³³⁵, independent from one another, are hydrogen, alkyl or alkyl substituted by hydroxy or halogen;
c is an integer of 0 to 6
d is an integer of 1 to 6
**** refers to attachment point with B1 and B2
***** refers to attachment point with T
******refers to attachement point with E3
T and X are the same as defined above;
with the general proviso that the dyes of general formula (I) contain at least one reactive anchor.

2. Chemical compound according to claim 1, having one of formulae (Iy) to (Iab) and mixtures thereof: 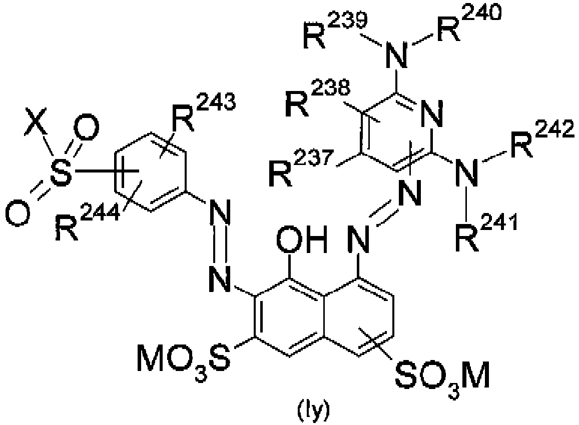 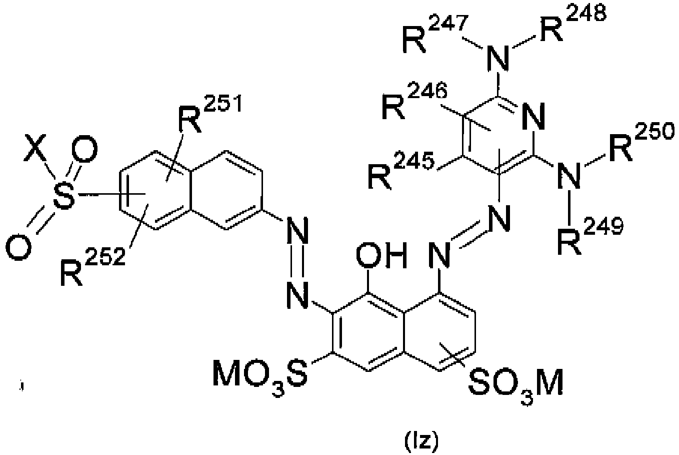 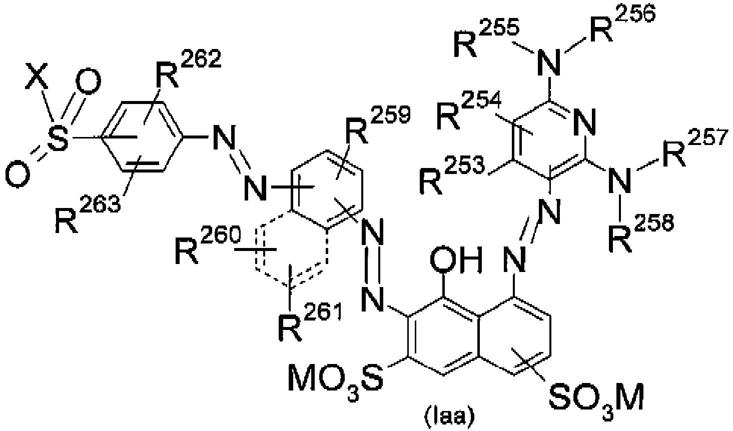 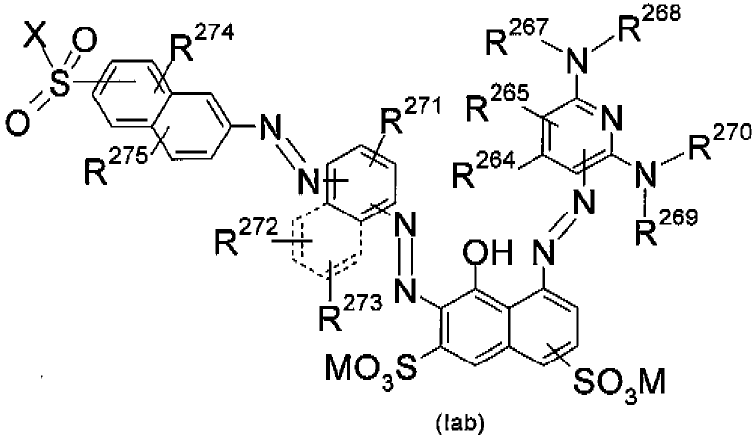 wherein
R²³⁷, R²⁴⁵, R²⁵³ and R²⁶⁴ independent from each other, are hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkyl monoarylamino, monoalkyl monoaryl amino, alkylthio, arylthio,
or
are alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido or phenylureido,
R²³⁸, R²⁴⁶, R²⁵⁴ and R²⁶⁵ independent from each other, are cyano, carbamoyl, alkoxycarbonyl, trifluoromethyl, carbonyltrifluoromethyl, halogen, methyl sulfonyl or -SO₃M,
R²³⁹ to R²⁴², R²⁴⁷ to R²⁵⁰, R²⁵⁵ to R²⁵⁸ and R²⁶⁷ to R²⁷⁰, independent from each other, are hydrogen, alkyl, alkenyl, cycloalkyl, trifluoromethyl, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkylsulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N,N-dicycloalkylamino, N-alkyl-N-cycloalkyl-amino, N-aryl-Ncycloalkyl-amino, N-heteroarylamino, N-heterocycloalkylamino or hydroxyakylsulfonylalkyl
or
are alkyl interrupted by one or more heteroatoms such as oxygen or sulfur
or
are alkyl substituted by one or more substituents selected from the group consisting of hydroxy, aryl, cycloalkyl, alkoxy, thioalkoxy, amino, N-monoalkyl-amino, N,N-dialkyl amino, N-monoaryl-amino, N,N-diaryl-amino, N-alkyl-N-aryl-amino, N-monocyclo alkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoaryloarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl sulfamoyl, N,N-diaryl-sulfamoyl, N-monocycloalkyl-N-monoarylsulfamoyl, N-monoalkyl- N-monoaryl-sulfamoyl or SO₃M, or alkyl contains a rest with free valence to link to rest reactive anchor T,
R²⁴³, R²⁴⁴, R²⁶¹, R²⁵², R²⁶², R²⁶³, R²⁷⁴ and R²⁷⁵, independent from one another, are hydrogen or alkyl, alkoxy, halogen, cyano, -SO₃M, trifluoromethyl, nitro, ester, NHC(Q)R²⁷⁶, CONH₂, S(O)₂R²⁷⁷ or -SO₂X,
R²⁷⁶ and R²⁷⁷, independent from one another, are hydrogen, alkyl or alkyl substituted by hydroxy or halogen,
R²⁵⁹ to R²⁶¹ and R²⁷¹ to R²⁷³, independent from one another, are hydrogen, alkyl, alkyl substituted, alkyl chain interrupted by one or two heteroatoms, alkoxy, alkoxy substituted, halogen, trifluoromethyl, cycloalkyl, heterocycloalkyl, cyano, nitro, acyloxy, alkylcarbonyl, acylamino, aryloylamino, cinnamoylamino, alkylsulfonylamino, alkylthio, alkylsulfonyl, alkoxycarbonyl, carbamoyl, sulfamoyl, ureido, alkylureido, SO₃M, COOM, or a group of formulae (2a) to (2c): 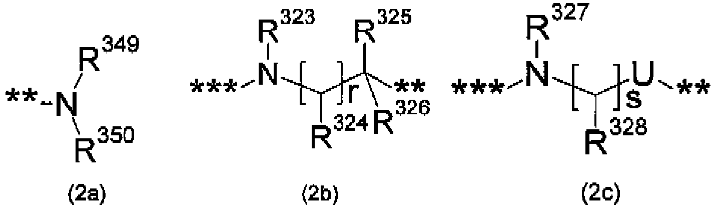
wherein R³⁴⁹ and R³⁵⁰ independent from each other, are hydrogen, alkyl, alkyl substituted by SO₃M, alkyl chain interrupted by one or two heteroatoms, or T, whereby T has the same meaning as above,
U is -O-, -S- or -N(R³²⁹)-,
R³²³, R³²⁷ and R³²⁹, independent from one another, are hydrogen, alkyl, alkyl substituted by SO₃M, alkyl chain interrupted by one or two heteroatoms R³²⁴, R³²⁵, R³²⁶ and R³²⁸, independent from one another are hydrogen, alkyl or alkyl chain interrupted by one or two heteroatoms
r is an integer of 0 to 6,
s is an integer of 1 to 6,
** refers to attachment point with Aland A2,
*** refers to attachment point with T,
and
M, T and X are as defined in claim 1.

3. Chemical compound according to claim 1 having one of formulae (Iac) to (Iaf) and mixtures thereof: 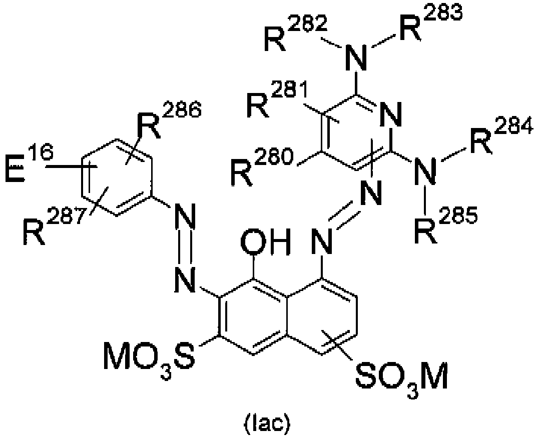 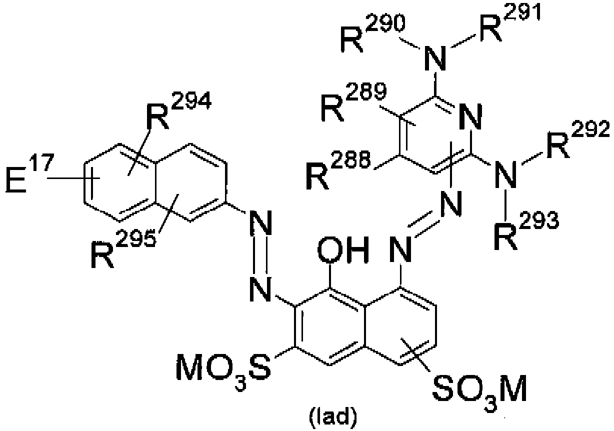 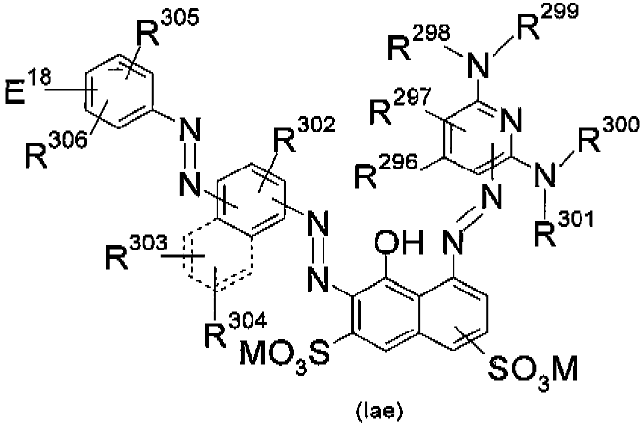 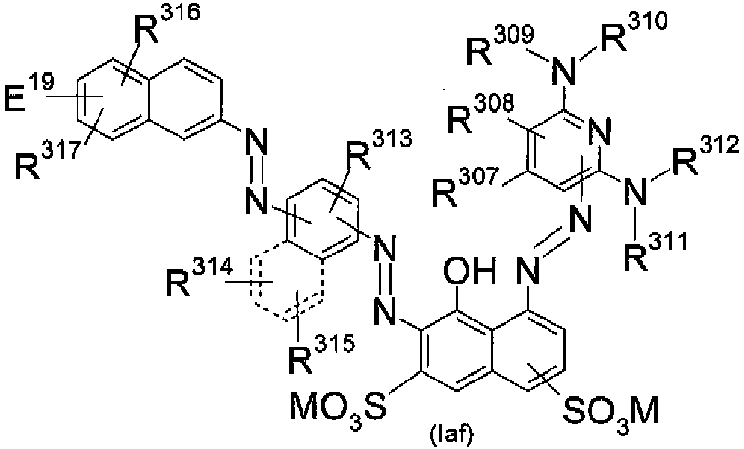 wherein
R²⁸⁰, R²⁸⁸, R²⁹⁶ and R³⁰⁷ independent from each other, are hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkyl monoarylamino, monoalkyl monoaryl amino, alkylthio, arylthio,
or
are alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido or phenylureido,
R²⁸¹, R²⁸⁹, R²⁹⁷ and R³⁰⁸ are cyano, carbamoyl, alkoxycarbonyl, trifluoromethyl, carbonyltrifluoromethyl, halogen, methyl sulfonyl or -SO₃M,
R²⁸² to R²⁸⁵ , R²⁹⁰ to R²⁹³, R²⁹⁸ to R³⁰¹ and R³⁰⁹ to R³¹², independent from each other, are hydrogen, alkyl, alkenyl, cycloalkyl, trifluoromethyl, aryl, heteroaryl, heterocycloalkyl, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoarylcarbamoyl, sulfamoyl, N-monocycloalkyl-sulfamoyl, N-monoalkyl-sulfamoyl, N,N-dicycloalkylsulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoaryl-sulfamoyl, amino, N-acylamino, N-thioacylamino, ureido, alkylureido, phenylureido, N-monoalkylamino, N,N-dialkyl-amino, N-arylamino, N,N-diarylamino, N-alkyl-N-aryl-amino, N-monocycloalkylamino, N,N-dicycloalkylamino, N-alkyl-N-cycloalkyl-amino, N-aryl-Ncycloalkyl-amino, N-heteroarylamino, N-heterocycloalkylamino or hydroxyl-alkylsulfonylalkyl
or
are alkyl interrupted by one or more heteroatoms such as oxygen or sulfur
or
are alkyl substituted by one or more substituents selected from the group consisting of hydroxy, aryl, cycloalkyl, alkoxy, thioalkoxy, amino, N-monoalkyl-amino, N,N-dialkyl amino, N-monoaryl-amino, N,N-diaryl-amino, N-alkyl-N-aryl-amino, N-monocyclo alkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl sulfamoyl, N,N-diaryl-sulfamoyl, N-monocycloalkyl-N-monoarylsulfamoyl, N-monoalkyl- N-monoarylsulfamoyl or SO₃M, or alkyl contains a rest with free valence to link to rest reactive anchor T,
R²⁸⁶, R²⁸⁷, R²⁹⁴, R²⁹⁵, R³⁰⁵, R³⁰⁶, R³¹⁶ and R³¹⁷, independent from one another, are hydrogen or alkyl, alkoxy, halogen, cyano, -SO₃M, trifluoromethyl, nitro, ester, NHC(O)R³¹⁸, CONH₂, S(O)₂R³¹⁹ or -SO₂X,
R³¹⁸ and R³¹⁹, independent from one another are hydrogen, alkyl or alkyl substituted by hydroxy or halogen,
R³⁰² to R³⁰⁴ and R³¹³ to R³¹⁵, independent from one another, are hydrogen, alkyl, alkyl substituted, alkyl chain interrupted by one or two heteroatoms, alkoxy, alkoxy substituted, halogen, trifluoromethyl, cycloalkyl, heterocycloalkyl, cyano, nitro, acyloxy, alkylcarbonyl, acylamino, aryloylamino, cinnamoylamino, alkylsulfonylamino, alkylthio, alkylsulfonyl, alkoxycarbonyl, carbamoyl, sulfamoyl, ureido, alkylureido, SO₃M, COOM, or a group of formulae (2a) to (2c): 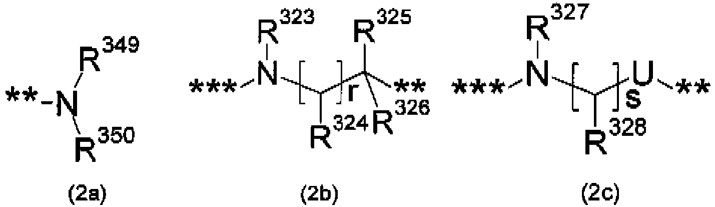
wherein R³⁴⁹ and R³⁵⁰ independent from each other, are hydrogen, alkyl, alkyl substituted by SO₃M, alkyl chain interrupted by one or two heteroatoms, or T, whereby T has the same meaning as above,
U is -O-, -S- or -N(R³²⁹)-,
R³²³, R³²⁷ and R³²⁹, independent from one another, are hydrogen, alkyl, alkyl substituted by SO₃M, alkyl chain interrupted by one or two heteroatoms R³²⁴, R³²⁵, R³²⁶ and R³²⁸, independent from one another are hydrogen, alkyl or alkyl chain interrupted by one or two heteroatoms
r is an integer of 0 to 6,
s is an integer of 1 to 6,
** refers to attachment point with Aland A2,
*** refers to attachment point with T,
E¹⁶ to E¹⁹, independent from each other, are a group of general formulae (E1) to (E3),
M, T and X are as defined in claim 1.

4. Chemical composition consisting of two or more chemical compounds according to any one of claims 1 to 3.

5. Chemical composition comprising one or more chemical compounds according to any one of claims 1 to 3.

6. Aqueous solution for dying comprising one or more chemical compounds according to any one of claims 1 to 3.

7. Process for the production of chemical compounds according to formula (I) of claim 1 comprising the steps:
a) diazotizing compounds of formula (IV),
b) reacting the diazonium salts obtained in step a) with a compound of formula K to obtain an intermediate of formula (V) 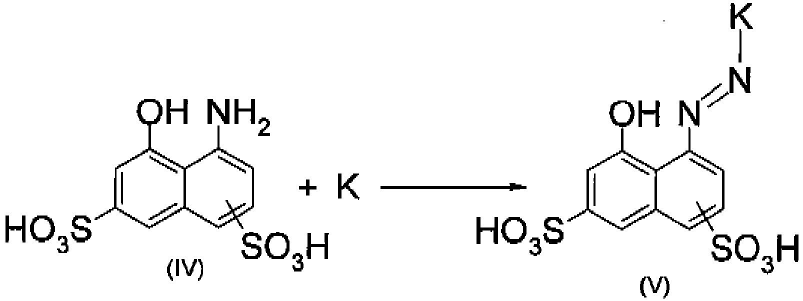
c) diazotizing component (B-NH₂),
cx1) optionally coupling the diazotized product of step c) onto the compound (A-NH₂) and
cx2) diazotizing the coupling product of step cx1)
d) coupling the diazotized product of step c) onto the intermediate V to obtain the bisazo-product of general formula (VI) in case of step c) 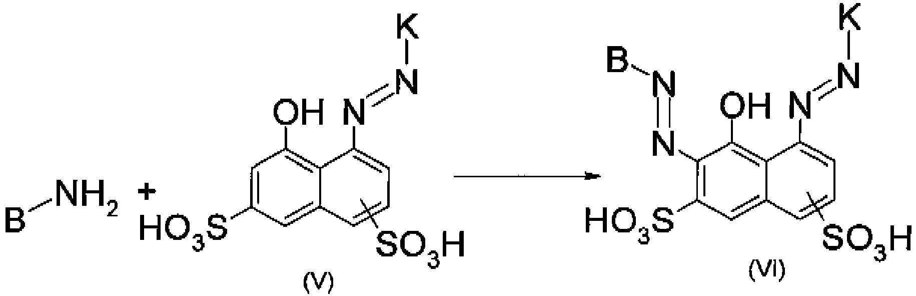 or coupling the diazotized coupling product of cx2) onto the intermediate V to obtain the trisazo-product of general formula (VIII),

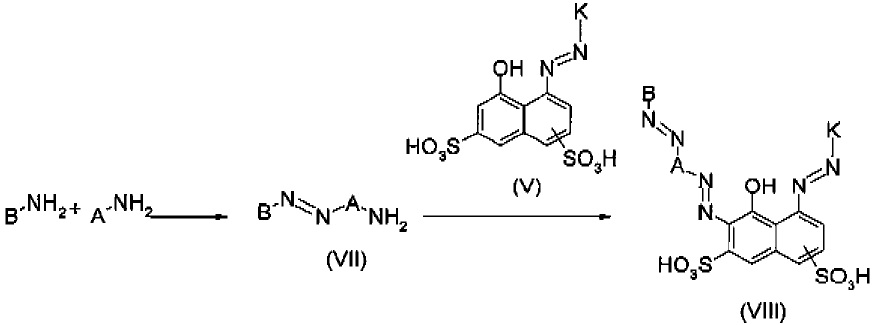

8. Use of a chemical compound according to any one of claims 1 to 3, a chemical composition according to claim 4 or 5 or of an aqueous solution according to claim 6 for dying fibers, as well as blends of such fibres selected from the group consisting of: vegetable fibres, seed fibres, cotton, organic cotton, kapok, coir from coconut husk, bast fibers, flax, hemp, jute, kenaf, ramie, rattan, leaf fibres, sisal, henequen, banana, stalk fibres, bamboo, fibres from animals, wool, organic wool, silk, cashmere wool, alpaca fiber, mohair, Angora fibre as well as fur and leather materials, manufactured, regenerated and recycled fibres, cellulosic fibres, paper fibres, cellulosic regenerated fibres, viscose rayon fibres, acetate and triacetate fibers and Lyocell fibers, and synthetic fiber materials, nylon materials, nylon-6, nylon-6.6 and aramid fibres.

9. Fiber and blends containing such fiber selected from the group consisting of: vegetable fibres, seed fibres, cotton, organic cotton, kapok, coir from coconut husk, bast fibers, flax, hemp, jute, kenaf, ramie, rattan, leaf fibres, sisal, henequen, banana, stalk fibres, bamboo, fibres from animals, wool, organic wool, silk, cashmere wool, alpaca fiber, mohair, Angora fibre as well as fur and leather materials, manufactured, regenerated and recycled fibres, cellulosic fibres, paper fibres, cellulosic regenerated fibres, viscose rayon fibres, acetate and triacetate fibers and Lyocell fibers, and synthetic fiber materials, nylon materials, nylon-6, nylon-6.6 and aramid fibres comprising one or more chemical compounds according to any one of claims 1 to 3 either in chemically and/or physically bound form.

## Patentansprüche

1. Chemische Verbindung der Formel (I): 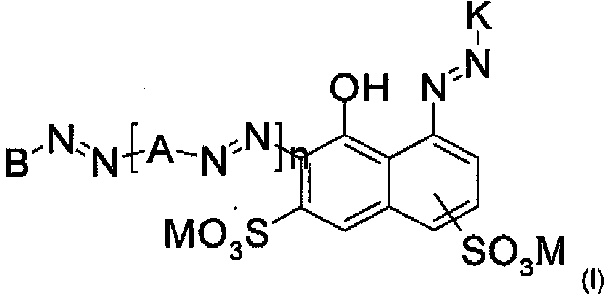 wobei
n für 0 oder 1 steht,
A für einen Rest einer Mittelkomponente gemäß nachstehender Beschreibung steht,
B für einen Rest einer Diazokomponente gemäß nachstehender Beschreibung steht,
M für Wasserstoff, Natrium, Kalium, Lithium oder Ammonium steht,
K für eine Kupplungskomponente der allgemeinen Formel (K2): 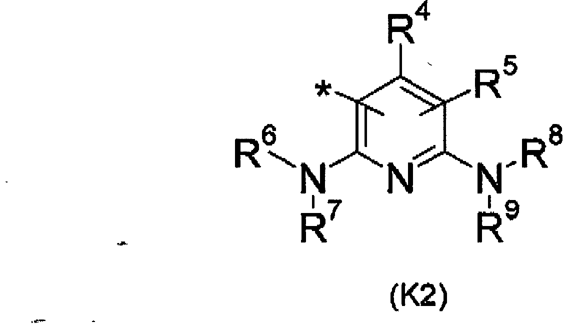 steht, wobei
R⁴ für Wasserstoff, Alkyl, Cycloalkyl, Trifluormethyl, Alkoxy, Cyano, Carbamoyl, Alkoxycarbonyl, COOM, Amino, Hydroxyl, Monocycloalkylamino, Monoalkylamino, Di(cyclo)alkylamino, Dialkylamino, Monoarylamino, Diarylamino, Monocycloalkylmonoarylamino, Monoalkylmonoarylamino, Alkylthio, Arylthio
oder
für Alkyl, das durch einen oder mehrere Substituenten aus der Gruppe bestehend aus Hydroxy, Cycloalkyl, Heteroaryl, Heterocycloalkyl, Aryl, Aryloxy, Alkoxy, Alkylthio, Arylthio, Halogen, Cyano, COOM, Alkoxycarbonyl, Acyloxy, Carbamoyl, Nitro, Amino, Acylamino, Arylcarbonylamino, Alkylsulfonylamino, Arylsulfonylamino, Ureido, Alkylureido und Phenylureido substituiert ist, steht,
R⁵ für Cyano, Carbamoyl, Alkoxycarbonyl, Trifluormethyl, Carbonyltrifluormethyl, Halogen, Sulfomethyl oder -SO₃M steht,
R⁶ bis R⁹ unabhängig voneinander
für Wasserstoff, Alkyl, Alkenyl, Cycloalkyl, Trifluormethyl, Aryl, Heteroaryl, Heterocycloalkyl, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl, N-Monoalkyl-N-monoarylsulfamoyl, Amino, N-Acylamino, N-Thioacylamino, Ureido, Alkylureido, Phenylureido, N-Monoalkylamino, N,N-Dialkylamino, N-Arylamino, N,N-Diarylamino, N-Alkyl-N-arylamino, N-Monocycloalkylamino, N,N-Dicycloalkylamino, N-Alkyl-N-cycloalkylamino, N-Aryl-N-cycloalkylamino, N-Heteroarylamino, N-Heterocycloalkylamino oder Hydroxyalkylsulfonylalkyl
oder
Alkyl, das durch ein oder mehrere Heteroatome wie Sauerstoff und Schwefel unterbrochen ist,
oder
Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkylmonocycloalkylamino, N,N-Monoarylmonocycloalkylamino, N-Acylamino, N-Alkylsulfonylamino, Ureido, Alkylureido, Phenylureido, Halogen, Cyano, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl, N-Monoalkyl-N-monoarylsulfamoyl und SO₃M substituiert ist,
oder
Alkyl oder Aryl, das durch -SO₂X substituiert ist, wobei
X für Phenyl oder einen Rest -CH₂CH₂-Y steht, wobei Y für eine unter alkalischen Bedingungen abspaltbare Gruppe wie OSO₃M, SSO₃M, OCOCH₃, OPO₃M oder Halogen steht, stehen
und wobei in der allgemeinen Formel K2 der Verknüpfungspunkt und R⁵ in ortho- oder para-Position zu dem die Substituenten R⁶ und R⁷ tragenden Aminorest stehen können, was bedeutet, dass dann, wenn der Verknüpfungspunkt in ortho-Position zu dem die Substituenten R⁶ und R⁷ tragenden Aminorest steht, R⁵ in para-Position dazu steht und umgekehrt,
wobei
T für einen reaktiven Anker einer der allgemeinen Formeln (T1) bis (T3) 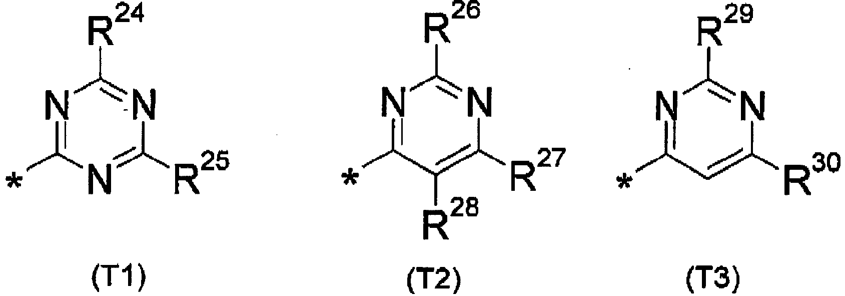 steht, wobei
R²⁴ und R²⁵ unabhängig voneinander für Halogen oder 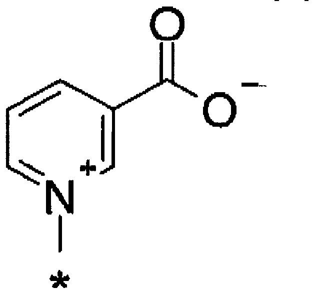 stehen,
R²⁶, R²⁷, R²⁸, R²⁹ und R³⁰ unabhängig voneinander für Halogen stehen,
oder
R²⁴, R²⁵, R²⁶, R²⁷, R²⁸, R²⁹ und R³⁰ jeweils unabhängig voneinander durch eine der Gruppen, die aus den allgemeinen Formeln (1a) bis (1c) 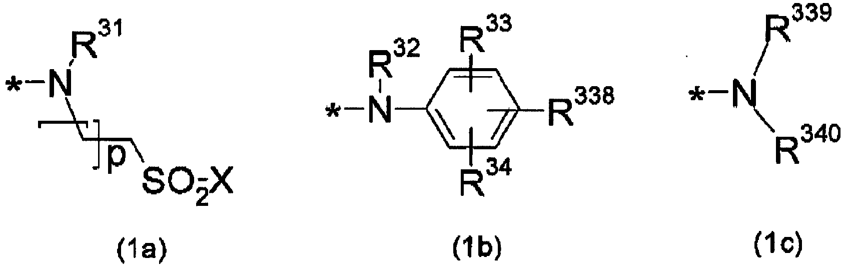 ausgewählt sind, substituiert sind, wobei R³¹, R³², R³³⁹ und R³⁴⁰ unabhängig voneinander für Wasserstoff, Alkyl, Phenyl oder Phenyl, das durch ein Mitglied aus der Gruppe bestehend aus Alkyl, Alkoxy, Halogen und -SO₃M substituiert ist, Alkenyl, Cycloalkyl, Trifluormethyl, Aryl, Heteroaryl, Heterocycloalkyl, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl, N-Monoalkyl-N-monoarylsulfamoyl, Amino, N-Acylamino, N-Thioacylamino, Ureido, Alkylureido, Phenylureido, N-Monoalkylamino, N,N-Dialkylamino, N-Arylamino, N,N-Diarylamino, N-Alkyl-N-arylamino, N-Monocycloalkylamino, N,N-Dicycloalkylamino, N-Alkyl-N-cycloalkylamino, N-Aryl-N-cycloalkylamino, N-Heteroarylamino, N-Heterocycloalkylamino oder Hydroxyalkylsulfonylalkyl
oder
für Alkyl, das durch ein oder mehrere Heteroatome wie Sauerstoff und Schwefel unterbrochen ist,
oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, _N-Alkyl-N-arylamino, N-Monocycloalkylamino, N,N-Dicycloalkylamino, N-Monoalkylmonocycloalkylamino, N,N-Monoarylmonocycloalkylamino, N-Acylamino, N-Alkylsulfonylamino, Ureido, Alkylureido, Phenylureido, Halogen, Cyano, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl, N-Monoalkyl-N-monoarylsulfamoyl und SO₃M substituiert ist,
stehen,
R³³, R³⁴ und R³³⁸ unabhängig voneinander für Wasserstoff, Alkyl, Alkoxy, Halogen, Trifluormethyl, Cyano, Nitro, Ester, Carbamoyl, SO₃M oder -SO₂X stehen,
wobei M für Wasserstoff, Natrium, Kalium, Lithium oder Ammonium steht
X für Phenyl oder einen Rest -CH₂CH₂-Y steht, wobei Y für eine unter alkalischen Bedingungen abspaltbare Gruppe wie OSO₃M, SSO₃M, OCOCH₃, OPO₃M oder Halogen steht,
p für eine ganze Zahl von 1 bis 5 steht,
R¹³ und R¹⁵ unabhängig voneinander für Wasserstoff, Alkyl, Cycloalkyl, Trifluormethyl, Alkoxy, Cyano, Carbamoyl, Alkoxycarbonyl, COOM, Amino, Hydroxyl, Monocycloalkylamino, Monoalkylamino, Di(cyclo)-alkylamino, Dialkylamino, Monoarylamino, Diarylamino, Monocycloalkylmonoarylamino, Monoalkylmonoarylamino, Alkylthio, Arylthio
oder
für Alkyl, das durch einen oder mehrere Substituenten aus der Gruppe bestehend aus Hydroxy, Cycloalkyl, Heteroaryl, Heterocycloalkyl, Aryl, Aryloxy, Alkoxy, Alkylthio, Arylthio, Halogen, Cyano, COOM, Alkoxycarbonyl, Acyloxy, Carbamoyl, Nitro, Amino, Acylamino, Arylcarbonylamino, Alkylsulfonylamino, Arylsulfonylamino, Ureido, Alkylureido und Phenylureido substituiert ist, stehen,
R¹², R¹⁶ und R²² unabhängig voneinander für Cyano, Carbamoyl, Alkoxycarbonyl, Trifluormethyl, Carbonyltrifluormethyl, Halogen, Methylsulfonyl oder -SO₃M stehen,
R¹⁴, R¹⁷ bis R²⁰ und R²³ für Wasserstoff, Alkyl, Alkenyl, Cycloalkyl, Trifluormethyl, Carbonyltrifluormethyl, Halogen, Methylsulfonyl oder -SO₃M, Aryl, Heteroaryl, Heterocycloalkyl, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl, N-Monoalkyl-N-monoarylsulfamoyl, Amino, N-Acylamino, N-Thioacylamino, Ureido, Alkylureido, Phenylureido, N-Monoalkylamino, N,N-Dialkylamino, N-Arylamino, N,N-Diarylamino, N-Alkyl-N-arylamino, N-Monocycloalkylamino, N,N-Dicycloalkylamino, N-Alkyl-N-cycloalkylamino, N-Aryl-N-cycloalkylamino, N-Heteroarylamino, N-Heterocycloalkylamino oder Hydroxyalkylsulfonylalkyl
oder
für Alkyl, das durch ein oder mehrere Heteroatome wie Sauerstoff und Schwefel unterbrochen ist⁻ ,
oder
Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkylmonocycloalkylamino, N,N-Monoarylmonocycloalkylamino, N-Acylamino, N-Alkylsulfonylamino, Ureido, Alkylureido, Phenylureido, Halogen, Cyano, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl, N-Monoalkyl-N-monoarylsulfamoyl und SO₃M substituiert ist, stehen, R²¹ für eine Hydroxyl- oder Aminogruppe steht
und wobei in der allgemeinen Formel K5 der Verknüpfungspunkt und R¹⁶ in ortho- oder para-Position zu dem die Substituenten R¹⁷ und R¹⁸ tragenden Aminorest stehen können, was bedeutet, dass dann, wenn der Verknüpfungspunkt in ortho-Position zu dem die Substituenten R¹⁷ und R¹⁸ tragenden Aminorest steht, R¹⁶ in para-Position dazu steht und umgekehrt,
A für die Mittelkomponente auf Basis von Phenylen oder Naphthylen steht und die allgemeine Formel (A1) oder (A2) 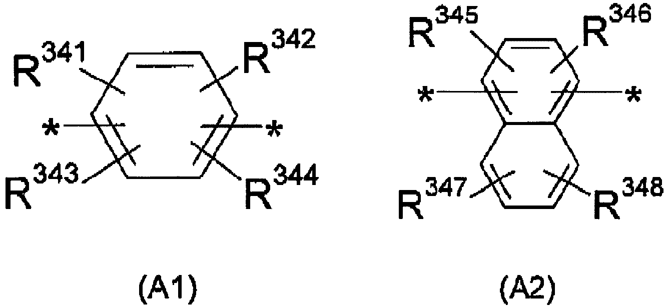 aufweist, wobei
R³⁴¹ bis R³⁴⁸ unabhängig voneinander für Wasserstoff, Alkyl, substituiertes Alkyl, eine Alkylkette, die durch ein oder zwei Heteroatome unterbrochen ist, Alkoxy, substituiertes Alkoxy, Halogen, Trifluormethyl, Cycloalkyl, Heterocycloalkyl, Cyano, Nitro, Acyloxy, Alkylcarbonyl, Acylamino, Aryloylamino, Cinnamoylamino, Alkylsulfonylamino, Alkylthio, Alkylsulfonyl, Alkoxycarbonyl, Carbamoyl, Sulfamoyl, Ureido, Alkylureido, SO₃M, COOM oder eine Gruppe der Formel (2a) bis (2c) 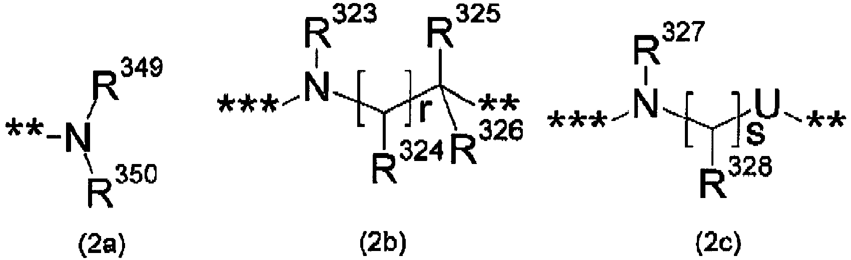 stehen, wobei R³⁴⁹ und R³⁵⁰ unabhängig voneinander für Wasserstoff, Alkyl, Alkyl, das durch SO₃M substituiert ist, eine Alkylkette, die durch ein oder zwei Heteroatome unterbrochen ist, oder T stehen, wobei T die gleiche Bedeutung wie oben besitzt;
U für -O-, -S- oder -N(R³²⁹)- steht;
R³²³, R³²⁷ und R³²⁹ unabhängig voneinander für Wasserstoff, Alkyl, Alkyl, das durch SO₃M substituiert ist, oder eine Alkylkette, die durch ein oder zwei Heteroatome unterbrochen ist, stehen;
R³²⁴, R³²⁵, R³²⁶ und R³²⁸ unabhängig voneinander für Wasserstoff, Alkyl oder eine Alkylkette, die durch ein oder zwei Heteroatome unterbrochen ist, stehen;
r für eine ganze Zahl von 0 bis 6 steht;
s für eine ganze Zahl von 1 bis 6 steht;
** sich auf den Verknüpfungspunkt mit A1 und A2 bezieht;
*** sich auf den Verknüpfungspunkt mit T bezieht;
B für die Diazokomponente steht und eine der allgemeinen Formeln (B1) oder (B2) 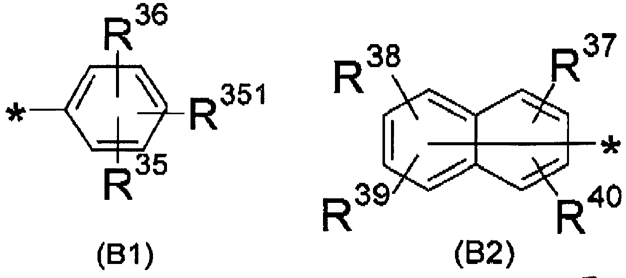 aufweist, wobei
R³⁵ bis R⁴⁰ und R³⁵¹ unabhängig voneinander für Wasserstoff oder Alkyl, Alkoxy, Halogen, Cyano, -SO₃M, Trifluormethyl, Nitro, Ester, NHC(O)R⁴¹, CONH₂, S(O)₂R⁴², -SO₂X oder eine Gruppe der allgemeinen Formeln (E1) bis (E3) stehen,
wobei R⁴¹ und R⁴² unabhängig voneinander für Wasserstoff, Alkyl oder Alkyl, das durch Hydroxy oder Halogen substituiert ist, stehen und
wobei (E1) bis (E3) 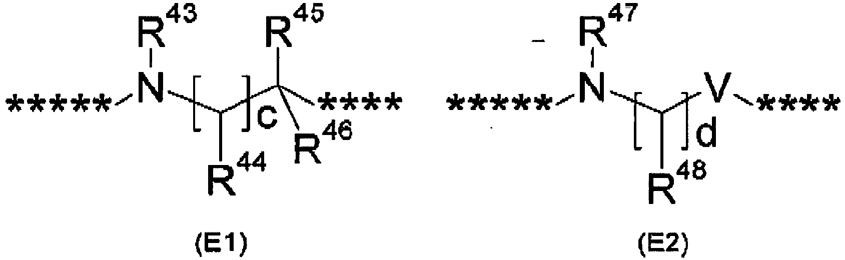 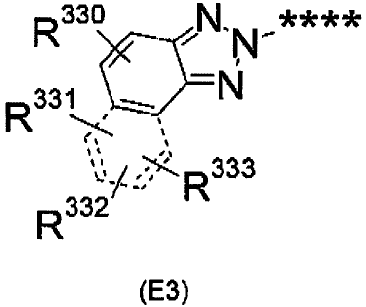 sind, wobei
V für -O-, -S- oder -N(R³⁵²)- steht;
R⁴³, R⁴⁷ und R³⁵² unabhängig voneinander für Wasserstoff, Alkyl, Alkyl, das durch SO₃M substituiert ist, oder eine Alkylkette, die durch ein oder zwei Heteroatome unterbrochen ist, stehen;
R⁴⁴, R⁴⁵, R⁴⁶ und R⁴⁸ unabhängig voneinander für Wasserstoff, Alkyl oder eine Alkylkette, die durch ein oder zwei Heteroatome unterbrochen ist, stehen;
R³³⁰, R³³¹, R³³² und R³³³ unabhängig voneinander für Wasserstoff oder Alkyl, Alkoxy, Halogen, Cyano, -SO₃M, Trifluormethyl, Nitro, Ester, NHC(O)R³³⁴, CONH₂, S(O)₂R³³⁵ oder eine Gruppe der allgemeinen Formel (3a) stehen; 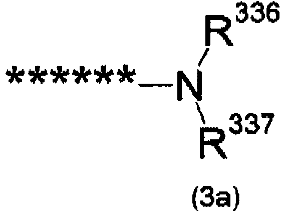
R³³⁶ und R³³⁷ unabhängig voneinander für Wasserstoff, Alkyl, Alkenyl, Cycloalkyl, Trifluormethyl, Aryl, Heteroaryl, Heterocycloalkyl, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl, N-Monoalkyl-N-monoarylsulfamoyl, Amino, N-Acylamino, N-Thioacylamino, Ureido, Alkylureido, Phenylureido, N-Monoalkylamino, N,N-Dialkylamino, N-Arylamino, N,N-Diarylamino, N-Alkyl-N-arylamino, N-Monocycloalkylamino, N,N-Dicycloalkylamino, N-Alkyl-N-cycloalkylamino, N-Aryl-N-cycloalkylamino, N-Heteroarylamino, N-Heterocycloalkylamino oder Hydroxyalkylsulfonylalkyl
oder für Alkyl, das durch ein oder mehrere Heteroatome wie Sauerstoff und Schwefel unterbrochen ist,
oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkylmonocycloalkylamino, N,N-Monoarylmonocycloalkylamino, N-Acylamino, N-Alkylsulfonylamino, Ureido, Alkylureido, Phenylureido, Halogen, Cyano, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl, N-Monoalkyl-N-monoarylsulfamoyl und SO₃M substituiert ist;
das einen Rest mit einer freien Valenz zur Verknüpfung mit dem Rest des reaktiven Ankers T enthält; stehen;
R⁴¹, R⁴², R³³⁴ und R³³⁵ unabhängig voneinander für Wasserstoff, Alkyl oder Alkyl, das durch Hydroxy oder Halogen substituiert ist, stehen;
c für eine ganze Zahl von 0 bis 6 steht;
d für eine ganze Zahl von 1 bis 6 steht;
**** sich auf den Verknüpfungspunkt mit B1 und B2 bezieht;
***** sich auf den Verknüpfungspunkt mit T bezieht;
****** sich auf den Verknüpfungspunkt mit E3 bezieht;
T und X wie oben definiert sind;
mit der allgemeinen Maßgabe, dass die Farbstoffe der allgemeinen Formel (I) mindestens einen reaktiven Anker enthalten.

2. Chemische Verbindung nach Anspruch 1 mit einer der Formeln (Iy) bis (Iab) und Mischungen davon: 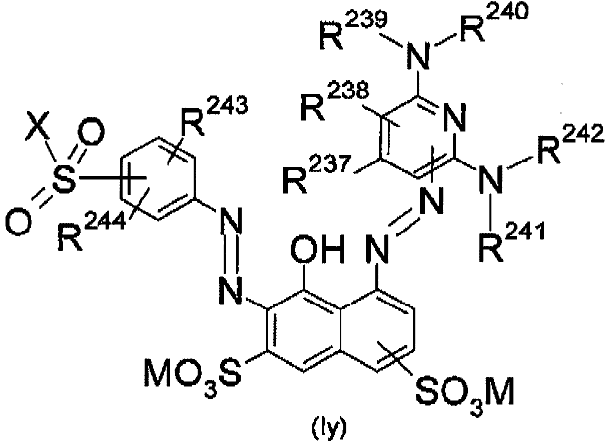 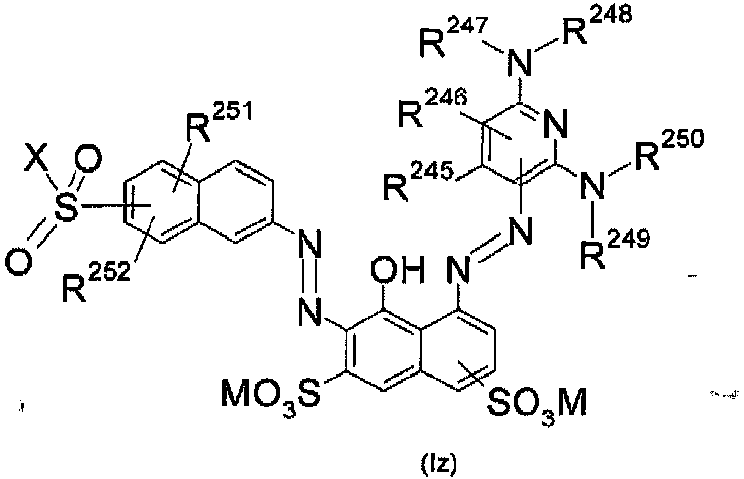 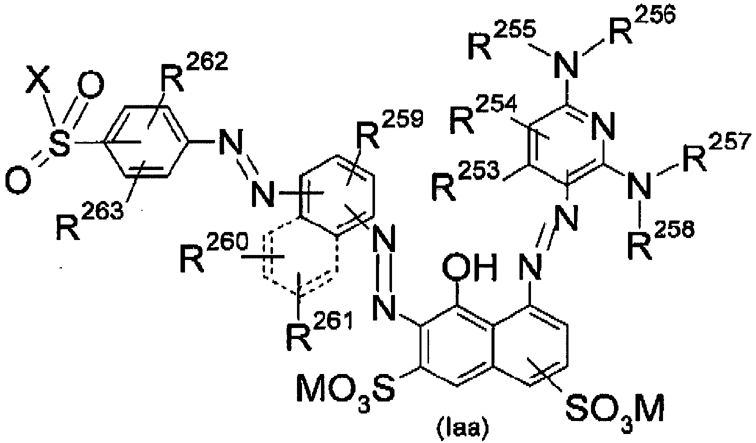 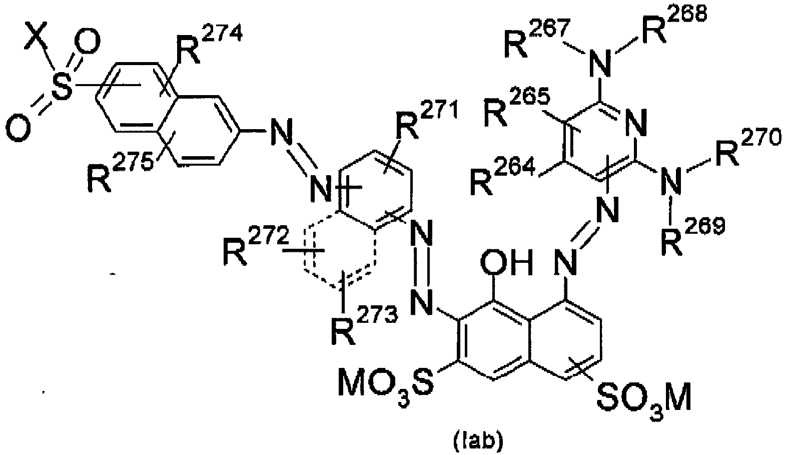 wobei
R²³⁷, R²⁴⁵, R²⁵³ und R²⁶⁴ unabhängig voneinander für Wasserstoff, Alkyl, Cycloalkyl, Trifluormethyl, Alkoxy, Cyano, Carbamoyl, Alkoxycarbonyl, COOM, Amino, Hydroxyl, Monocycloalkylamino, Monoalkylamino, Di(cyclo)alkylamino, Dialkylamino, Monoarylamino, Diarylamino, Monocycloalkylmonoarylamino, Monoalkylmonoarylamino, Alkylthio, Arylthio oder
für Alkyl, das durch einen oder mehrere Substituenten aus der Gruppe bestehend aus Hydroxy, Cycloalkyl, Heteroaryl, Heterocycloalkyl, Aryl, Aryloxy, Alkoxy, Alkylthio, Arylthio, Halogen, Cyano, COOM, Alkoxycarbonyl, Acyloxy, Carbamoyl, Nitro, Amino, Acylamino, Arylcarbonylamino, Alkylsulfonylamino, Arylsulfonylamino, Ureido, Alkylureido und Phenylureido substituiert ist, stehen,
R²³⁸, R²⁴⁶, R²⁵⁴ und R²⁶⁵ unabhängig voneinander für Cyano, Carbamoyl, Alkoxycarbonyl, Trifluormethyl, Carbonyltrifluormethyl, Halogen, Methylsulfonyl oder -SO₃M stehen,
R²³⁹ bis R²⁴², R²⁴⁷ bis R²⁵⁰, R²⁵⁵ bis R²⁵⁸ und R²⁵⁷ bis R²⁷⁰ unabhängig voneinander für Wasserstoff, Alkyl, Alkenyl, Cycloalkyl, Trifluormethyl, Aryl, Heteroaryl, Heterocycloalkyl, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl, N-Monoalkyl-N-monoarylsulfamoyl, Amino, N-Acylamino, N-Thioacylamino, Ureido, Alkylureido, Phenylureido, N-Monoalkylamino, N,N-Dialkylamino, N-Arylamino, N,N-Diarylamino, N-Alkyl-N-arylamino, N-Monocycloalkylamino, N,N-Dicycloalkylamino, N-Alkyl-N-cycloalkylamino, N-Aryl-N-cycloalkylamino, N-Heteroarylamino, N-Heterocycloalkylamino oder Hydroxyalkylsulfonylalkyl
oder
für Alkyl, das durch ein oder mehrere Heteroatome wie Sauerstoff und Schwefel unterbrochen ist,
oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkylmonocycloalkylamino, N,N-Monoarylmonocycloalkylamino, N-Acylamino, N-Alkylsulfonylamino, Ureido, Alkylureido, Phenylureido, Halogen, Cyano, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl, N-Monoalkyl-N-monoarylsulfamoyl und SO₃M substituiert ist, stehen oder Alkyl einen Rest mit einer freien Valenz zur Verknüpfung mit dem Rest des reaktiven Ankers T enthält,
R²⁴³, R²⁴⁴, R²⁵¹, R²⁵², R²⁶², R²⁶³, R²⁷⁴ und R²⁷⁵ unabhängig voneinander für Wasserstoff oder Alkyl, Alkoxy, Halogen, Cyano, -SO₃M, Trifluormethyl, Nitro, Ester, NHC(O)R²⁷⁶, CONH₂, S(O)₂R²⁷⁷ oder -SO₂X stehen,
R²⁷⁶ und R²⁷⁷ unabhängig voneinander für Wasserstoff, Alkyl oder Alkyl, das durch Hydroxy oder Halogen substituiert ist, stehen,
R²⁵⁹ bis R²⁶¹ und R²⁷¹ bis R²⁷³ unabhängig voneinander für Wasserstoff, Alkyl, substituiertes Alkyl, eine Alkylkette, die durch ein oder zwei Heteroatome unterbrochen ist, Alkoxy, substituiertes Alkoxy, Halogen, Trifluormethyl, Cycloalkyl, Heterocycloalkyl, Cyano, Nitro, Acyloxy, Alkylcarbonyl, Acylamino, Aryloylamino, Cinnamoylamino, Alkylsulfonylamino, Alkylthio, Alkylsulfonyl, Alkoxycarbonyl, Carbamoyl, Sulfamoyl, Ureido, Alkylureido, SO₃M, COOM oder eine Gruppe der Formel (2a) bis (2c) 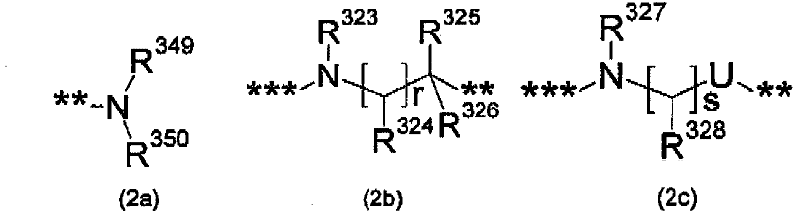 stehen, wobei R³⁴⁹ und R³⁵⁰ unabhängig voneinander für Wasserstoff, Alkyl, Alkyl, das durch SO₃M substituiert ist, eine Alkylkette, die durch ein oder zwei Heteroatome unterbrochen ist, oder T stehen, wobei T die gleiche Bedeutung wie oben besitzt;
U für -O-, -S- oder -N(R³²⁹)- steht,
R³²³, R³²⁷ und R³²⁹ unabhängig voneinander für Wasserstoff, Alkyl, Alkyl, das durch SO₃M substituiert ist, oder eine Alkylkette, die durch ein oder zwei Heteroatome unterbrochen ist, stehen,
R³²⁴, R³²⁵, R³²⁶ und R³²⁸ unabhängig voneinander für Wasserstoff, Alkyl oder eine Alkylkette, die durch ein oder zwei Heteroatome unterbrochen ist, stehen;
r für eine ganze Zahl von 0 bis 6 steht,
s für eine ganze Zahl von 1 bis 6 steht,
** sich auf den Verknüpfungspunkt mit A1 und A2 bezieht,
*** sich auf den Verknüpfungspunkt mit T bezieht und
M, T und X wie in Anspruch 1 definiert sind.

3. Chemische Verbindung nach Anspruch 1 mit einer der Formeln (Iac) bis (Iaf) und Mischungen davon: 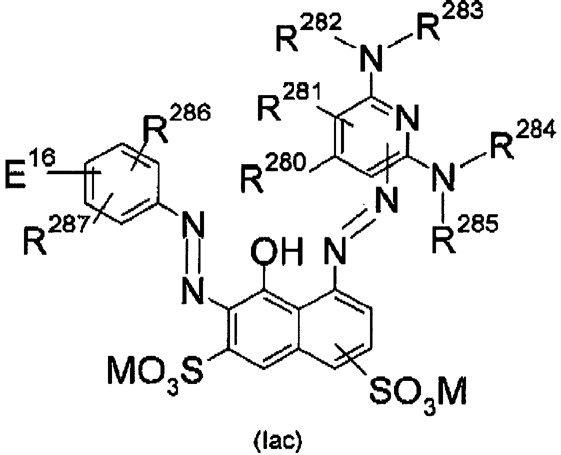 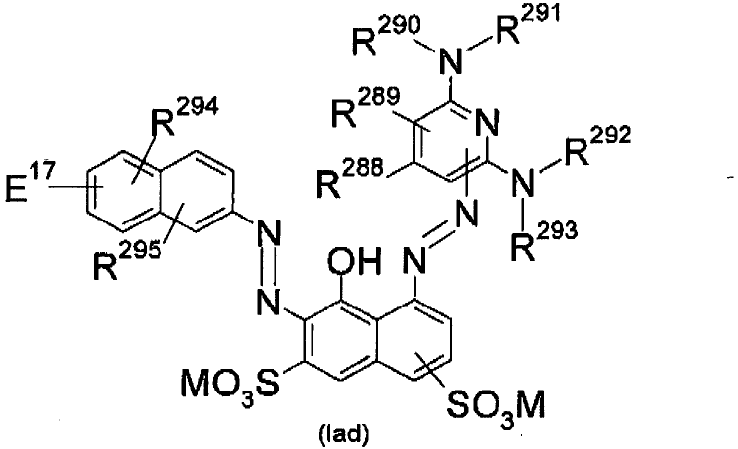 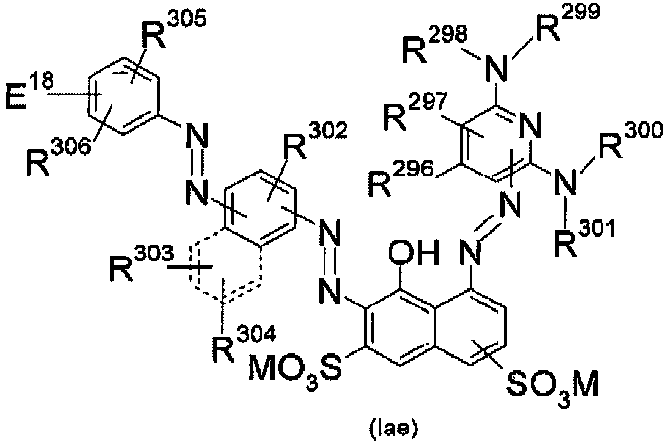 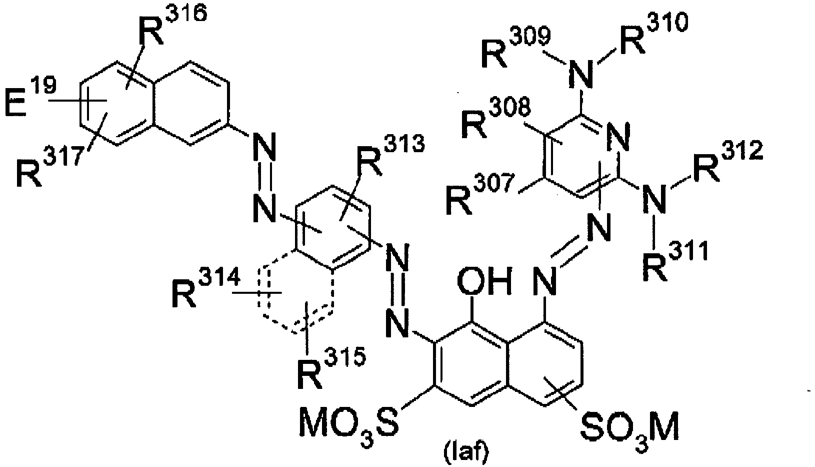 wobei
R²⁸⁰, R²⁸⁸, R²⁹⁶ und R³⁰⁷ unabhängig voneinander für Wasserstoff, Alkyl, Cycloalkyl, Trifluormethyl, Alkoxy, Cyano, Carbamoyl, Alkoxycarbonyl, COOM, Amino, Hydroxyl, Monocycloalkylamino, Monoalkylamino, Di(cyclo)alkylamino, Dialkylamino, Monoarylamino, Diarylamino, Monocycloalkylmonoarylamino, Monoalkylmonoarylamino, Alkylthio, Arylthio oder
für Alkyl, das durch einen oder mehrere Substituenten aus der Gruppe bestehend aus Hydroxy, Cycloalkyl, Heteroaryl, Heterocycloalkyl, Aryl, Aryloxy, Alkoxy, Alkylthio, Arylthio, Halogen, Cyano, COOM, Alkoxycarbonyl, Acyloxy, Carbamoyl, Nitro, Amino, Acylamino, Arylcarbonylamino, Alkylsulfonylamino, Arylsulfonylamino, Ureido, Alkylureido und Phenylureido substituiert ist, stehen,
R²⁸¹, R²⁸⁹, R²⁹⁷ und R³⁰⁸ für Cyano, Carbamoyl, Alkoxycarbonyl, Trifluormethyl, Carbonyltrifluormethyl, Halogen, Methylsulfonyl oder -SO₃M stehen, R²⁸² bis R²⁸⁵, R²⁹⁰ bis R²⁹³, R²⁹⁸ bis R³⁰¹ und R³⁰⁹ bis R³¹² unabhängig voneinander für Wasserstoff, Alkyl, Alkenyl, Cycloalkyl, Trifluormethyl, Aryl, Heteroaryl, Heterocycloalkyl, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl, N-Monoalkyl-N-monoarylsulfamoyl, Amino, N-Acylamino, N-Thioacylamino, Ureido, Alkylureido, Phenylureido, N-Monoalkylamino, N,N-Dialkylamino, N-Arylamino, N,N-Diarylamino, N-Alkyl-N-arylamino, N-Monocycloalkylamino, N,N-Dicycloalkylamino, N-Alkyl-N-cycloalkylamino, N-Aryl-N-cycloalkylamino, N-Heteroarylamino, N-Heterocycloalkylamino oder Hydroxyalkylsulfonylalkyl
oder
für Alkyl, das durch ein oder mehrere Heteroatome wie Sauerstoff und Schwefel unterbrochen ist,
oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkylmonocycloalkylamino, N,N-Monoarylmonocycloalkylamino, N-Acylamino, N-Alkylsulfonylamino, Ureido, Alkylureido, Phenylureido, Halogen, Cyano, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl, N-Monoalkyl-N-monoarylsulfamoyl und SO₃M substituiert ist, stehen oder Alkyl einen Rest mit einer freien Valenz zur Verknüpfung mit dem Rest des reaktiven Ankers T enthält,
R²⁸⁶, R²⁸⁷, R²⁹⁴, R²⁹⁵, R³⁰⁵, R³⁰⁶, R³¹⁶ und R³¹⁷ unabhängig voneinander für Wasserstoff oder Alkyl, Alkoxy, Halogen, Cyano, -SO₃M, Trifluormethyl, Nitro, Ester, NHC(O)R³¹⁸, CONH₂, S(O)₂R³¹⁹, oder -SO₂X stehen,
R³¹⁸ und R³¹⁹ unabhängig voneinander für Wasserstoff, Alkyl oder Alkyl, das durch Hydroxy oder Halogen substituiert ist, stehen,
R³⁰² bis R³⁰⁴ und R³¹³ bis R³¹⁵ unabhängig voneinander für Wasserstoff, Alkyl, substituiertes Alkyl, eine Alkylkette, die durch ein oder zwei Heteroatome unterbrochen ist, Alkoxy, substituiertes Alkoxy, Halogen, Trifluormethyl, Cycloalkyl, Heterocycloalkyl, Cyano, Nitro, Acyloxy, Alkylcarbonyl, Acylamino, Aryloylamino, Cinnamoylamino, Alkylsulfonylamino, Alkylthio, Alkylsulfonyl, Alkoxycarbonyl, Carbamoyl, Sulfamoyl, Ureido, Alkylureido, SO₃M, COOM oder eine Gruppe der Formel (2a) bis (2c) 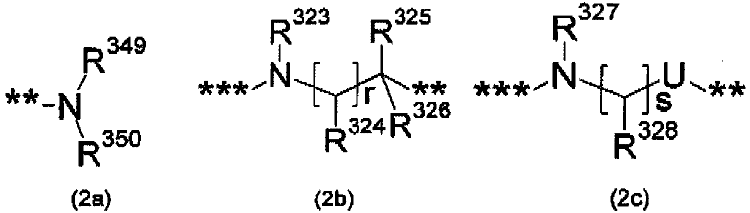 stehen, wobei R³⁴⁹ und R³⁵⁰ unabhängig voneinander für Wasserstoff, Alkyl, Alkyl, das durch SO₃M substituiert ist, eine Alkylkette, die durch ein oder zwei Heteroatome unterbrochen ist, oder T stehen, wobei T die gleiche Bedeutung wie oben besitzt;
U für -O-, -S- oder -N(R³²⁹)- steht,
R³²³, R³²⁷ und R³²⁹ unabhängig voneinander für Wasserstoff, Alkyl, Alkyl, das durch SO₃M substituiert ist, oder eine Alkylkette, die durch ein oder zwei Heteroatome unterbrochen ist, stehen,
R³²⁴, R³²⁵, R³²⁶ und R³²⁸ unabhängig voneinander für Wasserstoff, Alkyl oder eine Alkylkette, die durch ein oder zwei Heteroatome unterbrochen ist, stehen;
r für eine ganze Zahl von 0 bis 6 steht,
s für eine ganze Zahl von 1 bis 6 steht,
** sich auf den Verknüpfungspunkt mit A1 und A2 bezieht,
*** sich auf den Verknüpfungspunkt mit T bezieht,
E¹⁶ bis E¹⁹ unabhängig voneinander für eine Gruppe der allgemeinen Formeln (E1) bis (E3) stehen,
M, T und X wie in Anspruch 1 definiert sind.

4. Chemische Zusammensetzung, bestehend aus zwei oder mehr Verbindungen nach einem der Ansprüche 1 bis 3.

5. Chemische Zusammensetzung, umfassend zwei oder mehr Verbindungen nach einem der Ansprüche 1 bis 3.

6. Wässrige Lösung zum Färben, die eine oder mehrere chemische Verbindungen nach einem der Ansprüche 1 bis 3 umfasst.

7. Verfahren zur Herstellung von chemischen Verbindungen gemäß Formel (I) nach Anspruch 1, umfassend die Schritte
a) Diazotierung von Verbindungen der Formel (IV),
b) Umsetzung der in Schritt a) erhaltenen Diazoniumsalze mit einer Verbindung der Formel K zu einem Zwischenprodukt der Formel (V) 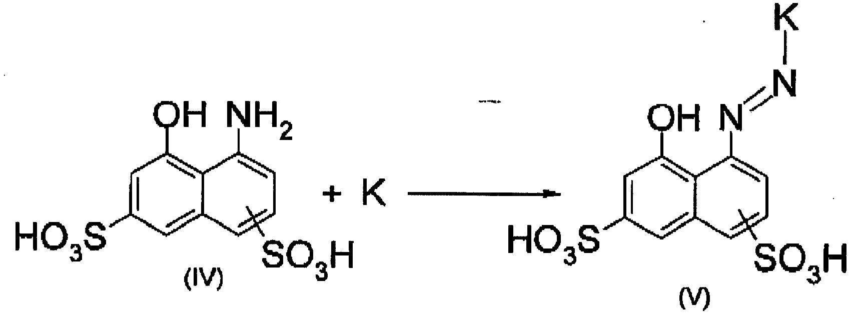
c) Diazotierung der Verbindung der Komponente (B-NH₂),
cx1) gegebenenfalls Kupplung des diazotierten Produkts aus Schritt c) mit der Verbindung (A-NH₂) und
cx2) Diazotierung des Kupplungsprodukts aus Schritt cx1),
d) Kupplung des diazotierten Produkts aus Schritt c) mit dem Zwischenprodukt V zu dem Bisazo-Produkt der allgemeinen Formel (VI) im Fall von Schritt c) 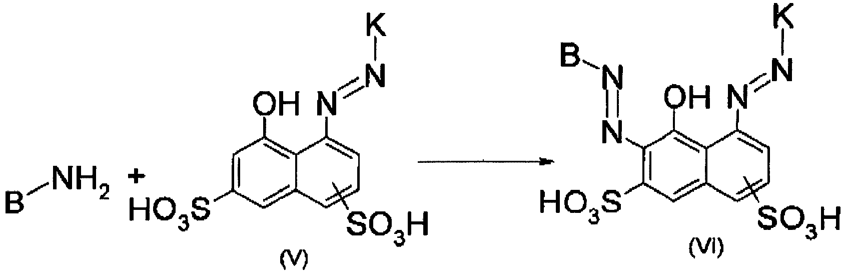 oder Kupplung des diazotierten Kupplungsprodukts aus cx2) mit dem Zwischenprodukt V zu dem Trisazo-Produkt der allgemeinen Formel (VIII)

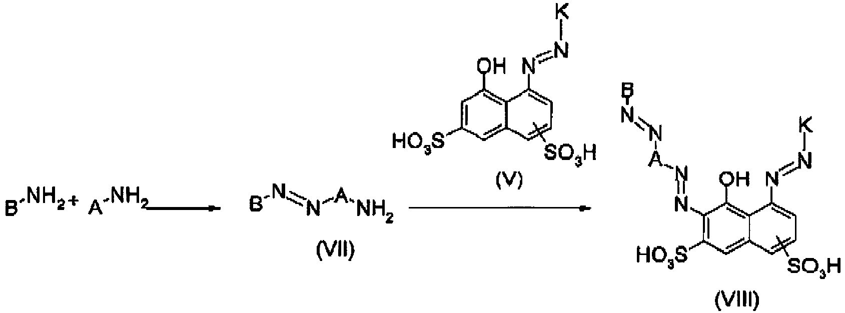

8. Verwendung einer chemischen Verbindung nach einem der Ansprüche 1 bis 3, einer chemischen Zusammensetzung nach Anspruch 4 oder 5 oder einer wässrigen Lösung nach Anspruch 6 zum Färben von Fasern sowie Mischungen derartiger Fasern, ausgewählt aus der Gruppe bestehend aus Pflanzenfasern, Samenfasern, Baumwolle, organischer Baumwolle, Kapok, Kokosfasern aus Kokosnussschalen, Bastfasern, Flachs, Hanf, Jute, Kenaf, Ramie, Rattan, Blattfasern, Sisal, Henequen, Banane, Stängelfasern, Bambus, Fasern aus Tieren, Wolle, organischer Wolle, Seide, Kaschmirwolle, Alpakafaser, Mohair, Angorafaser sowie Pelz- und Ledermaterialien, Chemiefasern, Regeneratfasern, Rezyklatfasern, Cellulosefasern, Papierfasern, Celluloseregeneratfasern, Viskosereyonfasern, Acetat- und Triacetatfasern und Lyocellfasern und synthetischen Fasermaterialien, Polyamidmaterialien, Polyamid-6-, Polyamid-6.6- und Aramidfasern.

9. Faser und Mischungen, die eine derartige Faser enthalten, ausgewählt aus der Gruppe bestehend aus Pflanzenfasern, Samenfasern, Baumwolle, organischer Baumwolle, Kapok, Kokosfasern aus Kokosnussschalen, Bastfasern, Flachs, Hanf, Jute, Kenaf, Ramie, Rattan, Blattfasern, Sisal, Henequen, Banane, Stängelfasern, Bambus, Fasern aus Tieren, Wolle, organischer Wolle, Seide, Kaschmirwolle, Alpakafaser, Mohair, Angorafaser sowie Pelz- und Ledermaterialien, Chemiefasern, Regeneratfasern, Rezyklatfasern, Cellulosefasern, Papierfasern, Celluloseregeneratfasern, Viskosereyonfasern, Acetat- und Triacetatfasern und Lyocellfasern und synthetischen Fasermaterialien, Polyamidmaterialien, Polyamid-6-, Polyamid-6.6- und Aramidfasern, umfassend ein oder mehrere chemische Verbindungen nach einem der Ansprüche 1 bis 3 in chemisch und/oder physikalisch gebundener Form.

## Revendications

1. Composé chimique de formule (I) : 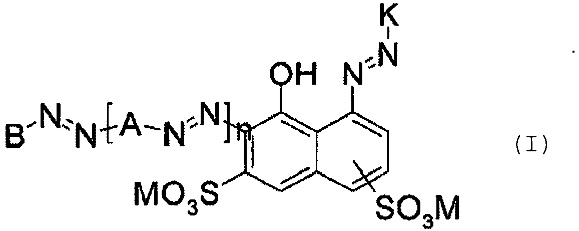 dans lequel
n vaut 0 ou 1,
A est un radical d'un constituant central tel que décrit ci-dessous,
B est un radical d'un constituant diazoïque tel que décrit ci-dessous,
M est l'ion hydrogène, sodium, potassium, lithium ou ammonium,
K est un constituant de couplage de formule générale (K2) : 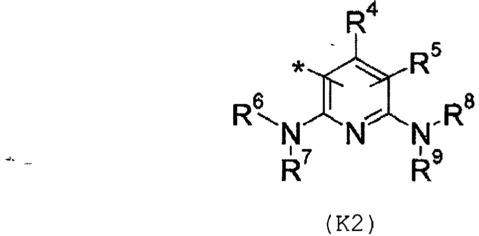 dans lequel
R⁴ est l'atome d'hydrogène ou un groupe alkyle, cycloalkyle, trifluorométhyle, alcoxy, cyano, carbamoyle, alcoxycarbonyle, -COOM, amino, hydroxyle, monocycloalkylamino, monoalkylamino, dicycloalkylamino, dialkylamino, monoarylamino, diarylamino, monocycloalkylmonoarylamino, monoalkylmonoarylamino, alkylthio, arylthio
ou
un groupe alkyle substitué par un ou plusieurs substituants choisis dans le groupe constitué par les substituants hydroxy, cycloalkyle, hétéroaryle, hétérocycloalkyle, aryle, aryloxy, alcoxy, alkylthio, arylthio, halogéno, cyano, COOM, alcoxycarbonyle, acyloxy, carbamoyle, nitro, amino, acylamino, arylcarbonylamino, alkylsulfonylamino, arylsulfonylamino, uréido, alkyluréido ou phényluréido,
R⁵ est un groupe cyano, carbamoyle, alcoxycarbonyle, trifluorométhyle, carbonyltrifluorométhyle, halogéno, sulfométhyle ou -SO₃M,
R⁶ à R⁹ sont chacun indépendamment des autres l'atome d'hydrogène ou un groupe alkyle, alcényle, cycloalkyle, trifluorométhyle, aryle, hétéroaryle, hétérocycloalkyle, carbamoyle, *N-*monocycloalkylcarbamoyle, *N-*monoalkylcarbamoyle, *N,N-*dicycloalkylcarbamoyle, *N,N*-dialkylcarbamoyle, *N*-monoarylcarbamoyle, *N,N*-diarylcarbamoyle, *N-*monocycloalkyl-*N*-monoarylcarbamoyle, *N-*monoalkyl-*N*-monoarylcarbamoyle, sulfamoyle, *N-*monocycloalkylsulfamoyle, *N-*monoalkylsulfamoyle, *N,N-*dicycloalkylsulfamoyle, *N,N*-dialkylsulfamoyle, *N*-monoarylsulfamoyle, *N,N-*diarylsulfamoyle, *N-*monocycloalkyl-*N*-monoarylsulfamoyle, *N-*monoalkyl-*N-*monoarylsulfamoyle, amino, *N-*acylamino, *N-*thioacylamino, uréido, alkyluréido, phényluréido, *N*-monoalkylamino, *N,N*-dialkylamino, *N*-arylamino, *N,N*-diarylamino, *N*-alkyl-*N*-arylamino, *N*-monocycloalkylamino, *N,N*-dicycloalkylamino, *N*-alkyl-*N-*cycloalkylamino, *N*-aryl-*N*-cycloalkylamino, *N-*hétéroarylamino, *N*-hétérocycloalkylamino ou hydroxyalkylsulfonylalkyle,
ou
un groupe alkyle interrompu par un ou plusieurs hétéroatomes tels que des atomes d'oxygène ou de soufre,
ou
un groupe alkyle substitué par un ou plusieurs substituants choisis dans le groupe constitué par les substituants hydroxy, aryle, cycloalkyle, alcoxy, thioalcoxy, amino, *N-*monoalkylamino, *N,N*-dialkylamino, *N-*monoarylamino, *N,N*-diarylamino, *N*-alkyl-*N-*arylamino, *N*-monocycloalkylamino, *N,N-*dicycloalkylamino, *N-*monoalkylmonocycloalkylamino, *N,N-*monoarylmonocycloalkylamino, *N*-acylamino, *N-*alkylsulfonylamino, uréido, alkyluréido, phényluréido, halogéno, cyano, COOM, nitro, acyle, thioacyle, alkylsulfonyle, aryloyle, trifluorométhyle, hétéroaryle, hétérocycloalkyle, _ alcoxycarbonyle, alcoxythiocarbonyle, acyloxy, aryloyloxy, carbamoyle, *N*-monocycloalkylcarbamoyle, *N-*monoalkylcarbamoyle, *N,N-*dicycloalkylcarbamoyle, *N,N*-dialkylcarbamoyle, *N*-monoarylcarbamoyle, *N,N*-diarylcarbamoyle, *N-*monocycloalkyl-*N-*monoarylcarbamoyle, *N-*monoalkyl-*N*-monoarylcarbamoyle, sulfamoyle, *N-*monocycloalkylsulfamoyle, *N-*monoalkylsulfamoyle, *N,N-*dicycloalkylsulfamoyle, *N,N-*dialkylsulfamoyle, *N*-monoarylsulfamoyle, *N,N*-diarylsulfamoyle, *N-*monocycloalkyl*-N*-monoarylsulfamoyle, *N-*monoalkyl-*N*-monoarylsulfamoyle ou SO₃M,
ou
un groupe alkyle ou aryle substitué par -SO₂X, X étant un groupe vinyle ou un radical -CH₂CH₂-Y, Y étant un groupe libérable dans des conditions alcalines tel que OSO₃M, SSO₃M, OCOCH₃, OPO₃M ou halogéno, et
dans la formule générale K2 le point d'attache et R⁵ peuvent être situés en position ortho ou para par rapport au résidu amino portant les substituants R⁶ et R⁷, ce qui signifie que lorsque le point d'attache est situé en position ortho par rapport au résidu amino portant les substituants R⁶ et R⁷, R⁵ est situé en position para par rapport à celui-ci, et vice versa,
T est un groupe d'ancrage réactif représenté par l'une des formules générales (T1) à (T3), 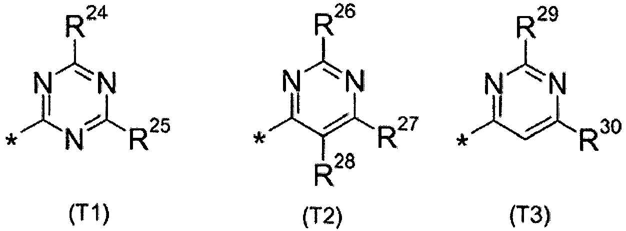 dans lequel
R²⁴ et R²⁵ sont, chacun indépendamment de l'autre, un groupe halogéno ou 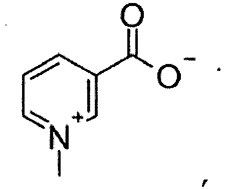
R²⁶, R²⁷, R²⁸, R²⁹ et R³⁰ sont, chacun indépendamment des autres, un groupe halogéno,
ou
chacun de R²⁴, R²⁵, R²⁶, R²⁷, R²⁸, R²⁹ et R³⁰, indépendamment des autres, est substitué par l'un des groupes choisis parmi les formules générales (1a) à (1c), 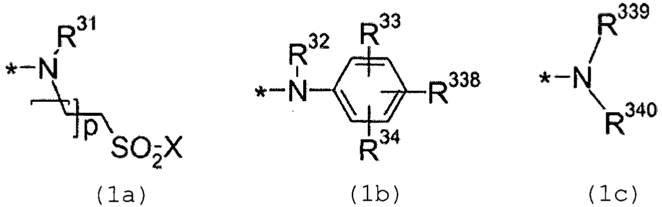 dans lesquelles
R³¹, R³², R³³⁹ et R³⁴⁰ sont, chacun indépendamment des autres, l'atome d'hydrogène ou un groupe alkyle, phényle ou phényle substitué par un élément du groupe choisi parmi les substituants alkyle, alcoxy, halogéno ou - SO₃M, alcényle, cycloalkyle, trifluorométhyle, aryle, hétéroaryle, hétérocycloalkyle, carbamoyle, *N-*monocycloalkylcarbamoyle, *N-*monoalkylcarbamoyle, *N,N-*dicycloalkylcarbamoyle, *N,N-*dialkylcarbamoyle, *N*-monoarylcarbamoyle, *N,N*-diarylcarbamoyle, *N*-monocycloalkyl-*N-*monoarylcarbamoyle, *N*-monoalkyl-*N-*monoarylcarbamoyle, sulfamoyle, *N-*monocycloalkylsulfamoyle, *N-*monoalkylsulfamoyle, *N,N-*dicycloalkylsulfamoyle, *N,N-*dialkylsulfamoyle, *N*-monoarylsulfamoyle, *N,N*-diarylsulfamoyle, *N*-monocycloalkyl-N-monoarylsulfamoyle, *N*-monoalkyl-*N-*monoarylsulfamoyle, amino, *N*-acylamino, *N-*thioacylamino, uréido, alkyluréido, phényluréido, *N*-monoalkylamino, *N,N-*dialkylamino, *N*-arylamino, *N,N*-diarylamino, *N*-alkyl-*N*-arylamino, *N*-monocycloalkylamino, *N,N*-dicycloalkylamino, *N*-alkyl-*N-*cycloalkylamino, *N*-aryl-*N*-cycloalkylamino, *N*-hétéroarylamino, *N*-hétérocycloalkylamino ou hydroxyalkylsulfonylalkyle,
ou
un groupe alkyle interrompu par un ou plusieurs hétéroatomes tels que des atomes d'oxygène ou de soufre,
ou
un groupe alkyle substitué par un ou plusieurs substituants choisis dans le groupe constitué par les substituants hydroxy, aryle, cycloalkyle, alcoxy, thioalcoxy, amino, *N*-monoalkylamino, *N,N-*dialkylamino, *N*-monoarylamino, *N,N-*diarylamino, *N*-alkyl-*N*-arylamino, *N-*monocycloalkylamino, *N,N-*dicycloalkylamino, *N*-monoalkylmonocycloalkylamino, *N,N-*monoarylmonocycloalkylamino, *N*-acylamino, *N*-alkylsulfonylamino, uréido, alkyluréido, phényluréido, halogéno, cyano, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, *N*-monocycloalkylcarbamoyle, *N-*monoalkylcarbamoyle, *N,N-*dicycloalkylcarbamoyle, *N,N-*dialkylcarbamoyle, *N*-monoarylcarbamoyle, *N,N*-diarylcarbamoyle, *N*-monocycloalkyl-*N-*monoarylcarbamoyle, *N*-monoalkyl-*N-*monoarylcarbamoyle, sulfamoyle, *N-*monocycloalkylsulfamoyle, - *N-*monoalkylsulfamoyle, *N,N-*dicycloalkylsulfamoyle, *N,N-*dialkylsulfamoyle, *N*-monoarylsulfamoyle, *N,N*-diarylsulfamoyle, *N*-monocycloalkyl-*N-*monoarylsulfamoyle, *N*-monoalkyl-*N-*monoarylsulfamoyle ou SO₃M,
R³³, R³⁴ et R³³⁸ sont, chacun indépendamment des autres, l'atome d'hydrogène ou un groupe alkyle, alcoxyle, halogéno, trifluorométhyle, cyano, nitro, ester, carbamoyle, SO₃M ou -SO₂X,
M étant l'ion hydrogène, sodium, potassium, lithium ou ammonium,
X étant un groupe vinyle ou un radical -CH₂CH₂-Y, Y étant un groupe libérable dans des conditions alcalines tel que OSO₃M, SSO₃M, OCOCH₃, OPO₃M ou halogéno,
p est un nombre entier de 1 à 5,
R¹³ et R¹⁵ sont, chacun indépendamment de l'autre, l'atome d'hydrogène ou un groupe alkyle, cycloalkyle, trifluorométhyle, alcoxy, cyano, carbamoyle, alcoxycarbonyle, COOM, amino, hydroxyle, monocycloalkylamino, monoalkylamino, dicycloalkylamino, dialkylamino, monoarylamino, diarylamino, monocycloalkylmonoarylamino, monoalkylmonoarylamino, alkylthio, arylthio, ou
un groupe alkyle substitué par un ou plusieurs substituants choisis dans le groupe constitué par les substituants hydroxy, cycloalkyle, hétéroaryle, hétérocycloalkyle, aryle, aryloxy, alcoxy, alkylthio, arylthio, halogéno, cyano, COOM, alcoxycarbonyle, acyloxy, carbamoyle, nitro, amino, acylamino, arylcarbonylamino, alkylsulfonylamino, arylsulfonylamino, uréido, alkyluréido ou phényluréido,
R¹², R¹⁶ et R²² sont, chacun indépendamment des autres, un groupe cyano, carbamoyle, alcoxycarbonyle, trifluorométhyle, carbonyltrifluorométhyle, halogéno, méthylsulfonyle ou -SO₃M,
R¹⁴, R¹⁷ à R²⁰ et R²³ sont, chacun indépendamment des autres, l'atome d'hydrogène ou un groupe alkyle, alcényle, cycloalkyle, trifluorométhyle, carbonyltrifluorométhyle, halogéno, méthylsulfonyle ou -SO₃M, aryle, hétéroaryle, hétérocycloalkyle, carbamoyle, *N-*monocycloalkylcarbamoyle, *N-*monoalkylcarbamoyle, *N,N-*dicycloalkylcarbamoyle, *N,N*-dialkylcarbamoyle, *N*-monoarylcarbamoyle, *N,N*-diarylcarbamoyle, *N-*monocycloalkyl-*N*-monoarylcarbamoyle, *N-*monoalkyl-*N*-monoarylcarbamoyle, sulfamoyle, *N-*monocycloalkylsulfamoyle, *N-*monoalkylsulfamoyle, *N,N-*dicycloalkylsulfamoyle, *N,N*-dialkylsulfamoyle, *N*-monoarylsulfamoyle, *N,N*-diarylsulfamoyle, *N-*monocycloalkyl-*N*-monoarylsulfamoyle, *N-*monoalkyl-*N*-monoarylsulfamoyle, amino, *N-*acylamino, *N*-thioacylamino, uréido, alkyluréido, phényluréido, *N*-monoalkylamino, *N,N*-dialkylamino, *N*-arylamino, *N,N*-diarylamino, *N*-alkyl-*N*-arylamino, *N*-monocycloalkylamino, *N,N*-dicycloalkylamino, *N*-alkyl-N-cycloalkylamino, *N*-aryl-*N*-cycloalkylamino, *N-*hétéroarylamino, *N*-hétérocycloalkylamino ou hydroxyakylsulfonylalkyle,
ou
un groupe alkyle interrompu par un ou plusieurs hétéroatomes tels que des atomes d'oxygène ou de soufre,
ou
un groupe alkyle substitué par un ou plusieurs substituants choisis dans le groupe constitué par les substituants hydroxy, aryle, cycloalkyle, alcoxy, thioalcoxy, amino, *N-*monoalkylamino, *N,N*-dialkylamino, *N-*monoarylamino, *N,N*-diarylamino, *N*-alkyl-*N-*arylamino, *N*-monocycloalkylamino, *N,N-*dicycloalkylamino, *N-*monoalkylmonocycloalkylamino, *N,N-*monoarylmonocycloalkylamino, *N*-acylamino, *N-*alkylsulfonylamino, uréido, alkyluréido, phényluréido, halogéno, cyano, COOM, nitro, acyle, thioacyle, alkylsulfonyle, aryloyle, trifluorométhyle, hétéroaryle,
hétérocycloalkyle, alcoxycarbonyle, alcoxythiocarbonyle, acyloxy, aryloyloxy, carbamoyle, *N*-monocycloalkylcarbamoyle, *N-*monoalkylcarbamoyle, *N,N-*dicycloalkylcarbamoyle, *N,N*-dialkylcarbamoyle, *N*-monoarylcarbamoyle, *N,N*-diarylcarbamoyle, *N-*monocycloalkyl-*N*-monoarylcarbamoyle, *N-*monoalkyl-*N*-monoarylcarbamoyle, sulfamoyle, *N-*monocycloalkylsulfamoyle, *N-*monoalkylsulfamoyle, *N,N-*dicycloalkylsulfamoyle, *N,N*-dialkylsulfamoyle, *N*-monoarylsulfamoyle, *N,N*-diarylsulfamoyle, *N-*monocycloalkyl-*N*-monoarylsulfamoyle, *N-*monoalkyl-*N*-monoarylsulfamoyle ou SO₃M,
R²¹ est un groupe hydroxyle ou amino, et, dans la formule générale K5 le point d'attache et R¹⁶ peuvent être situés en position ortho ou para par rapport au résidu amino portant les substituants R¹⁷ et R¹⁸, ce qui signifie que lorsque le point d'attache est situé en position ortho par rapport au résidu amino portant les substituants R¹⁷ et R¹⁸, R¹⁶ est situé en position para par rapport à celui-ci, et vice versa,
A est le constituant central à base de phénylène ou de naphtylène et répond à la formule générale (A1) ou (A2), 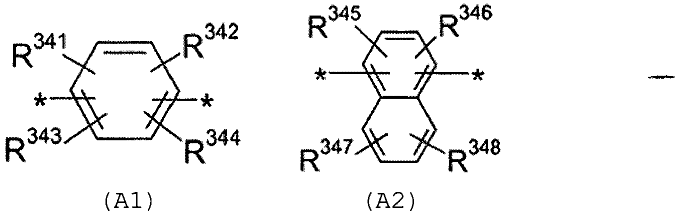 dans lequel
R³⁴¹ à R³⁴⁸ sont, chacun indépendamment de l'autre, l'atome d'hydrogène, un groupe alkyle, alkyle substitué, alkyle interrompu par un ou deux hétéroatomes, alcoxy, alcoxy substitué, halogéno, trifluorométhyle ; cycloalkyle ; hétérocycloalkyle ; cyano ; nitro ; acyloxy ; alkylcarbonyle, acylamino ; aryloylamino, cinnamoylamino, alkylsulfonylamino ; alkylthio ; alkylsulfonyle, alcoxycarbonyle, carbamoyle, sulfamoyle, uréido, alkyluréido, SO₃M, COOM ; ou un groupe représenté par les formules (2a) à (2c), 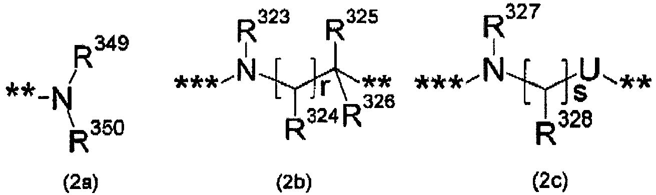
R³⁴⁹ et R³⁵⁰ étant chacun indépendamment de l'autre, l'atome d'hydrogène ou un groupe alkyle, alkyle substitué par SO₃M, alkyle interrompu par un ou deux hétéroatomes ou T, T ayant la même signification que ci-dessus ;
U étant -O-, -S- ou -N(R³²⁹)- ;
R³²³, R³²⁷ et R³²⁹ étant, chacun indépendamment des autres, l'atome d'hydrogène ou un groupe alkyle, alkyle substitué par SO₃M, alkyle interrompu par un ou deux hétéroatomes ;
R³²⁴, R³²⁵, R³²⁶ et R³²⁸ étant, chacun indépendamment des autres l'atome d'hydrogène ou un groupe alkyle ou alkyle interrompu par un ou deux hétéroatomes ;
r étant un nombre entier de 0 à 6 ;
s étant un nombre entier de 1 à 6 ;
** faisant référence au point d'attache avec A1 et A2 ;
*** faisant référence au point d'attache avec T
B est le constituant diazoïque et répond à l'une des formules générales (B1) ou (B2), 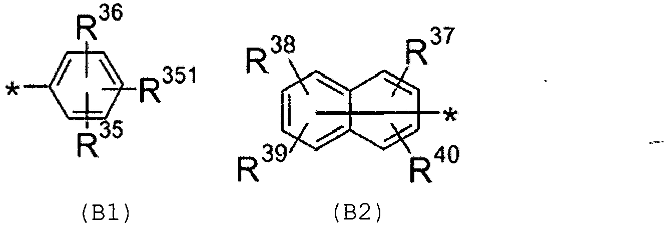 dans lequel
R³⁵ à R⁴⁰ et R³⁵¹ sont, chacun indépendamment des autres, l'atome d'hydrogène ou un groupe alkyle, alcoxy, halogéno, cyano, -SO₃M, trifluorométhyle, nitro, ester, NHC(O)R⁴¹, CONH₂, S(O)₂R⁴², -SO₂X ou l'une des formules générales (E1) à (E3),
R⁴¹ et R⁴² étant, chacun indépendamment de l'autre, l'atome d'hydrogène ou un groupe alkyle ou alkyle substitué par hydroxy ou halogéno, et
(E1) à (E3) étant 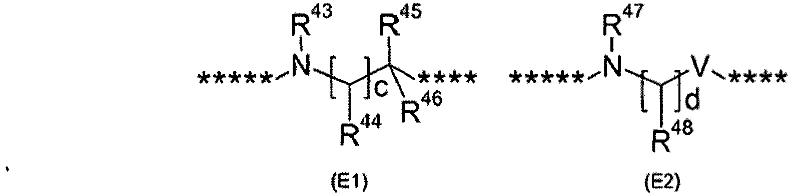 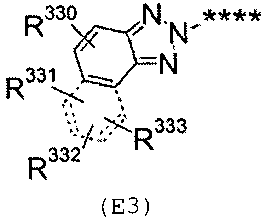 dans lesquels
V est -O-, -S- ou -N(R³⁵²) ;
R⁴³, R⁴⁷ et R³⁵² sont, chacun indépendamment des autres, l'atome d'hydrogène ou un groupe alkyle, alkyle substitué par SO₃M, alkyle interrompu par un ou deux hétéroatomes ;
R⁴⁴, R⁴⁵, R⁴⁶ et R⁴⁸ sont, chacun indépendamment des autres, l'atome d'hydrogène ou un groupe alkyle ou alkyle interrompu par un ou deux hétéroatomes ;
R³³⁰, R³³¹, R³³² et R³³³ sont, chacun indépendamment des autres, l'atome d'hydrogène, un groupe alkyle, alcoxy, halogéno, cyano, -SO₃M, trifluorométhyle, nitro, ester, NHC(O)R³³⁴, CONH₂, S(O)₂R³³⁵ ou un groupe de formule (3a) ; 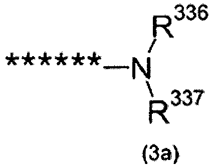
R³³⁶ et R³³⁷ étant, chacun indépendamment de l'autre, l'atome d'hydrogène ou un groupe alkyle, alcényle, cycloalkyle, trifluorométhyle, aryle, hétéroaryle, hétérocycloalkyle, carbamoyle, *N-*monocycloalkylcarbamoyle, *N-*monoalkylcarbamoyle, *N,N-*dicycloalkylcarbamoyle, *N,N-*dialkylcarbamoyle, *N*-monoarylcarbamoyle, *N,N-*diarylcarbamoyle, *N*-monocycloalkyl-N-monoarylcarbamoyle, *N*-monoalkyl-*N-*monoarylcarbamoyle, sulfamoyle, *N-*monocycloalkylsulfamoyle, *N-*monoalkylsulfamoyle, *N,N-*dicycloalkylsulfamoyle, *N,N-*dialkylsulfamoyle, *N*-monoarylsulfamoyle, *N,N-*diarylsulfamoyle, *N*-monocycloalkyl-*N-*monoarylsulfamoyle, *N*-monoalkyl-*N-*monoarylsulfamoyle, amino, *N*-acylamino, *N-*thioacylamino, uréido, alkyluréido, phényluréido, *N*-monoalkylamino, *N,N-*dialkylamino, *N*-arylamino, *N,N*-diarylamino, *N*-alkyl-*N*-arylamino, *N*-monocycloalkylamino, *N,N*-dicycloalkylamino, *N*-alkyl-*N-*cycloalkylamino, *N*-aryl-*N*-cycloalkylamino, *N*-hétéroarylamino, *N*-hétérocycloalkylamino ou hydroxyakylsulfonylalkyle,
ou
un groupe alkyle interrompu par un ou plusieurs hétéroatomes tels que des atomes d'oxygène ou de soufre,
ou
un groupe alkyle substitué par un ou plusieurs substituants choisis dans le groupe constitué par les substituants hydroxy, aryle, cycloalkyle, alcoxy, thioalcoxy, amino, *N*-monoalkylamino, *N,N-*dialkylamino, *N*-monoarylamino, *N,N-*diarylamino, *N*-alkyl-*N*-arylamino, *N-*monocycloalkylamino, *N,N*-dicycloalkylamino, *N*-monoalkylmonocycloalkylamino, *N,N-*monoarylmonocycloalkylamino, *N*-acylamino, *N*-alkylsulfonylamino, uréido, alkyluréido, phényluréido, halogéno, cyano, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, *N*-monocycloalkylcarbamoyle, *N-*monoalkylcarbamoyle, *N,N-*dicycloalkylcarbamoyle, *N,N-*dialkylcarbamoyle, *N*-monoarylcarbamoyle, *N,N*-diarylcarbamoyle, *N*-monocycloalkyl-N-monoarylcarbamoyle, *N*-monoalkyl-*N-*monoarylcarbamoyle, sulfamoyle, *N-*monocycloalkylsulfamoyle, *N-*monoalkylsulfamoyle, *N,N-*dicycloalkylsulfamoyle, *N,N-*dialkylsulfamoyle, *N*-monoarylsulfamoyle, *N,N*-diarylsulfamoyle, *N*-monocycloalkyl-*N-*monoarylsulfamoyle, *N*-monoalkyl-*N-*monoarylsulfamoyle ou SO₃M ; contenant un résidu ayant une valence libre pour se lier au résidu d'ancrage réactif T ;
R⁴¹, R⁴², R³³⁴ et R³³⁵ étant, chacun indépendamment des autres, l'atome d'hydrogène ou un groupe alkyle ou alkyle substitué par hydroxy ou halogéno ;
c est un nombre entier de 0 à 6 d est un nombre entier de 1 à 6
**** fait référence au point d'attache avec B1 et B2
***** fait référence au point d'attache avec T
****** fait référence au point d'attache avec E3
T et X étant les mêmes que ceux définis ci-dessus ;
à la condition générale que les colorants de formule générale (I) contiennent au moins un groupe d'ancrage réactif.

2. Composé chimique selon la revendication 1, répondant à l'une des formules (Iy) à (Iab) et à des mélanges de celles-ci : 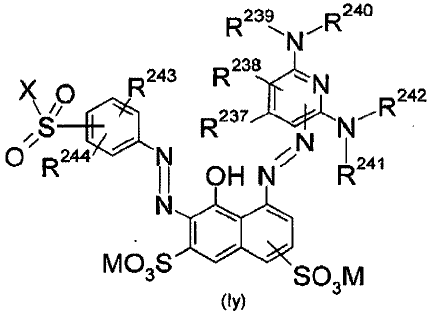 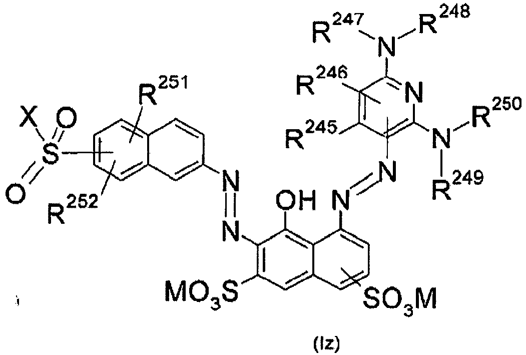 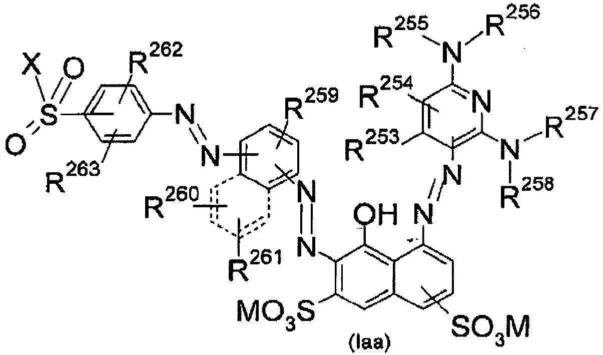 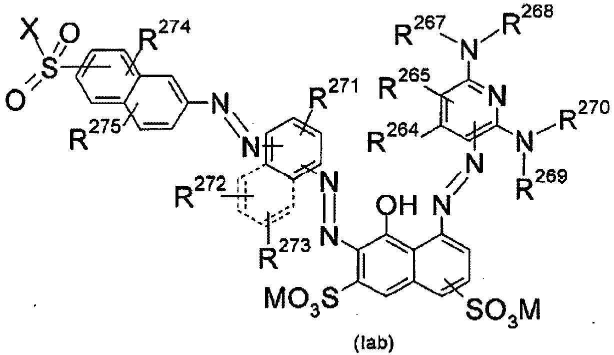 dans lequel
R²³⁷, R²⁴⁵, R²⁵³ et R²⁶⁴ sont chacun indépendamment des autres l'atome d'hydrogène ou un groupe alkyle, cycloalkyle, trifluorométhyle, alcoxy, cyano, carbamoyle, alcoxycarbonyle, COOM, amino, hydroxyle, monocycloalkylamino, monoalkylamino, dicycloalkylamino, dialkylamino, monoarylamino, diarylamino, monocycloalkylmonoarylamino, monoalkylmonoarylamino, alkylthio, arylthio,
ou
un groupe alkyle substitué par un ou plusieurs substituants choisis dans le groupe constitué par les substituants hydroxy, cycloalkyle, hétéroaryle, hétérocycloalkyle, aryle, aryloxy, alcoxy, alkylthio, arylthio, halogéno, cyano, COOM, alcoxycarbonyle, acyloxy, carbamoyle, nitro, amino, acylamino, arylcarbonylamino, alkylsulfonylamino, arylsulfonylamino, uréido, alkyluréido ou phényluréido,
R²³⁸, R²⁴⁶, R²⁵⁴ et R²⁶⁵ sont chacun indépendamment des autres un groupe cyano, carbamoyle, alcoxycarbonyle, trifluorométhyle, carbonyltrifluorométhyle, halogéno, méthylsulfonyle ou -SO₃M,
R²³⁹ à R²⁴², R²⁴⁷ à R²⁵⁰, R²⁵⁵ à R²⁵⁸ et R²⁶⁷ à R²⁷⁰ sont, chacun indépendamment des autres, l'atome d'hydrogène ou un groupe alkyle, alcényle, cycloalkyle, trifluorométhyle, aryle, hétéroaryle, hétérocycloalkyle, carbamoyle, *N-*monocycloalkylcarbamoyle, *N*-monoalkylcarbamoyle, *N,N*-dicycloalkylcarbamoyle, *N,N*-dialkylcarbamoyle, *N*-monoarylcarbamoyle, *N,N*-diarylcarbamoyle, *N-*monocycloalkyl-*N*-monoarylcarbamoyle, *N-*monoalkyl-*N-*monoarylcarbamoyle, sulfamoyle, *N-*monocycloalkylsulfamoyle, *N*-monoalkylsulfamoyle, *N,N-*dicycloalkylsulfamoyle, *N,N*-dialkylsulfamoyle, *N*-monoarylsulfamoyle, *N,N*-diarylsulfamoyle, *N-*monocycloalkyl-*N*-monoarylsulfamoyle, *N*-monoalkyl-*N-*monoarylsulfamoyle, amino, *N*-acylamino, *N-*thioacylamino, uréido, alkyluréido, phényluréido, *N*-monoalkylamino, *N,N*-dialkylamino, *N*-arylamino, *N,N*-diarylamino, *N*-alkyl-*N*-arylamino, *N-*monocycloalkylamino, *N,N-*dicycloalkylamino, *N-*alkyl-*N*-cycloalkylamino, *N*-aryl-*N*-cycloalkylamino, *N*-hétéroarylamino, *N*-hétérocycloalkylamino ou hydroxyakylsulfonylalkyle
ou
un groupe alkyle interrompu par un ou plusieurs hétéroatomes tels que des atomes d'oxygène ou de soufre
ou
un groupe alkyle substitué par un ou plusieurs substituants choisis dans le groupe constitué par les substituants hydroxy, aryle, cycloalkyle, alcoxy, thioalcoxy, amino, *N*-monoalkylamino, *N,N-*dialkylamino, *N*-monoarylamino, *N,N-*diarylamino, *N-*alkyl-*N*-arylamino, *N*-monocycloalkylamino, *N,N-*dicycloalkylamino, *N*-monoalkylmonocycloalkylamino, *N,N*-monoarylmonocycloalkylamino, *N*-acylamino, *N-*alkylsulfonylamino, uréido, alkyluréido, phényluréido, halogéno, cyano, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, *N*-monocycloalkylcarbamoyle, *N*-monoalkylcarbamoyle, *N,N*-dicycloalkylcarbamoyle, *N,N-*dialkylcarbamoyle, *N*-monoarylcarbamoyle, *N,N-*diarylcarbamoyle, *N*-monocycloalkyl-*N-*monoarylcarbamoyle, *N*-monoalkyl-*N-*monoarylcarbamoyle, sulfamoyle, *N-*monocycloalkylsulfamoyle, *N*-monoalkylsulfamoyle, *N,N*-dicycloalkylsulfamoyle, *N,N*-dialkylsulfamoyle, *N*-monoarylsulfamoyle, *N,N*-diarylsulfamoyle, *N-*monocycloalkyl-*N*-monoarylsulfamoyle, *N*-monoalkyl-*N-*monoarylsulfamoyle ou SO₃M, ou un groupe alkyle contient un résidu ayant une valence libre pour se lier au résidu d'ancrage réactif T,
R²⁴³, R²⁴⁴, R²⁵¹, R²⁵², R²⁶², R²⁶³, R²⁷⁴ et R²⁷⁵ sont, chacun indépendamment des autres, l'atome d'hydrogène ou un groupe alkyle, alcoxy, halogéno, cyano, -SO₃M, trifluorométhyle, nitro, ester, NHC(O)R²⁷⁶, CONH₂, S(O)₂R²⁷⁷ ou -SO₂X, R²⁷⁶ et R²⁷⁷ étant, chacun indépendamment de l'autre, l'atome d'hydrogène ou un groupe alkyle ou alkyle substitué par hydroxy ou halogéno,
R²⁵⁹ à R²⁶¹ et R²⁷¹ à R²⁷³ sont, chacun indépendamment des autres, l'atome d'hydrogène, un groupe alkyle, alkyle substitué, alkyle interrompu par un ou deux hétéroatomes, alcoxy, alcoxy substitué, halogéno, trifluorométhyle, cycloalkyle, hétérocycloalkyle, cyano, nitro, acyloxy, alkylcarbonyle, acylamino, aryloylamino, cinnamoylamino, alkylsulfonylamino, alkylthio, alkylsulfonyle, alcoxycarbonyle, carbamoyle, sulfamoyle, uréido, alkyluréido, SO₃M, COOM ou un groupe représenté par les formule (2a) à (2c) : 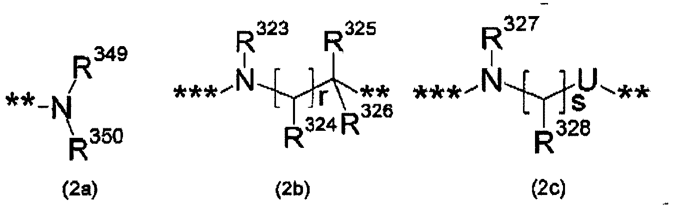
R³⁴⁹ et R³⁵⁰ étant chacun indépendamment de l'autre, l'atome d'hydrogène ou un groupe alkyle, alkyle substitué par SO₃M, alkyle interrompu par un ou deux hétéroatomes ou T, T ayant la même signification que ci-dessus,
U étant -O-, -S- ou -N(R³²⁹)-,
R³²³, R³²⁷ et R³²⁹ étant, chacun indépendamment des autres, l'atome d'hydrogène ou un groupe alkyle, alkyle substitué par SO₃M, alkyle interrompu par un ou deux hétéroatomes
R³²⁴, R³²⁵, R³²⁶ et R³²⁸ étant chacun indépendamment des autres l'atome d'hydrogène ou un groupe alkyle ou alkyle interrompu par un ou deux hétéroatomes
r étant un nombre entier de 0 à 6,
s étant un nombre entier de 1 à 6,
** faisant référence au point d'attache avec A1 et A2,
*** faisant référence au point d'attache avec T et M, T et X étant tels que définis dans la revendication 1.

3. Composé chimique selon la revendication 1 répondant à l'une des formules (Iac) à (Iaf) et à des mélanges de celles-ci : 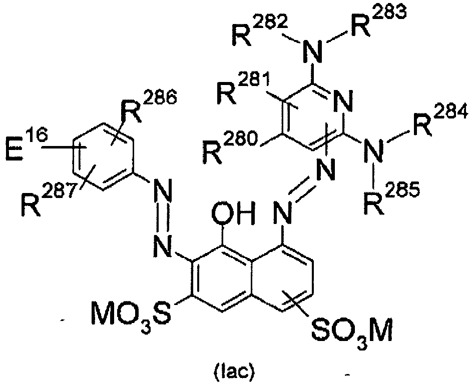 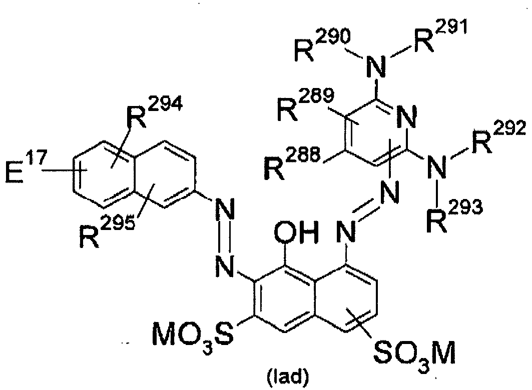 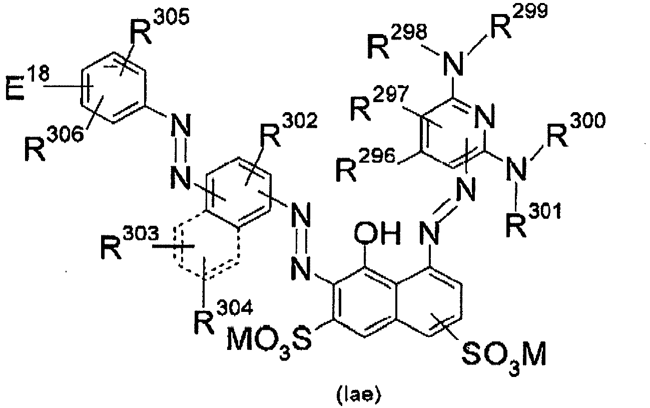 2 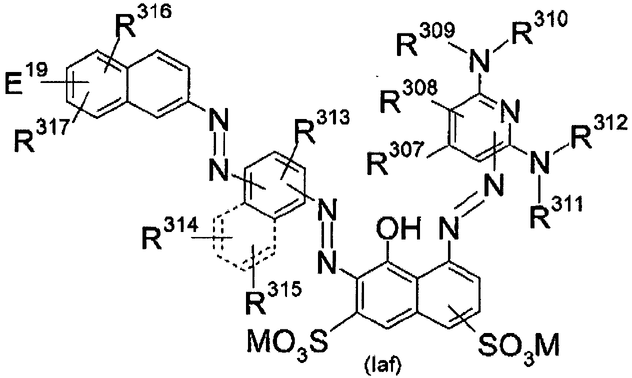 dans lequel
R²⁸⁰, R²⁸⁸, R²⁹⁶ et R³⁰⁷ sont chacun indépendamment des autres l'atome d'hydrogène ou un groupe alkyle, cycloalkyle, trifluorométhyle, alcoxy, cyano, carbamoyle, alcoxycarbonyle, COOM, amino, hydroxyle, monocycloalkylamino, monoalkylamino, dicycloalkylamino, dialkylamino, monoarylamino, diarylamino, monocycloalkylmonoarylamino, monoalkylmonoarylamino, alkylthio, arylthio,
ou
un groupe alkyle substitué par un ou plusieurs substituants choisis dans le groupe constitué par les substituants hydroxy, cycloalkyle, hétéroaryle, hétérocycloalkyle, aryle, aryloxy, alcoxy, alkylthio, arylthio, halogéno, cyano, COOM, alcoxycarbonyle, acyloxy, carbamoyle, nitro, amino, acylamino, arylcarbonylamino, alkylsulfonylamino, arylsulfonylamino, uréido, alkyluréido ou phényluréido,
R²⁸¹, R²⁸⁹, R²⁹⁷ et R³⁰⁸ sont chacun un groupe cyano, carbamoyle, alcoxycarbonyle, trifluorométhyle, carbonyltrifluorométhyle, halogéno, méthylsulfonyle ou -SO₃M,
R²⁸² à R²⁸⁵, R²⁹⁰ à R²⁹³, R²⁹⁸ à R³⁰¹ et R³⁰⁹ à R³¹² sont, chacun indépendamment des autres, l'atome d'hydrogène ou un groupe alkyle, alcényle, cycloalkyle, trifluorométhyle, aryle, hétéroaryle, hétérocycloalkyle, carbamoyle, *N-*monocycloalkylcarbamoyle, *N*-monoalkylcarbamoyle, *N,N*-dicycloalkylcarbamoyle, *N,N*-dialkylcarbamoyle, *N*-monoarylcarbamoyle, *N,N*-diarylcarbamoyle, *N-*monocycloalkyl-*N*-monoarylcarbamoyle, *N*-monoalkyl-*N-*monoarylcarbamoyle, sulfamoyle, *N-*monocycloalkylsulfamoyle, *N*-monoalkylsulfamoyle, *N,N*-dicycloalkylsulfamoyle, *N,N*-dialkylsulfamoyle, *N*-monoarylsulfamoyle, *N,N*-diarylsulfamoyle, *N-*monocycloalkyl-*N*-monoarylsulfamoyle, *N*-monoalkyl-*N-*monoarylsulfamoyle, amino, *N*-acylamino, *N-*thioacylamino, uréido, alkyluréido, phényluréido, *N*-monoalkylamino, *N,N*-dialkylamino, *N*-arylamino, *N,N-*diarylamino, *N*-alkyl-*N*-arylamino, *N-*monocycloalkylamino, *N,N*-dicycloalkylamino, *N-*alkyl-*N*-cycloalkylamino, *N*-aryl-*N*-cycloalkylamino, *N*-hétéroarylamino, *N*-hétérocycloalkylamino ou hydroxyalkylsulfonylalkyle
ou
un groupe alkyle interrompu par un ou plusieurs hétéroatomes tels que des atomes d'oxygène ou de soufre
ou
un groupe alkyle substitué par un ou plusieurs substituants choisis dans le groupe constitué par les substituants hydroxy, aryle, cycloalkyle, alcoxy, thioalcoxy, amino, *N*-monoalkylamino, *N,N-*dialkylamino, *N*-monoarylamino, *N,N*-diarylamino, *N-*alkyl-*N*-arylamino, *N*-monocycloalkylamino, *N,N-*dicycloalkylamino, *N*-monoalkylmonocycloalkylamino, *N,N*-monoarylmonocycloalkylamino, *N*-acylamino, *N-*alkylsulfonylamino, uréido, alkyluréido, phényluréido, halogéno, cyano, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, *N*-monocycloalkylcarbamoyle, *N*-monoalkylcarbamoyle, *N,N*-dicycloalkylcarbamoyle, *N,N*-dialkylcarbamoyle, *N*-monoarylcarbamoyle, *N,N-*diarylcarbamoyle, *N*-monocycloalkyl-*N-*monoarylcarbamoyle, *N*-monoalkyl-*N-*monoarylcarbamoyle, sulfamoyle, *N-*monocycloalkylsulfamoyle, *N*-monoalkylsulfamoyle, *N,N*-dicycloalkylsulfamoyle, *N,N*-dialkylsulfamoyle, *N*-monoarylsulfamoyle, *N,N*-diarylsulfamoyle, *N-*monocycloalkyl-*N*-monoarylsulfamoyle, *N*-monoalkyl-*N-*monoarylsulfamoyle ou SO₃M, ou un groupe alkyle contient un résidu ayant une valence libre pour se lier au résidu d'ancrage réactif T,
R²⁸⁶, R²⁸⁷, R²⁹⁴, R²⁹⁵, R³⁰⁵, R³⁰⁶, R³¹⁶ et R³¹⁷ sont, chacun indépendamment des autres, l'atome d'hydrogène ou un groupe alkyle, alcoxy, halogéno, cyano, -SO₃M, trifluorométhyle, nitro, ester, NHC(O)R³¹⁸, CONH₂, S(O)₂R³¹⁹ ou -SO₂X, R³¹⁸ et R³¹⁹ étant, chacun indépendamment de l'autre, l'atome d'hydrogène ou un groupe alkyle ou alkyle substitué par hydroxy ou halogéno,
R³⁰² à R³⁰⁴ et R³¹³ à R³¹⁵ sont, chacun indépendamment des autres, l'atome d'hydrogène, un groupe alkyle, alkyle substitué, alkyle interrompu par un ou deux hétéroatomes, alcoxy, alcoxy substitué, halogéno, trifluorométhyle, cycloalkyle, hétérocycloalkyle, cyano, nitro, acyloxy, alkylcarbonyle, acylamino, aryloylamino, cinnamoylamino, alkylsulfonylamino, alkylthio, alkylsulfonyle, alcoxycarbonyle, carbamoyle, sulfamoyle, uréido, alkyluréido, SO₃M, COOM ou un groupe représenté par les formule (2a) à (2c) : 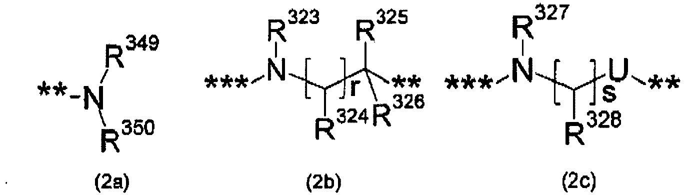
R³⁴⁹ et R³⁵⁰ étant chacun indépendamment de l'autre, l'atome d'hydrogène ou un groupe alkyle, alkyle substitué par SO₃M, alkyle interrompu par un ou deux hétéroatomes ou T, T ayant la même signification que ci-dessus,
U étant -O-, -S- ou -N(R³²⁹)-,
R³²³, R³²⁷ et R³²⁹ étant, chacun indépendamment des autres, l'atome d'hydrogène ou un groupe alkyle, alkyle substitué par SO₃M, alkyle interrompu par un ou deux hétéroatomes
R³²⁴, R³²⁵, R³²⁶ et R³²⁸ étant chacun indépendamment des autres l'atome d'hydrogène ou un groupe alkyle ou alkyle interrompu par un ou deux hétéroatomes
r étant un nombre entier de 0 à 6,
s étant un nombre entier de 1 à 6,
** faisant référence au point d'attache avec A1 et A2,
*** faisant référence au point d'attache avec T et E¹⁶ à E¹⁹ sont, chacun indépendamment des autres, un groupe représenté par les formules générales (E1) à (E3), M, T et X étant tels que définis dans la revendication 1.

4. Composition chimique constituée de deux ou plus de deux composés chimiques selon l'une quelconque des revendications 1 à 3.

5. Composition chimique comprenant un ou plusieurs composés chimiques selon l'une quelconque des revendications 1 à 3.

6. Solution aqueuse pour la teinture comprenant un ou plusieurs composés chimiques selon l'une quelconque des revendications 1 à 3.

7. Procédé pour la production de composés chimiques répondant à la formule (I) selon la revendication 1 comprenant les étapes :
a) diazotation de composés de formule (IV),
b) réaction des sels de diazonium obtenus dans l'étape a) avec un composé de formule K pour obtenir un intermédiaire de formule (V) 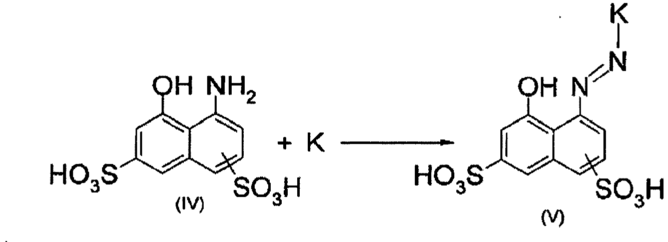
c) diazotation du composant (B-NH₂),
cx1) éventuellement couplage du produit diazoté de l'étape c) sur le composé (A-NH₂) et
cx2) diazotation du produit de couplage de l'étape cx1)
d) couplage du produit diazoté de l'étape c) sur l'intermédiaire V pour obtenir le produit diazoïque de formule générale (VI) dans le cas de l'étape c) 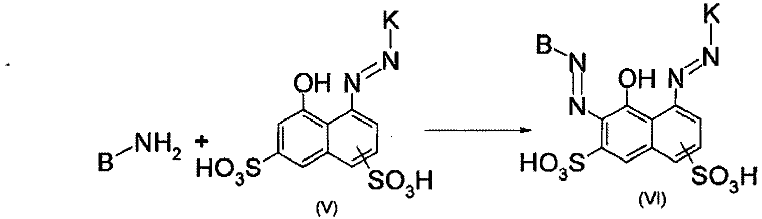 ou couplage du produit de couplage diazoté de cx2) sur l'intermédiaire V pour obtenir le produit triazoïque de formule générale (VIII),

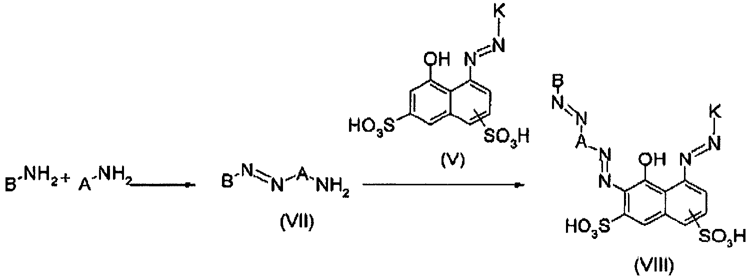

8. Utilisation d'un composé chimique selon l'une quelconque des revendications 1 à 3, d'une composition chimique selon la revendication 4 ou 5 ou d'une solution aqueuse selon la revendication 6 pour la teinture de fibres, ainsi que de mélanges de telles fibres choisies dans le groupe constitué par : les fibres végétales, les fibres de graines, le coton, le coton biologique, le kapok, la fibre de coco provenant d'enveloppe de noix de coco, les fibres libériennes, le lin, le chanvre, le jute, le kenaf, la ramie, le rotin, les fibres de feuilles, le sisal, le henequen, la banane, les fibres extraites de tiges, le bambou, les fibres provenant d'animaux, la laine, la laine biologique, la soie, la laine de Cachemire, la fibre d'alpaga, le mohair, la fibre d'Angora ainsi que les matières de type fourrure et cuir, les fibres manufacturées, régénérées et recyclées, les fibres cellulosiques, les fibres à papier, les fibres cellulosiques régénérées, les fibres de rayonne viscose, les fibres d'acétate et de triacétate et les fibres Lyocell et les matières fibreuses synthétiques, les matières en nylon, les fibres de nylon-6, de nylon-6.6 et d'aramide.

9. Fibre et mélanges contenant une telle fibre choisie dans le groupe constitué par : les fibres végétales, les fibres de graines, le coton, le coton biologique, le kapok, la fibre de coco provenant d'enveloppe de noix de coco, les fibres libériennes, le lin, le chanvre, le jute, le kenaf, la ramie, le rotin, les fibres de feuilles, le sisal, le henequen, la banane, les fibres extraites de tiges, le bambou, les fibres provenant d'animaux, la laine, la laine biologique, la soie, la laine de Cachemire, la fibre d'alpaga, le mohair, la fibre d'Angora ainsi que les matières de type fourrure et cuir, les fibres manufacturées, régénérées et recyclées, les fibres cellulosiques, les fibres à papier, les fibres cellulosiques régénérées, les fibres de rayonne viscose, les fibres d'acétate et de triacétate et les fibres Lyocell et les matières fibreuses synthétiques, les matières en nylon, les fibres de nylon-6, de nylon-6.6 et d'aramide comprenant un ou plusieurs composés chimiques selon l'une quelconque des revendications 1 à 3 sous forme liée soit chimiquement soit physiquement ou les deux.
